# EUROPEAN PATENT APPLICATION

(11) **EP 1 318 469 A1**
(43) Date of publication of application: **11.06.2003**
(21) Application number: 01958378.0
(22) Date of filing: 31.07.2001
(51) Int. Cl.: G06F 17/60, G07F 17/00

(54) **RENTAL SYSTEM**

(30) Priority: 01.08.2000 JP 2000233668
(71) Applicant: Bigrental Co., Ltd., Fukushima 963-8862 (JP); KOMATSU LTD., Minato-ku, Tokyo 107-8414 (JP)
(72) Inventor: SHIKE, Chikashi, c/o Bigrental Co., Ltd., Koriyama-shi, Fukushima 963-8862 (JP); ABE, Noriaki, c/o Komatsu Ltd., Tokyo 107-8414 (JP); KIKUCHI, Michitaka, c/o Komatsu Ltd., Tokyo 107-8414 (JP)
(74) Representative: Hoffmann, Eckart, Dipl.-Ing.
(86) International application number: JP0106572
(87) International publication number: WO02011007

(57) **Abstract**

A rental system using a commuter for integrally managing/operating all the rental properties that a rental company holds at high efficiency. The current positions and operating states of rental properties, such as construction vehicles (101, 101,...) are grasped in real time and reported to the rental company system (100) through a network (400). A basic server (108) of the rental company system (100) integrally manages the current positions and operating states, the rental state, and the maintenance state of the construction vehicles (101, 101,...) and provides them to the servers (111) of branch offices. At the branch offices, by using a terminal computer (112), portable telephones (104) that sales persons carries, and PDAs (104), the latest situation of the construction vehicles (101, 101,...)is referred to so that rental orders, transfer, and maintenance of the construction vehicles (101, 101,...) are conducted.

## Description

### TECHICAL FIELD

The present invention relates to a computer processing system and processing method thereof for supporting rental business of machines or goods or the like.

### BACKGROUND ART

The description that follows is based on the example of construction vehicle rentals but the description of the present specification is equally applicable to rentals of machines and goods and the like other than construction vehicles.

A construction vehicle company normally employs a business formula according to which a plurality of branch stores are situated in different locations and a plurality of construction vehicles are owned, maintained and operated individually by the branch stores. The headquarters leave the management, maintenance and operation of the vehicles to individual branch stores and principally manage the business results, accounting information and so forth of the branch stores. A computer system serving to support the business processing of the branch stores and the headquarters is also probably installed. However, a conventional computer system of this kind is naturally probably only endowed with functions suited to the business formula described above, that is, with functions for store by store vehicle management or with management functions for business results and accounting information, and the like, at the headquarters.

Further, in the event of an inquiry from a customer, the salespeople call the branch store office from the destination sites, and so forth, to submit an inquiry to the office clerk regarding the current vehicle operation status, or request a vehicle rental reservation, and the like.

Further, after a vehicle has been rented to a customer, until the vehicle returns from the customer, it is not possible, so long as there is no report from the customer, for the rental company to know where or how the vehicle is being used or about the vehicle's present state such as whether or not the vehicle is in good condition.

One problem faced by a conventional rental company is that any operation involving the renting and transportation of a vehicle, and so forth, is not possible with the highest efficiency for the business as a whole. This problem results from the business formula according to which business is conducted individually by each store. For example, a case can arise where, despite there being a shortage of vehicles at branch store A as a result of multiple inquiries being made for a certain machine, at store B there are no inquiries for the same machine and vehicles therefore lie idle in the warehouse. Furthermore, when branch store A is going to take receipt of a vehicle from a first customer and then rent this vehicle to the next customer, even in cases where the transportation distance, time interval and costs, and so forth, are smaller when this vehicle is returned to the warehouse at branch store B and then sent to the next customer's site than those involved in returning the vehicle from the first customer's site to the warehouse at branch store A, in reality an inefficient operation is performed that involves returning the vehicle to the warehouse at branch store A from which this vehicle was rented.

Further, another problem is that it is difficult to quickly respond to customer needs. One cause of this lies with the business formula in which business is conducted individually by each store as described above, which means that optimum vehicle allocation involving the whole company cannot be extended to the customer. Another cause is that so long as the salesperson does not call the branch store office, it is not possible to grasp the vehicle operation status or make a rental reservation, and that no means exist that would allow the salesperson to immediately perform such information processing from any location at any time.

Yet another problem is that optimized maintenance is difficult. In other words, as far as a vehicle which is being rented to a customer is concerned, because it is not possible for the rental company to independently identify the site where the vehicle is being used or the state of the vehicle, the rental company is unable to voluntarily send someone from the rental company to the site at the appropriate time to carry out maintenance on the vehicle.

Yet another problem is that quality control such that the quality of any given vehicle is maintained at a uniform level is problematic. This fact is also linked to the problem that when a vehicle which is used by the company for renting is subsequently put on the secondhand vehicles market, it is difficult to provide the purchaser of a secondhand vehicle with an assurance as to the quality of the vehicle. This is due to the fact that, conventionally, there has been no management to reliably ascertain the operation time, maintenance history, and so forth of each vehicle and no control of the operation of each vehicle according to the results of such management.

Accordingly, it is an object of the present invention to provide a rental system using computers which permits a highly efficient rental operation by centrally managing all of the rental articles owned by the rental company.

Another object of the present invention is to provide a rental system using computers which permits a salesperson to respond rapidly to customer needs.

Yet another object of the present invention is to provide a rental system using computers which permits rental articles to be efficiently maintained.

Yet another object of the present invention is to provide a rental system using computers which facilitates quality control of rental articles and which makes it possible to provide a purchaser with an assurance as to the quality of secondhand articles when the rental articles are subsequently put on the secondhand market.

### DISCLOSURE OF THE INVENTION

The rental system according to a first aspect of the present invention comprises a basic server system for managing information on a plurality of rental articles; and a business task system capable of communicably connecting to the basic server system. Further, the basic server or business task system comprises managing means for managing dealings with the customers of the rental articles. In addition, the business task system comprises, for the rental articles:
(1) means for displaying information managed by the basic server system; and
(2) means for receiving rental orders from customers.

According to this rental system, the basic server system centrally manages a plurality of rental articles owned by a rental company; the business task system displays information on the rental articles centrally managed by the basic server system and is able to select and provide a customer with a rental article which is most suited to an order from the customer on the basis of the information thus displayed. As a result, an efficient turning over of rental articles is possible.

In a preferred embodiment, the rental article information is based on the product name of the rental article and stored in the basic server system. As a result, with the product name of the rental article as the search key, information on all the rental articles which have this product name can be retrieved and displayed.

In a preferred embodiment, the basic server system comprises means for processing a schedule for transferring a rental article between sites. Such means make it possible to process a transfer schedule for returning the rental article from a previous customer and renting this article to the next customer and therefore control is possible by judging factors such as when and to which customer a rental article is rented so that the transfer schedule is efficient and not wasteful.

In a preferred embodiment, the information on rental articles managed by the basic server system includes information indicating that the rental article is being rented or transported. For this reason, in the event of an inquiry from a customer with regard to a certain rental article, information indicating that the rental article is being rented or transported is displayed, whereby it can be judged rapidly whether it is possible to fulfil the inquiry.

In a preferred embodiment, the information on rental articles managed by the basic server system includes information indicating the rental period for the rental article. For this reason, in the event of an inquiry from a customer with regard to a certain rental article, the rental period is known even if this rental article is being rented or has been reserved for rent, meaning that it can be predicted when the rental article will be returned, and it can therefore be reliably judged whether or not it is possible to fulfil the inquiry.

In a preferred embodiment, the rental article information which is managed by the basic server system includes warehousing and delivery information on the rental article. Therefore, in the event of an inquiry from a customer with regard to a certain rental article, information indicating whether this rental article has been warehoused or delivered is displayed and it can therefore be rapidly judged whether or not it is possible to fulfil the inquiry.

In a preferred embodiment, the rental article information which is managed by the basic server system includes positional information on the rental article. Further, means for updating the positional information at any time or periodically are provided. Therefore, in the event of an inquiry from a customer with regard to a certain rental article, positional information on this rental article is displayed and it can therefore be rapidly judged whether or not it is possible to fulfil the inquiry. Also, when maintenance is required for a certain rental article, positional information on this rental article is displayed and the required measures which involve sending a serviceman, and so forth, can be taken.

In a preferred embodiment, the rental article information which is managed by the basic server system includes information showing the operation status of the rental article. Therefore, operation information on the rental articles is displayed, and it is thus possible to control the rental article operation such that operation is not excessive and not immoderately exhaustive. This facilitates quality assurance when the rental articles are subsequently put on the secondhand market.

In a preferred embodiment, the rental article information which is managed by the basic server system includes information relating to engine oil pressure, engine speed, working implement oil temperature, working implement oil pressure, radiator water temperature, or working implement load of a machine which is the rental article. By displaying this information, it can be judged whether or not the rental article needs to be maintained, repaired, and so forth.

In a preferred embodiment, the business task system comprises a portable information processing system (a cellular telephone, for example) that is capable of connecting wirelessly and communicably at any time with the basic server system. Because the salespeople carry a portable information processing system and display information on the rental articles on this system, the salespeople are able to rapidly meet customer needs without being limited to a time and location, and so forth.

In a preferred embodiment, the basic server system comprises means for updating the rental article information (order information from a customer and so forth, for example) at any time or periodically. The business task system is thus continually able to display the latest information on a rental article.

In a preferred embodiment, the business task system comprises means for receiving order inquiry information from a customer.

In a preferred embodiment, the rental article comprises a sensor system for detecting positional information and current operating state information. Further, the basic server system is capable of communicating with the sensor system of the rental article via a remote wireless communications network, and thus receives the latest positional information and operating state information on the rental article at any time or periodically from the sensor system of the rental article and updates the positional information and operating state information on the rental article as managed by the basic server system. As a result, the business task system and the maintenance system, and the like, are capable of grasping the current position and current operating state of the rental article substantially in real time, whereby it is possible to fulfil an inquiry from a customer and perform maintenance, and so forth rapidly, reliably and efficiently.

In a preferred embodiment, the rental article information which is managed by the basic server system includes data that indicates the type of rental article, the availability thereof, and the presence or absence of automatic allocation regulations. Also provided is an order processing system, which receives an order from a customer, retrieves rental articles that fulfil the customer's request from among a plurality of the rental articles on the basis of information in the basic server system, and allocates any of the retrieved rental articles the order from the customer.

In a preferred embodiment, the order processing system designates an optional rental article from among a plurality of the rental articles, and comprises an automatic allocation control system for updating the data indicating the presence or absence of the automatic allocation regulations which is in the basic server system, with respect to the designated rental article.

In a preferred embodiment, the automatic allocation control system performs control of the adoption of either a method that performs automatic selection of a rental article or a method in which an operator manually selects same, as the method for selecting a rental article which is allocated to the order from the customer from among the retrieved rental articles. Thus, by controlling, for every one of the rental articles, the determination of whether the rental article is automatically and unrestrictedly rented if an order arrives, or whether the automatic rental of this rental article is restricted such that rentals are permitted on the basis of a judgment by the operator, the total operation time of each rental article, as well as the specification amount and extent of consumption thereof can be regulated. As a result, when the rental articles are put on the secondhand market after a fixed period, the quality of these articles can be set at a uniform level and it is thus possible to provide a customer of a secondhand article with a quality assurance. As a result of quality assurance being possible, a purchase reservation can also be received, for each rental article, from a secondhand article customer at a time which lies long before the period for putting the rental articles on the secondhand market.

In a preferred embodiment, the basic server system further comprises means for storing image data for the rental articles. This image data is photographic data obtained by photographing the rental article when the rental article is rented to a customer or returned. Therefore, by storing the photographic data obtained by photographing each rental article when same is rented to a customer and returned from a customer, and so forth, it is possible to reliably make a judgment of whether or not damage to the rental article has been incurred in the course of the rental, and appropriate measures for such an accident can be easily taken. In addition, when the rental article is subsequently put on the secondhand goods market, a customer of a secondhand article can be provided with this photographic data as evidence of the quality assurance for the secondhand article, meaning that a high level of trust can be attained.

The rental system according to a second aspect of the present invention comprises: a basic server system for managing information on a plurality of rental articles; and a business task system capable of communicably connecting to the basic server system. The basic server system stores current positional information on the rental article, current operating state information, and maintenance information relating to a maintenance history or maintenance schedule. Further, a maintenance system is provided in a maintenance execution department. This maintenance system is capable of connecting communicably to the basic server system and comprises means for acquiring and displaying the positional information, the operation information and the maintenance information that are stored in the basic server system.

According to this rental system, the maintenance execution department is, with respect to any rental article, capable of referencing current positional information, current operating state information and maintenance information at any time regardless of whether or not this rental article is currently in stock or being rented to a customer. Therefore, the maintenance execution department can easily and suitably perform a judgment of the need for maintenance of each rental article, maintenance work scheduling, and in cases where a serviceman must be sent, a judgment of where someone should be sent, and so forth.

### BRIEF DESCRIPTION OF THE DRAWINGS

Fig. 1 is a block diagram according to an embodiment of the present invention;
Fig. 2 is a block diagram showing the contents of a database possessed by the basic server 108 of the rental company system 100;
Fig. 3 is a flowchart showing the overall flow of business task processing from the time of a stock inquiry for a construction vehicle up until a transfer request, in business task processing which is performed by the system;
Fig. 4 is a flowchart following on from the process flow of Fig. 3 and shows the overall flow of business task processing from the time of construction vehicle transportation scheduling until warehousing thereof;
Fig. 5 is a flowchart showing the overall flow of business task processing related to the maintenance of the construction vehicles;
Fig. 6 shows explanatory notes for the flowchart of Fig. 7 and subsequent flowcharts;
Fig. 7 is a flowchart showing the flow of the "reservation/transfer regulations" processing of step S1 in Fig. 3 (when performed for each vehicle).
Fig. 8 shows a menu screen used in the reservation/transfer regulations processing;
Fig. 9 shows a machine number search screen used in the reservation/transfer regulations processing for each vehicle;
Fig. 10 shows a machine number search screen (search result) used in the reservation/transfer regulations processing for each vehicle;
Fig. 11 shows a machine number screen used in the reservation/transfer regulations processing for each vehicle;
Fig. 12 shows a machine search screen used in the reservation/transfer regulations processing for each vehicle;
Fig. 13 shows a machine search screen (search results) used in the reservation/transfer regulations processing for each vehicle;
Fig. 14 shows a machine master screen used in the reservation/transfer regulations processing for each vehicle;
Fig. 15 is a flowchart showing the flow of "stock inquiry" processing of step S2 in Fig. 3;
Fig. 16 shows a menu screen for accessing stock inquiry processing;
Fig. 17 shows a machine status inquiry screen used in stock inquiry processing;
Fig. 18 is a flowchart showing the flow of processing for "inquiry creation (when automatic allocation regulations apply)" of step S3 in Fig. 3;
Fig. 19 shows an Order acceptance/inquiry screen used in the inquiry creation (when automatic allocation regulations apply) processing;
Fig. 20 shows an attachment box used in the inquiry creation (when automatic allocation regulations apply) processing;
Fig. 21 is a flowchart (the former half thereof) showing the flow of the "allocation processing (when automatic allocation regulations apply)" of step S4 in Fig. 3;
Fig. 22 is a flowchart (the latter half thereof) showing the flow of the "allocation processing (when automatic allocation regulations apply)" of step S4 in Fig. 3;
Fig. 23 shows a newly acquired information screen used in the allocation processing (when automatic allocation regulations apply);
Fig. 24 shows a menu screen for accessing allocation processing (when automatic allocation regulations apply);
Fig. 25 shows a machine allocation processing screen used in the allocation processing (when automatic allocation regulations apply);
Fig. 26 is a flowchart showing the flow of the "real-time search and provisional reservation by cellular telephone" processing of step S5 in Fig. 3;
Fig. 27 shows the types of cellular telephone content screen which are displayed by the cellular telephone of a salesperson, along with the transitions to these screens;
Fig. 28 shows the "Order and inquiry" screen used in the 'inquiry creation (when automatic allocation regulations do not apply) "reservation"' processing of step S6 in Fig. 3;
Fig. 29 is a flowchart showing the flow of the "point transfer request" processing of step S7 in Fig. 3;
Fig. 30 shows a "Rental transportation" screen used in point transfer request processing;
Fig. 31 shows a "Transportation list and stock point management" screen used in the point transfer request processing;
Fig. 32 is a flowchart showing the flow of "transportation scheduling (at the time of a point-to-point transfer)" processing of step S8 in Fig. 4;
Fig. 33 shows a "Transportation schedule" screen used in the transportation scheduling processing;
Fig. 34 shows a "Transportation allocation processing" screen used in the transportation scheduling processing;
Fig. 35 is a flowchart (the former half thereof) showing the flow of the "delivery (at the time of a point-to-point transfer)" processing of step S10 in Fig. 4;
Fig. 36 is a flowchart (the latter half thereof) showing the flow of the "delivery (at the time of a point-to-point transfer)" processing of step S10 in Fig. 4;
Fig. 37 shows a "Delivery input" screen used in delivery processing;
Fig. 38 shows a "Reserved vehicle" screen used in delivery processing;
Fig. 39 shows a "Delivery details" screen used in delivery processing;
Fig. 40 shows a "Delivery details" screen used in delivery processing;
Fig. 41 shows a "Delivery details" screen used in delivery processing;
Fig. 42 shows a "Delivery details" screen used in delivery processing;
Fig. 43 shows a "Delivery details" screen used in delivery processing;
Fig. 44 shows a "Delivery input" screen used in delivery processing;
Fig. 45 is a flowchart showing the flow of "inputting of image data and inspection information" processing at the time of delivery and warehousing, of steps S11 and S12 in Fig. 4 respectively;
Fig. 46 shows a PDA menu screen for accessing "inputting of image data and inspection information" processing;
Fig. 47 shows an "Acceptance inspection input" screen used in "inputting of image data and inspection information" processing;
Fig. 48 shows an "Acceptance inspection input" screen used in "inputting of image data and inspection information" processing;
Fig. 49 shows an "Inspection item input" screen used in "inputting of image data and inspection information" processing;
Fig. 50 shows a "Photograph" screen used in "inputting of image data and inspection information" processing;
Fig. 51 is a flowchart showing the flow of the "warehousing" processing of step S13 in Fig. 4; Figs. 52 to 57 show user interface screens which are used in this processing;
Fig. 52 shows a "Warehousing input" screen used in warehousing processing;
Fig. 53 shows a "Warehousing details" screen used in warehousing processing;
Fig. 54 shows a "Warehousing details" screen used in warehousing processing;
Fig. 55 shows a "Warehousing details" screen used in warehousing processing;
Fig. 56 shows a "Warehousing details" screen used in warehousing processing;
Fig. 57 shows a "Warehousing input" screen used in warehousing processing;
Fig. 58 is a flowchart showing the flow of the "specific independent inspection" processing of step S14 in Fig. 5;
Fig. 59 shows a "Specific independent inspection management" screen used in the specific independent inspection processing;
Fig. 60 shows a "Specific independent inspection management" screen used in the specific independent inspection processing;
Fig. 61 shows a "Specific independent inspection management" screen used in the specific independent inspection processing;
Fig. 62 shows a "Specific independent inspection management" screen used in the specific independent inspection processing;
Fig. 63 is a flowchart showing the flow of the "specific independent inspection logbook output" processing of step S15 in Fig. 5;
Fig. 64 shows a logbook image display screen used in the specific independent inspection logbook output processing;
Fig. 65 is a flowchart showing the flow of the "maintenance history inquiry" processing of step S16 in Fig. 5;
Fig. 66 shows a "Maintenance history" screen used in the maintenance history inquiry processing;
Fig. 67 shows a "Maintenance history" screen used in the maintenance history inquiry processing;
Fig. 68 shows a "Maintenance history" screen used in the maintenance history inquiry processing;
Fig. 69 is a flowchart showing the flow of "oil change" processing of step S17 in Fig. 6;
Fig. 70 shows an "Oil change management" screen used in the oil change processing;
Fig. 71 shows an "Unchanged oil management" screen used in the oil change processing;
Fig. 72 is a flowchart showing the flow of the "repairs status inquiry" processing of step S18 in Fig. 5;
Fig. 73 shows a "Repairs status inquiry" screen used in the repairs status inquiry processing;
Fig. 74 shows a "Repairs status inquiry" screen used in the repairs status inquiry processing;
Fig. 75 shows a "Repairs status inquiry" screen used in an embodiment relating to a first improvement;
Fig. 76 shows a dialog box "Scheduled return date" which is displayed on the "Machine status inquiry" screen in Fig. 75;
Fig. 77 shows an "Order acceptance status confirmation" screen;
Fig. 78 shows an "Advance registration" screen;
Fig. 79 shows a process flow which serves to allow an individual at a branch store to grasp the progress status of repairs, according to an embodiment relating to a second improvement;
Fig. 80 shows a menu screen according to an embodiment relating to the second improvement;
Fig. 81 shows an "Inspection result inquiry" screen;
Fig. 82 shows a "Vehicle inspection input and repaired vehicle management" screen;
Fig. 83 shows the process flow which allows an operator at a branch store (or the headquarters) to confirm the progress status of repairs;
Fig. 84 shows a "Repairs report status inquiry" screen;
Fig. 85 shows a "Repairs status inquiry" screen;
Fig. 86 shows a menu screen according to an embodiment relating to a fourth improvement;
Fig. 87 shows an "Operation status search" screen; and
Fig. 88 shows an "Operation status input" screen.

### BEST MODE FOR CARRYING OUT THE INVENTION

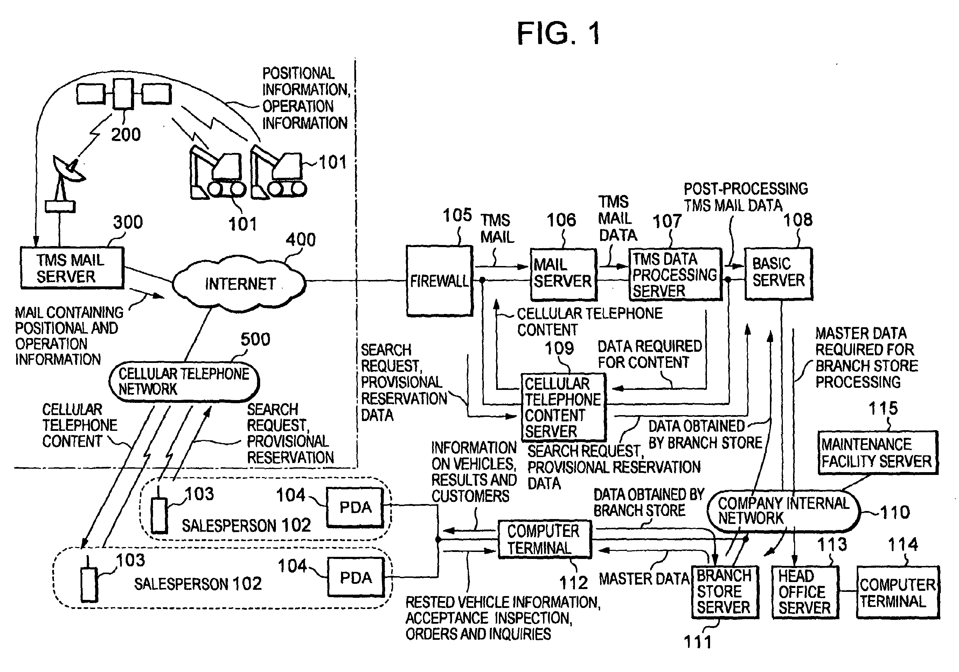

Fig. 1 shows the overall system constitution of the rental system according to an embodiment of the present invention and which serves to support a construction vehicle rental company.

This system comprises: a computer system 100 for performing information processing, which is in the rental company (referred to hereinafter as "rental company system"); a multiplicity of construction vehicles 101, 101, ... which are rental articles, and a TMS (Tele-management System) mail server 300 that remotely captures the positions of these construction vehicles 101, 101, ..., operating states thereof, and the like.

The construction vehicles 101, 101, ... and the TMS mail server 300 are in principle capable of communicating at any time and irrespective of where the construction vehicles 101, 101, ... are located, via a wireless communication system that operates irrespective of location over an extremely wide range such as the satellite communication system 200, for example. The construction vehicles 101, 101, ... each contain a GPS apparatus, and various sensors for capturing the states of parts inside a vehicle, and are capable of reporting the current position captured by the GPS apparatus, and operation information captured by the various sensors (the operation time, details of any breakdowns and anomalies, the engine oil pressure, engine speed, working implement oil temperature, working implement oil pressure, radiator water temperature, working implement load, remaining fuel quantity, and the like) at any time, to the TMS mail server 300 via the satellite communication system 200.

The TMS server 300 and the rental company system 100 are capable of communicating at any time via a communication network between computers such as the Internet 400, for example. The TMS mail server 300 collects the latest positional information, operation information, and so forth, on the construction vehicles 101, 101, ... and relays such information in the form of electronic mail, for example, to the rental company system 100 at any time or periodically.

The rental company system 100 comprises various computers 105 to 112, which are installed in company buildings, and portable information processing terminals carried by salespeople 102, 102, ..., for example cellular telephones 103, 103, ... and PDAs (Personal Digital Assistants) 104, 104, ... It goes without saying that the system constitution illustrated is only an example, and that other constitutions can also be adopted. For example, each salesperson 102 carries two devices, in the form of the cellular telephone 103 and the PDA 104, but this is because, at the time of the present application, the cellular telephone 103 has features that are lacking in terms of information processing and display functions, and the PDA 104 has features that are lacking in terms of communication functions. Accordingly, should a portable terminal that is sufficiently superior with respect to both these functions become available in the future, a single terminal of this kind would be adequate.

On the inside of the firewall 105 of the rental company system 100, the mail server 106 receives and stores electronic mail that describes the latest positional information and operation information on the construction vehicles 101, 101, ... which is sent from the TMS mail server 300 (referred to as TMS mail hereinafter). A TMS data processing server 107 receives TMS mail stored in the mail server 106, extracts data representing the latest positional information and operation information on the construction vehicles 101, 101, ... from this electronic mail (referred to as TMS data hereinafter), and then sends this TMS data to the basic server 108.

The basic server 108 comprises a database for storing all the data required by the rental company system 100. The details of the data stored in this database (referred to as master data hereinafter) will be described subsequently. Upon receiving the TMS data, the basic server 108 uses this data to update the master data related to the positional information and operation information on the construction vehicles 101, 101, ... The basic server 108 is connected, via the company network, to branch store servers 111, 111, ... installed in each branch store of a multiplicity of branch stores owned by the rental company, and master data required for the business tasks of each branch store is transmitted periodically or at any time to the branch store servers 111, 111, ... The basic server 108 is also connected via the company network to a head office server 113 installed in the head office of the rental company, and master data required for the business tasks of the head office is transmitted to the head office server 113 periodically or at any time. The details of the business tasks of the branch stores and the head office will be described subsequently.

A cellular telephone content server 109 is connected to the basic server 108. The cellular telephone content server 109 can communicate, via the Internet 400, for example, with a Web browser of the cellular telephones 103, 103, ... carried by the salespeople 102, 102... As a result, various data can be transmitted as cellular telephone content of a predetermined format to the web browser of the cellular telephones 103, 103, ..., and predetermined data can be received from this web browser.

Types of data which can be supplied as cellular telephone content to the cellular telephones 103, 103,... include, for example, the rental availability status and reservation status of each construction vehicle, the rental records for each customer, the operating rate of each construction vehicle, the status of each rental agreement, the status of delivered vehicles, and so forth. The cellular telephone content server 109 first receives a search request with respect to specific cellular telephone content from the cellular telephone 103 of each salesperson 102, then sends a search request for the latest master data required for the requested cellular telephone content to the basic server 108. Thereafter, the cellular telephone content server 109 receives search result data from the basic server 108, creates the requested cellular telephone content on the basis of the latest data, and then transmits the cellular telephone content to the cellular telephone 103 of the salesperson 102 such that this content is displayed by the cellular telephone 103.

Further, data received by the cellular telephone content server 109 from the cellular telephone 103 of each salesperson 102 includes rental provisional reservation data with respect to a specific construction vehicle. Upon receiving the provisional reservation data, the cellular telephone content server 109 sends this data to the basic server 108.

In each branch store of the rental company, the branch store server 111 holds the latest master data downloaded from the basic server 108, and a branch store business task application for performing branch store business tasks is installed in each of several computer terminals 112, 112, ... connected to the branch store server 111. The branch store business task application downloads required master data to the computer terminal 112 from the branch store server 111 and performs business task processing while accessing this data. The details of this business task processing will be described subsequently.

Furthermore, PDAs 104, 104, ... carried by the salespeople 102, 102, ... can be connected at any time to respective computer terminals 112 in the branch stores. A PDA business task application that supports the external business tasks of the salespeople 102 is installed in each PDA 104. When a PDA 104 is connected to a computer terminal 112, the PDA business task application downloads predetermined types of data from the computer terminal 112 such as, for example, vehicle information, credit information, customer information, and uploads data inputted to the PDA 104 in the activities of the salesperson 102, such as, for example, rested vehicle information, acceptance inspection information, order and inquiry information, to the computer terminal 112. For example, the salespeople 102, 102, ... connect the PDAs 104, 104, ... to the respective computer terminals 112 upon starting work each day to thereby make a download from the computer terminals 112, which have the latest information, and connect the PDAs 104, 104, ... to the respective computer terminals 112 upon finishing work each day to thereby upload data inputted in the business tasks of the day to the computer terminals 112.

Data that is to be mirrored in the master data of the basic server 108, which is data inputted to the computer terminals 112 (data inputted in the business task processing of the branch store business task application, and data which is uploaded from the PDAs 104, 104, ...) is uploaded at any time or periodically to the basic server 108 via the branch store server 111, and the master data in the basic server 108 is updated on the basis of this data.

In the head office of the company, several computer terminals 114 are connected to the head office server 113. A head office business task application installed in the computer terminals 114 is used to perform business task processing at the head office. Of data that is inputted to the computer terminals 114 in the head office business task processing, the data which is to be mirrored in master data of the basic server 108 is uploaded to the basic server 108 via the head office server 113 at any time or periodically, and the master data in the basic server 108 is updated on the basis of this data.

Furthermore, the rental company system 100 is connected to a server 115 of an external maintenance facility that carries out maintenance such as specific independent inspections of construction vehicles, and repairs, and the like.

According to the rental system having the constitution described above, information on all the construction vehicles 101, 101, ... which the rental company owns (for example, the current position, operation information, rental availability status and reservation status, the maintenance history, and so forth) is centrally managed by the basic server 108 in the rental company system 100, and this information is continuously updated to the latest information. Further, this information can be referenced via any branch store computer terminal 112, and via any PDA 104 or any cellular telephone 103 of the salespeople 103, whereby business activities can be implemented on the basis of this information.

As a result, all of the construction vehicles 101, 101, ... can be operated efficiently. This is because, there being no obstacle between branch stores as is present in the conventional business formula, all the salespeople are also able to conduct business for all the construction vehicles located at all of the branch stores, and it is possible to accept an order by selecting a vehicle which is compatible with the customer's request and which is advantageous also in terms of vehicle dispatch (for example, current position, operating state and rental status), from among all of the construction vehicles.

Further, according to the system of the present embodiment, the salespeople are able to respond quickly to customer needs. This is because, as detailed above, it is possible to select a vehicle which is compatible with the customer's request and which is advantageous also in terms of vehicle dispatch, from among all the vehicles, it is possible to check the current state of all the vehicles at any time and in any location by using a PDA or cellular telephone, and it is possible to make a provisional reservation via a cellular telephone should a suitable vehicle be found.

According to the system of the present embodiment, it is also possible to carry out appropriate maintenance on vehicles which are being rented. This is because, even if a vehicle is being rented, the current position and operating state thereof can be grasped through the medium of TMS data, meaning that the rental company independently judges the need for maintenance and the materials and people and so forth required for the maintenance, on the basis of the TMS data, and is therefore capable of sending appropriate staff to the operation site. This fact is highly advantageous since, where construction machines are concerned, work is frequently carried out in mountains in remote locations.

Furthermore, according to the system of the present embodiment, a uniform quality can be assured when putting the construction vehicles on the secondhand vehicle market, by controlling the quality of the construction vehicles. This is because it is possible to grasp the states of all the construction vehicles (for example, the current position, operation information, rental availability status and reservation status, maintenance history, and so forth), and, consequently, on the basis of such states, maintenance schedules can be put together such that all the vehicles appropriately receive maintenance, and rental schedules can be adjusted for an appropriate hour meter value (elapsed operation time) at the time when the construction vehicles are put on the secondhand vehicle market.

Details of the rental company system 100 will be described below.

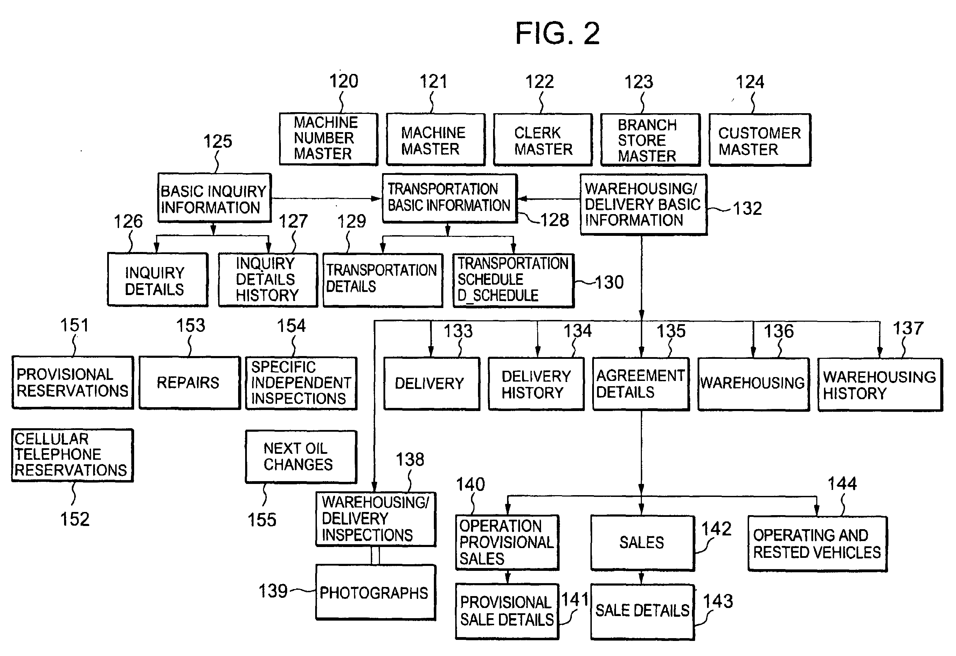

Fig. 2 illustrates the main contents of the database possessed by the basic server 108 of the rental company system 100. In Fig. 2, the arrows between the tables signify that, for data items shared between tables, data in a table on the base side of an arrow is mirrored in the table at the tip of the arrow. Also, two lines between tables signify that data is linked between the tables.

As shown in Fig. 2, this database comprises: a machine number master table 120 for recording information on each construction vehicle that is a rental article; a machine master table 121 for recording information on each type of construction vehicle; a clerk master table 122 for recording information on an employee such as a salesperson; a branch store master table 123 for recording information on each branch store and the head office; and a customer master table 124 for recording information on each customer.

This database further comprises: an inquiry basic information table 125 for recording basic information that relates to an "inquiry" (an acquisition request made by a branch store or salesperson with respect to a rental inquiry or order from a customer); an inquiry details table 126 for recording detailed information on an inquiry; and a details history table 127 for storing the contents of the inquiry details table 126 in relation to past inquiries which have been completed.

The database further comprises: a transportation basic information table 128 for recording basic information relating to the operations for transferring construction vehicles between locations; a transportation details table 129 for recording detailed information on the transfer operations; and a transportation schedule table 130 for recording information relating to schedules for such transfer operations.

The database further comprises: a warehousing/delivery basic information table 132 for recording basic information relating to a (delivery) procedure for removing a construction vehicle from a warehouse for delivery to a customer at the beginning of the rental period, and to a (warehousing) procedure for receiving the construction vehicle from the customer and putting the vehicle in the warehouse at the end of the rental period; a delivery table 133 for recording detailed information on the delivery procedure; a delivery history table 134 for storing the contents of the delivery table 133 in relation to the previous completed rental agreement; a warehousing table 136 for recording detailed information on the warehousing procedure; a warehousing history table 137 for storing the contents of the warehousing table 136 in relation to the previous completed rental agreement; and a warehousing/delivery inspection table 138 for recording information in relation to inspections of the construction vehicles performed upon warehousing/delivery. The warehousing/delivery inspection table 138 is linked with a photobase 139 for storing data of photographs of the construction vehicles taken using a digital camera at the time of the warehousing/delivery inspection.

The database further comprises: an agreement details table 135 for recording detailed information on rental agreements; a provisional sale table 140 for recording information on provisional sales; a provisional sale details table 141 for recording detailed information on provisional sales; a sale table 142 for recording information on sales; a sale details table 143 for recording detailed information on sales; and an operation and rested vehicle table 144 for recording information related to the operation and resting of the construction vehicles.

The database further comprises: a provisional reservation table 151 for recording information related to provisional reservations for the renting of construction vehicles; a cellular telephone reservation table 152 for recording information which is related to rental reservations made by salespeople using a cellular telephone; a repairs table 153 for recording information related to repairs of construction vehicles; a specific independent inspection table 154 for recording information related to specific independent inspections of construction vehicles; and a next oil change table 155 for recording information related to the next oil changes for the construction vehicles.

Of the tables 120 to 155 for recording the master data, only those tables which are directly linked to the description of business task processing provided hereinafter will be selected and the data items recorded in such tables are indicated below.

### (1) Machine number master table 120

This table has the following items and the like recorded therein for each of the construction vehicles 101, 101, ... which are rented: a specific "management number"; the "branch store code" and "branch store name" of the branch store owning the vehicle in question; the "machine type", specific "machine number", "specifications", "model", "purchase date", "cost", "hour meters", "date for hour meter update"; "search keyword", "date for carrying out independent inspection"; "time limit for carrying out independent inspection"; "provisional reservation classification" indicating the presence or absence of a provisional reservation; "repairs classification" indicating whether the vehicle is operating normally or undergoing repair; "warehousing inspection classification" indicating that a warehousing inspection has not yet been performed, has been performed or is pending; "date for warehousing inspection"; "reservation restriction flag" indicating the presence or absence of a reservation restriction; and "transfer restriction flag" indicating the presence or absence of a transfer restriction.

### (2) Machine master table 121

This table has the following items and the like recorded therein for each machine type of the construction vehicles which are rented: "machine code", "machine name", and "machine abbreviation" indicating the machine type; and "reservation restriction flag" indicating the presence or absence of a reservation restriction.

### (3) Inquiry basic information table 125

This table has the following items and the like recorded therein for each inquiry (rental inquiry or order request): a specific "inquiry number"; the "receipt date"; the "customer code" and "customer name" of the customer; the "branch store code" and "branch store name" of the branch store that made the inquiry along with the "clerk code" and "clerk's name" of the salesperson; "delivery point code" and "delivery point name" indicating the branch store that delivers the vehicle which is rented (delivery point); "inquiry flag" indicating whether or not linking of the inquiry with an order acceptance is definite; customer "desired delivery date" and "desired delivery time"; "desired delivery classification" indicating that the desired delivery date and time are unchangeable or can be adjusted; customer "scheduled return date"; "scheduled return classification" indicating that the scheduled return date is unchangeable or can be adjusted; "form of agreement" indicating whether the agreement is a daily, weekly or monthly agreement; "number of days of agreement; and the "order acceptance estimated fee" and "order acceptance estimated unit price" which indicate the estimated fee of the rental fee and the estimated unit price respectively.

### (4) Inquiry details table 126

This table has the following items and the like recorded therein for each inquiry: the "inquiry number", "receipt date", "clerk code" and "clerk's name", copied from the inquiry basic information table 124; "management number", "machine type", and "machine number" of vehicles which are rented; information indicating "special specifications" in cases where special specifications are requested; information indicating various specifications such as the "operation type", "shoe", "tooth edge, "tooth"; the "substitution feasibility" indicating the presence or absence of a substitute machine type; the "substitute machine type" in a case where there is a substitute machine type; and "reservation classification" indicating that this inquiry is still at the inquiry stage, has been nullified, has been remanded, that a reservation has been made, or that delivery has been carried out.

### (5) Transportation basic information table 128

This table has the following items and the like recorded therein for transportation of the construction vehicles between branch stores: a specific "transportation instruction number"; the "instruction branch store code" and "instruction branch store name", and the "instruction clerk code" and "name of clerk issuing instruction", which indicate the branch store that issued the transportation instruction and the clerk at this branch store respectively; and, in cases where this transportation corresponds to a specific inquiry, the "inquiry number" of this inquiry, the "code of the branch store from which the request originated" and the "name of the branch store from which the request originated", and the "code of the clerk from whom the request originated" and the name of the clerk from whom the request originated", which indicate the branch store and the clerk respectively that made the inquiry; and also the "customer code" and "customer name" of this inquiry.

### (6) Transportation details table 129

This table has the following items and the like recorded therein for requests for the transportation of the construction vehicles between branch stores: the "transportation instruction number", which is copied from the transportation basic information table 128; the "warehousing/delivery number", which is copied from the warehousing/delivery basic information table 132; "transportation confirmation flag" indicating that the transportation has been performed or has not yet been performed; in cases where there is a corresponding inquiry, the "inquiry number", "management number", "machine type", and "machine number" of the corresponding inquiry, which are copied from the inquiry details table 125; the "previous stock point code" and "previous stock point name" of the construction vehicle being transported; the "departure point code" indicating the branch store from which the construction vehicle departs; "arrival point code" indicating the branch store at which the construction vehicle arrives; the "departure location", "departure time", "arrival location", "arrival time", "scheduled transportation time", "carrier name", "driver", "transportation date", and the "schedule shift flag" that indicates whether there is any shift in the system transportation scheduling.

### (7) Transportation schedule table 130

This table has the following items and the like recorded therein for the transportation of the construction vehicles between branch stores: the "transportation instruction number", which is copied from the transportation basic information table 128; the "warehousing/delivery number", which is copied from the warehousing/delivery basic information table 132; "transportation confirmation flag" indicating that the transportation has been performed or has not yet been performed; in cases where there is a corresponding inquiry, the "inquiry number", "management number", "machine type", and "machine number" of the corresponding inquiry, which are copied from the inquiry details table 125; the "previous stock point code" and "previous stock point name" of the construction vehicle being transported; the "departure point code" indicating the branch store from which the construction vehicle departs; "arrival point code" indicating the branch store at which the construction vehicle arrives; the "departure location", "departure time", "arrival location", "arrival time", "scheduled transportation time", "carrier name", "driver", "transportation date", and the "schedule shift flag" that indicates whether there is any shift in the system transportation scheduling.

### (8) Warehousing/delivery basic information table 132

This table has the following items and the like recorded therein with respect to warehousing/delivery of the construction vehicles of the respective rental agreements generated by each inquiry: "warehousing/delivery number" for which the inquiry number is copied from the inquiry basic information table 124; the "customer code" and "customer name", the "branch store code" and "branch store name", the "clerk code" and "clerk code", the "form of agreement" and "number of days of the agreement"; the "order acceptance estimated fee" and "order acceptance estimated unit price", for which corresponding items in the inquiry basic information table 124 are copied; and also the "scheduled delivery date" and "scheduled return date", which are copied from the inquiry basic information table.

### (9) Delivery table 133

This table has the following items and the like recorded therein with respect to delivery of the construction vehicles: the "warehousing/delivery number", which is copied from the warehousing/delivery basic information table 132; the "management number" of the delivered construction vehicle and attachments; the "receipt date" indicating the date on which the delivery is inputted; the "delivery point code" and "delivery point name" indicating the branch store performing the delivery; the "delivery branch store code" and "delivery branch store name", and the "delivery clerk code" and "delivery clerk's name", which indicate the branch store that prints the delivery slip and the clerk at this branch store respectively; the "machine type" and "machine number" of the construction vehicle which is delivered; the "delivery date" indicating the date of delivery; the "scheduled return date", which is copied from the warehousing/delivery basic information table 132; the "site name", which indicates the site which is the rental destination; "hour meters upon delivery", which indicates the hour meter value at the time of delivery; information indicating various specifications upon delivery such as the "operation type", the "shoe", "tooth edge", "tooth"; and the "scheduled warehousing date classification", which indicates whether the scheduled warehousing date is pending or has been finalised.

### (10) Warehousing table 136

This table has the following items and the like recorded therein with respect to warehousing of the construction vehicles: the "warehousing/delivery number", which is copied from the warehousing/delivery basic information table 132; the "management number" of the warehoused construction vehicle and attachments; the "receipt date" indicating the date on which the warehousing is inputted; the "warehousing point code" and "warehousing point name" indicating the branch store performing the warehousing; the "warehousing branch store code" and "warehousing branch store name", and the "warehousing clerk code" and "warehousing clerk's name", which indicate the branch store that prints the warehousing slip and the clerk at this branch store respectively; the "machine type" and "machine number" of the construction vehicle which is warehoused; the "warehousing date" indicating the date of warehousing; as well as the "hour meters at the time of delivery", copied from the delivery table 133 and information for various specifications such as the "operation type", the "shoe", "tooth edge", and "tooth".

### (11) Warehousing/delivery inspection table 138

This table has the following items and the like recorded therein with respect to the inspection at the time of delivery and the inspection at the time of warehousing of the construction vehicles: "warehousing/delivery number" copied from the warehousing/delivery basic information table 132; the warehousing/delivery classification indicating whether or not an inspection at the time of delivery or an inspection at the time of warehousing has been performed; "item ID" of various inspection items; "result" indicating a favorable or unfavorable inspection result with respect to the various inspection items; "provision" indicating, with respect to the various inspection items, whether or not a part has been changed, the vehicle has been repaired, cleaned, or supplied with oil and water, and whether any anomalies exist; "photograph pointers" for indicating photographic data of a construction vehicle which was photographed at the time of an inspection.

### (12) Photobase 139

This table has photographic data photographed in the inspections at the time of delivery and warehousing recorded therein. The photographic data is linked by the "photograph pointers" described earlier to corresponding inspection data in the warehousing/delivery inspection table 138.

### (13) Provisional reservation table 151

This table has the following items and the like recorded therein with respect to a provisional reservation for each rental: the "management number" of vehicles provisionally reserved; "receipt date" indicating the receipt date of the provisional reservation; the "customer code" and "customer name" of the customer making the provisional reservation; and the "branch store code" and "branch store name", and the "clerk code" and "clerk's name" of the branch store handling the provisional reservation and the salesperson respectively.

### (14) Cellular telephone reservation table 152

This table has the following items and the like recorded therein with respect to each reservation made via a cellular telephone: the "management number" of the vehicle reserved; the "receipt date" indicating the receipt date of the reservation; and the "clerk code" of the salesperson making the reservation.

### (15) Repairs table 153

This table has the following items and the like recorded therein with respect to repairs on the construction vehicles: the "management number" of the construction vehicle; the "repairs report number", the "date on which the repairs were begun", the "scheduled completion date", and the "estimate status", "classification of insurance procedure", "status details", "photograph classification", "branch store issuing request", "clerk to whom request is directed", for such repairs; and the "customer code" and "customer name" of the customer that initiated the repairs.

### (16) Specific independent inspection table 154

This table has the following items and the like recorded therein with respect to specific independent inspections on the construction vehicles: the "management number" of the construction vehicle, the "logbook input date", "date of previous execution", "hour meters at the time of the specific independent inspection", "code of the branch store undertaking specific independent inspection", "engine model", "engine number", "certificate number", "certifying branch store code", "certificate date", "logbook image data".

### (17) Next oil change table 155

This table has the following items and the like recorded therein with respect to the next oil change for the construction vehicles: the "management number" of the construction vehicle, the "machine code", "machine type", "machine number", "hour meters at the time of the previous oil change", "previous oil change date", "scheduled hour meters for next oil change", "current hour meters", "date for updating current hour meters", "owner branch store code", "owner branch store name", "clerk code", and "clerk's name".

A description follows of the flow of business task processing which is performed by the rental company system 100 using the database described above.

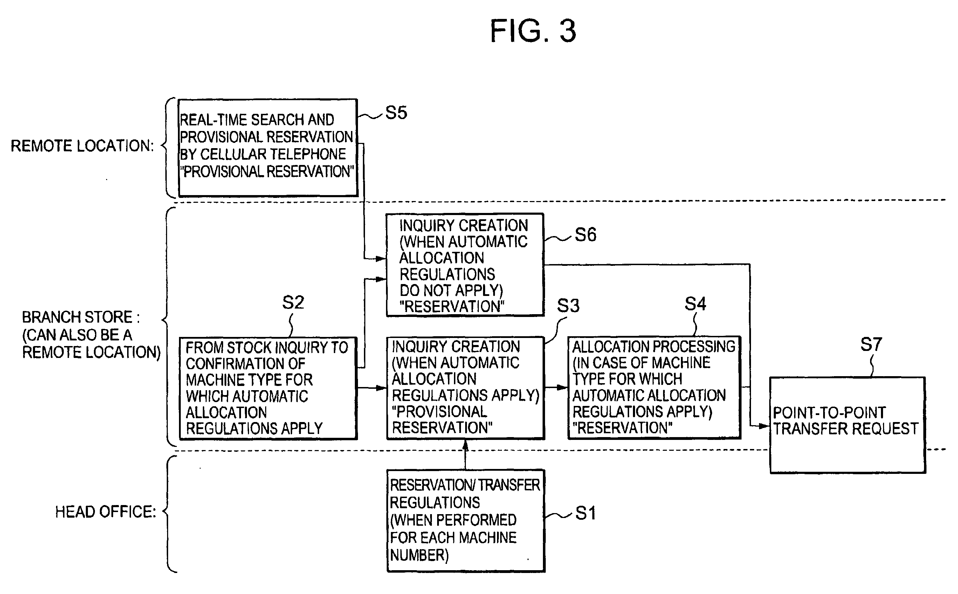

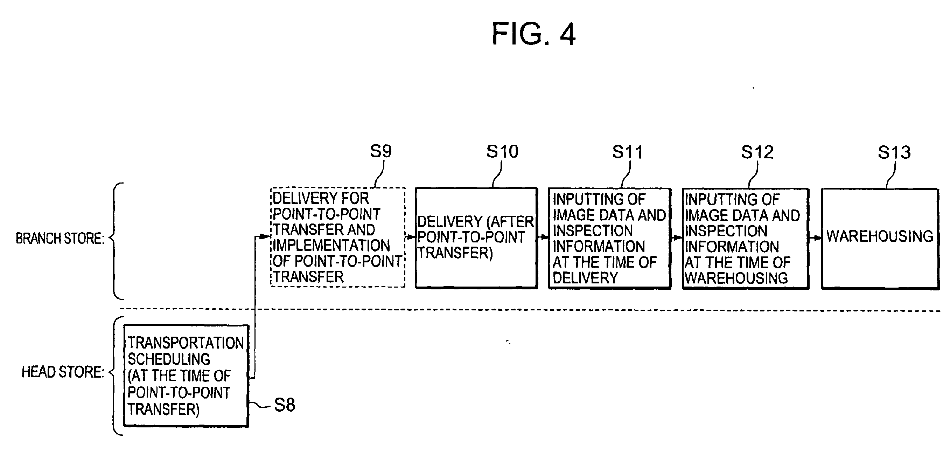

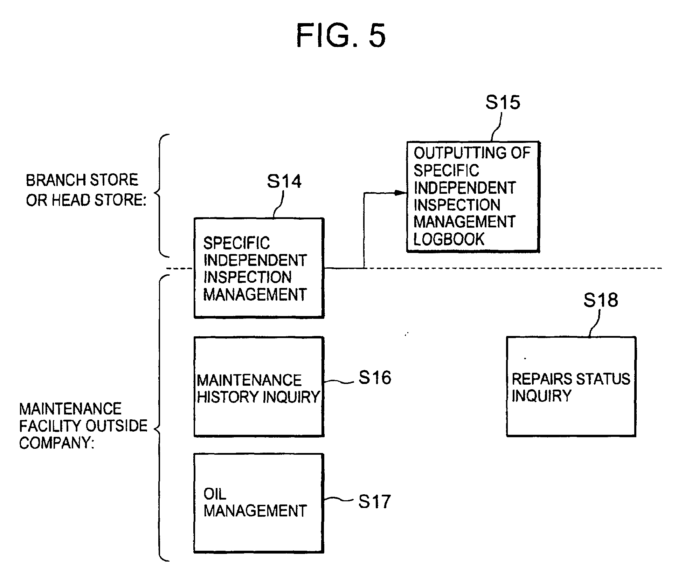

Fig. 3 shows the overall flow of business task processing from the time of a stock inquiry for a construction vehicle up until a transfer request, in business task processing which is performed by the system. Fig. 4 follows on from the process flow of Fig. 3 and shows the overall flow of business task processing from transportation scheduling for a construction vehicle until warehousing thereof. Fig. 5 shows the overall flow of business task processing related to the maintenance of the construction vehicles.

As shown in Fig. 3, reservation/transfer regulations processing (step S1) can be performed at any time at the head office. In this processing S1, it is possible, by designating optional construction vehicles, to impose a reservation regulation or transfer regulation on the construction vehicles, or, alternatively, cancel regulations for optional construction vehicles for which the reservation regulation or transfer regulation already applies. Here, the "reservation regulation" is a measure to prohibit the automatic addition of a reservation for these vehicles in accordance with a request such as one made via the cellular telephone of a salesperson (that is, such reservation is not possible unless the reservation is made manually following a judgement of reservation feasibility by the branch store operator). Further, the "transfer regulation" is a measure such that a determination to transfer the corresponding vehicle between branch stores (point-to-point transfer) cannot be made automatically. This reservation regulation and transfer regulation are referred to generically as "automatic allocation regulations".

In short, "automatic allocation regulations" are measures to regulate the automatic allocation by the system of vehicles for a certain rental order (that is, allocation is not possible unless allocation is made manually after a branch store operator judges the feasibility of allocation. These "automatic allocation regulations" can be imposed on individual vehicles such that the operation time and maintenance schedule for each vehicle can be controlled intentionally, and, in view of this, it is possible to ensure that when each vehicle is put on the secondhand vehicle market at a predetermined time, the vehicle hour meters and quality are at a uniform level.

As shown in Fig. 3, stock inquiry processing (S2) can be carried out at each branch store at any time such as when an inquiry is received from a customer. This processing S2 makes it possible to confirm, for a vehicle of an optional machine type, availability states such as whether the vehicle is in stock, has been reserved, or is undergoing repairs, and various states such as the delivery point, the specifications, and whether automatic allocation regulations apply.

Furthermore, a salesperson in an outside location is able to perform real-time search and provisional reservation by cellular telephone processing (S5), at any time such as when an inquiry is received from a customer and in an outside location. In this processing S5, by connecting via the cellular telephone to the cellular telephone content server of the rental company system, it is possible to search for and confirm a vehicle currently in stock of an optional machine type (only vehicles for which automatic allocation regulations do not apply), and on the basis of the result, to issue a provisional reservation for a specific vehicle.

The branch store can perform inquiry creation processing (S3, S6) such as when an inquiry, order, or the like, has been received from a customer. As a result of performing the above-described stock inquiry (S2), inquiry creation processing (S3) which is for a machine type having automatic allocation regulations is normally undertaken after confirmation for vehicles for which automatic allocation regulations apply. As a result of making the above-described stock inquiry (S2), inquiry creation processing (S6) which is for a machine type without automatic allocation regulations is undertaken for a vehicle for which automatic allocation regulations do not apply. Further, also for a vehicle (without automatic allocation regulations) for which a provisional reservation has been made in the above-described real-time search and provisional reservation by cellular telephone processing (S5), the inquiry creation processing (S6) for a machine type without automatic allocation regulations is undertaken.

A branch store then performs allocation processing (S4) for vehicles for which the inquiry creation processing (S3) for a machine type having automatic allocation regulations has been performed. Reservations for the vehicles for which automatic allocation regulations apply are confirmed by this allocation processing (S4). On the other hand, for vehicles for which automatic allocation regulations do not apply, reservations are confirmed at the stage of performing the inquiry creation processing (S6) for a machine type without automatic allocation regulations.

The branch store and head office perform processing (S7) of a request for a point-to-point transfer for vehicles whose reservation has been confirmed. This processing S7 determines the overall details such as the transportation means, the transportation date range, and so forth, which pertain to the point-to-point transfer of each vehicle (transportation from the current warehouse until delivery to the customer).

Thereafter, as shown in Fig. 4, at the head office, transportation scheduling processing (S8) is performed for vehicles for which point-to-point transfer request processing (S7) is complete. This processing S8 determines a unit transportation schedule for each vehicle.

The branch store carries out, in accordance with a determined transportation schedule, the actual delivery of the vehicle, the delivery inspection, and the point-to-point transfer (S9), and, accordingly, performs delivery processing (S10), and processing (S11) to input image data and inspection information at the time of delivery.

The branch store performs, with respect to a vehicle which has been returned from a customer at the end of the rental period, a warehousing inspection as well as processing (S12) to input image data and inspection information at the time of warehousing, and warehousing processing (S13).

Also, as shown in Fig. 5, the branch store or head office of the rental company performs, together with the external maintenance facility, processing (S14) for construction vehicle specific independent inspection management periodically or at any time. This processing S14 specifies a construction vehicle that is to undergo a specific independent inspection and makes a specific independent inspection management logbook following the inputting of the results of a specific independent inspection performed on this vehicle. Thereafter, the branch store performs processing (S15) to output a specific independent inspection management logbook and maintain the specific independent inspection management logbook, which is outputted (printed out).

In addition, the external maintenance facility performs, periodically or at any time: maintenance history inquiry processing (S16), oil management processing (S17), a repairs status inquiry (S18), and the like, for each vehicle, and performs management so that the maintenance, oil changes, repairs, and so forth, of each vehicle are carried out properly.

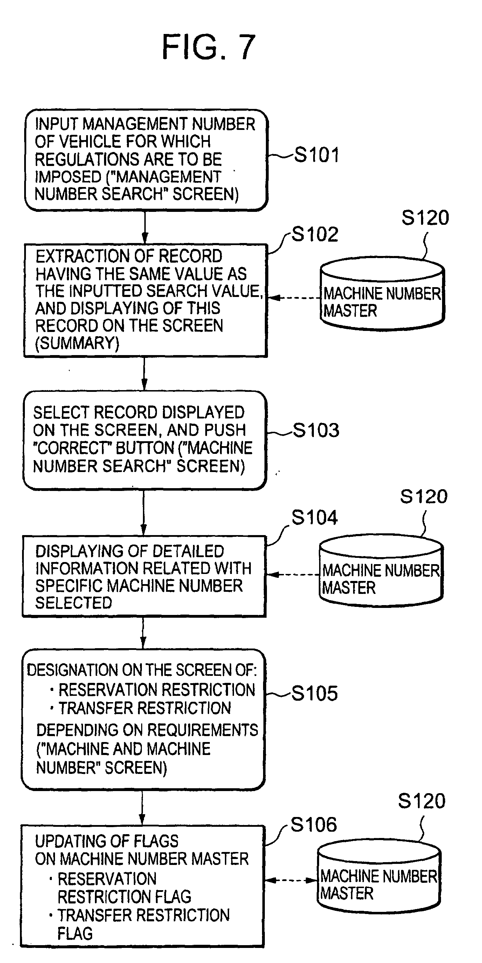

The specific flow of the respective processing shown in Figs. 3 to 5 will be described hereinbelow using the flowchart of Fig. 7 and subsequent flowcharts, and the drawings of the user interface screens.

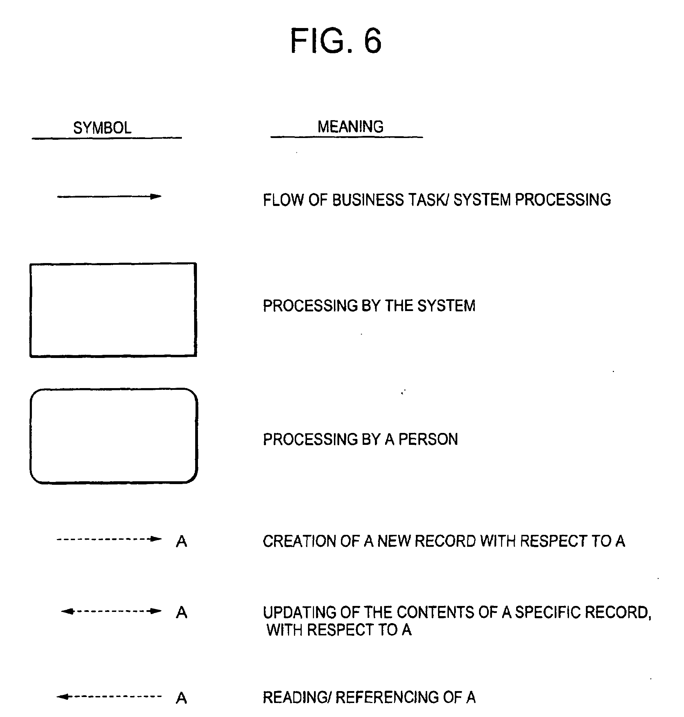

Fig. 6 shows explanatory notes for the flowchart of Fig. 7 and subsequent flowcharts. As shown in this figure, in the flowchart of Fig. 7 and subsequent flowcharts, the bold line arrows indicate the direction in which the process steps progress. Blocks with sharp corners indicate process steps performed by the system; blocks with round corners indicate processing performed by people; one-sided broken line arrows facing table "A" signify the generation of a new record in table "A"; double-sided broken line arrows facing table "A" signify the updating of a specific record of table "A"; and one-sided broken line arrows protruding from table "A" signify the reading/referencing of a record in table "A".

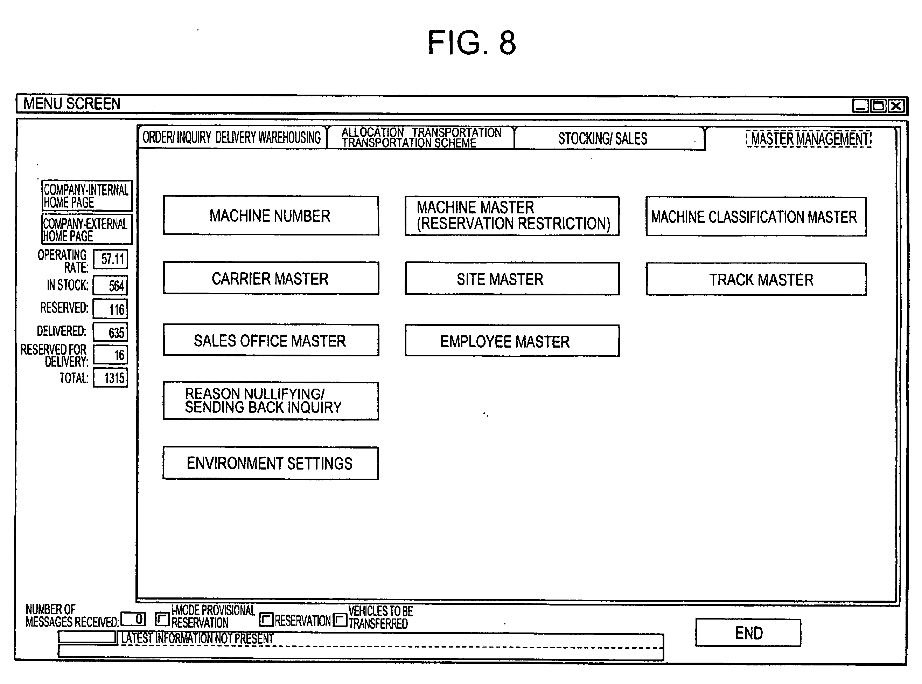

Fig. 7 shows the flow of "reservation/transfer regulations" processing of step S1 in Fig. 3. Figs. 8 to 14 show user interface screens used in the processing.

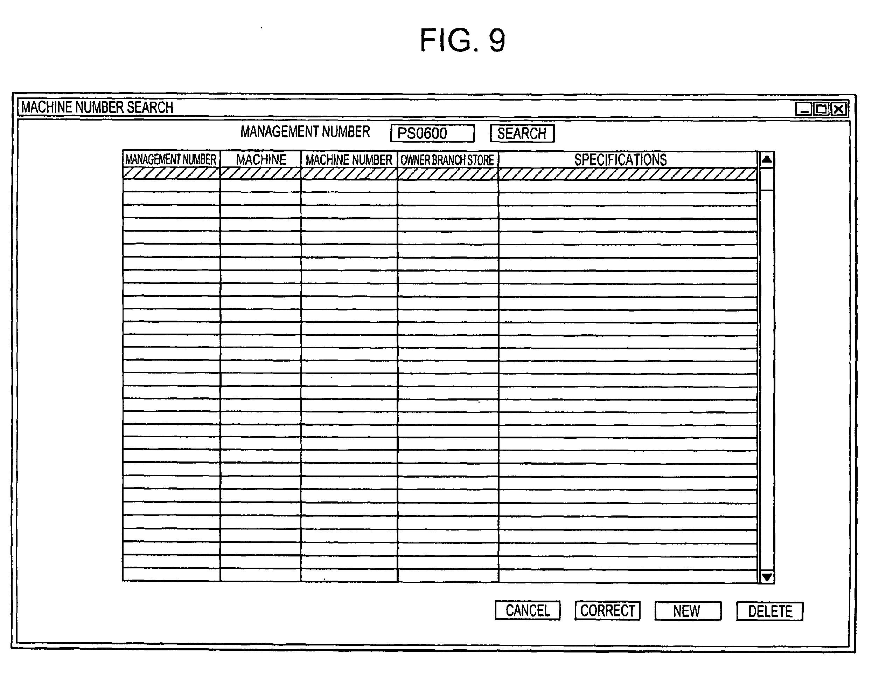

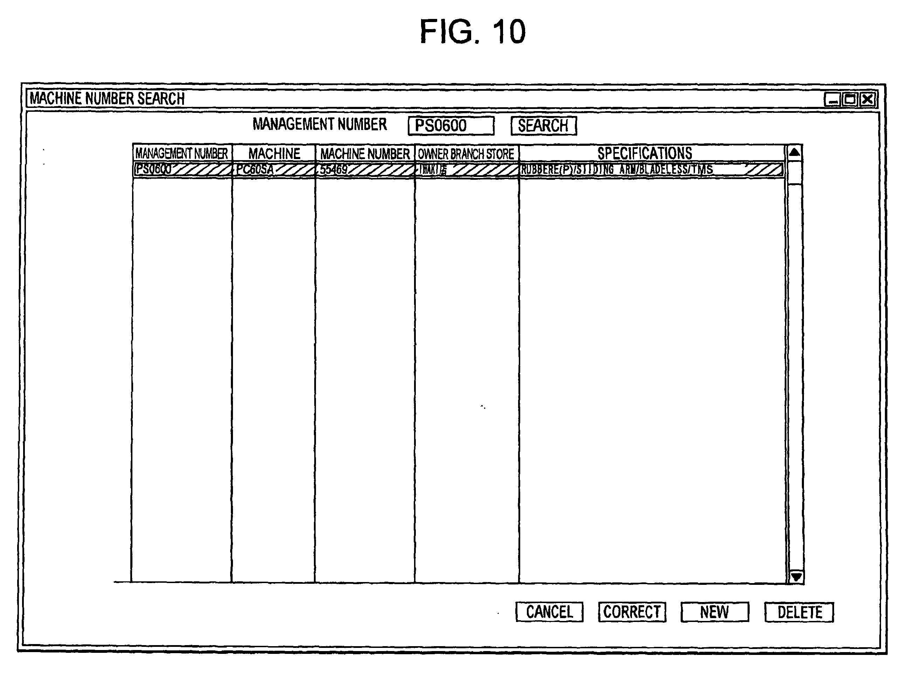

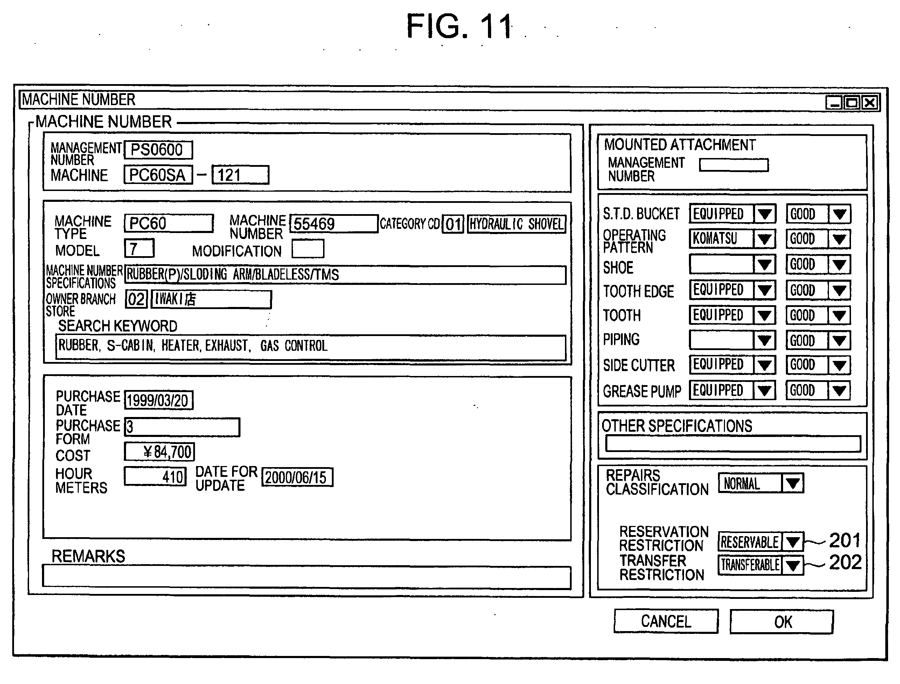

In the menu screen shown in Fig. 8 which is displayed by the computer terminals at the head office, when the operator uses the mouse to click on "master management" and "machine number" in this order, the system displays the machine number search screen shown in Fig. 9. Next, in step S101 in Fig. 7, the operator enters, in the machine number search screen of Fig. 9, the management number (for example, "PS0600") of the vehicle for which he or she wishes to impose regulations, and then clicks on "Search", whereupon, in step S102 in Fig. 7, the system retrieves the record of the vehicle whose management number is the same as the management number inputted, from the machine number master table 120 (refer to Fig. 2), and displays the contents of the record in the machine number search screen as shown in Fig. 10. Next, in step S103 in Fig. 7, when the operator selects a record displayed in the screen of Fig. 10 and clicks on "Correct", in step S104 in Fig. 7 the system reads out more detailed information on the vehicle of the selected record from the machine number master table 120, and displays this detailed information in the machine number screen as shown in Fig. 11.

Next, in step S105 in Fig. 7, by operating the "reservation restriction" or "transfer restriction" select boxes 201, 202, which are at the bottom right edge of the screen in Fig. 11, the operator elects to impose a reservation restriction or transfer restriction on the vehicle (or to cancel restrictions thereon), and then clicks on "OK". Thereupon, in step S106 in Fig. 7, the system updates the vehicle reservation restriction flag or transfer restriction flag on the machine number master table 120.

The above procedure imposes the reservation regulation or transfer regulation on each vehicle by designating a management number but the reservation regulation can also be imposed for each machine type.

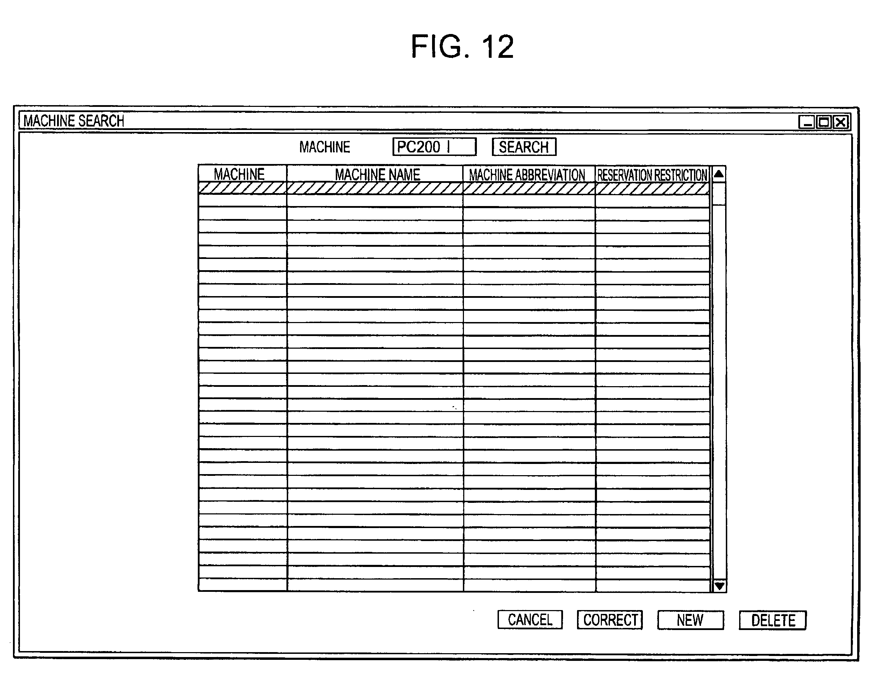

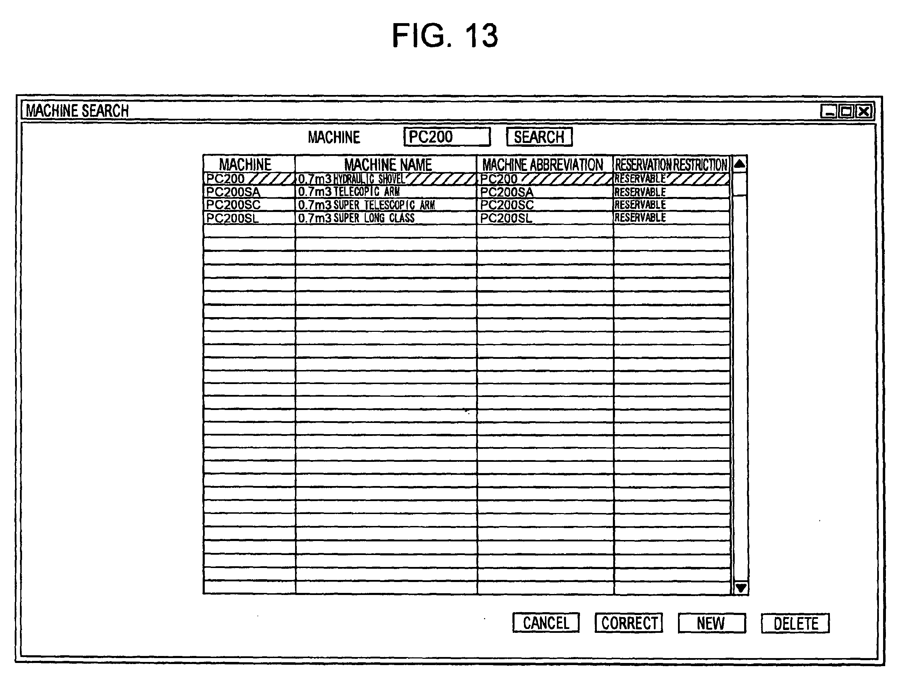

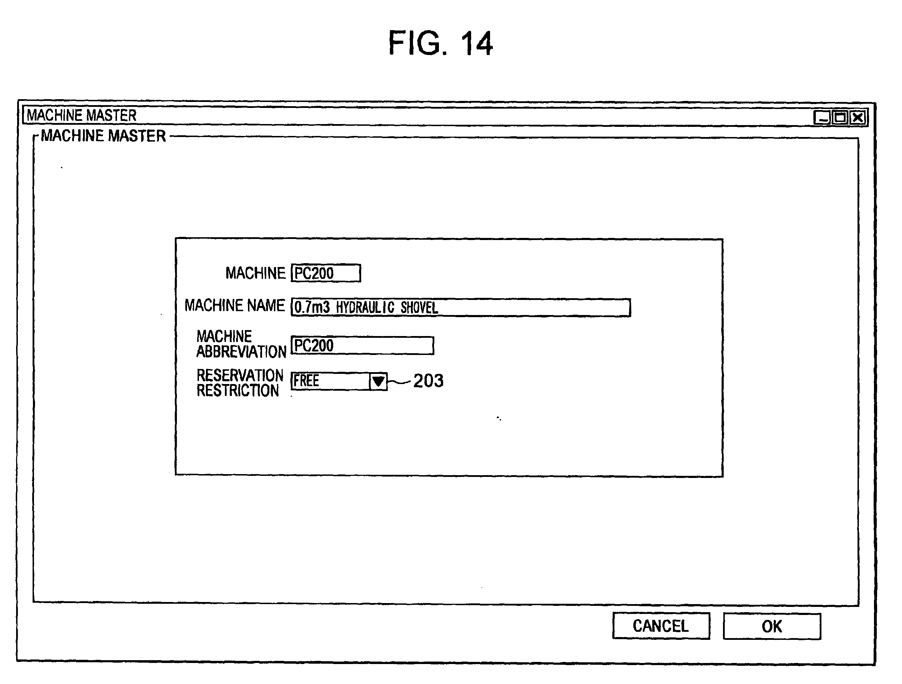

In such a case, the operator clicks on "Machine master (reservation restriction)" in the menu screen of Fig. 8. Thereupon, because the system displays the machine search screen shown in Fig. 12, the operator enters the machine type code (for example, "PC200)" in this screen, and then clicks on "Search". Then the system retrieves the records of the machine types which correspond to the machine type thus inputted, from the machine master table 121 (refer to Fig. 2), and displays these records in the machine search screen as shown in Fig. 13, and the operator therefore selects the machine type for which regulations are to be imposed from among the machine types and clicks on "Correct". Then, because the system displays the contents of the record of the selected machine type in the machine master screen as shown in Fig. 14, if the operator operates the "reservation restriction" select box 203 in this screen, imposes the reservation restriction (or cancels the restriction) and clicks on "OK", the system updates the reservation restriction flag for this machine type on the machine master table 121, and, at the same time, also updates the reservation restriction flag for the vehicles corresponding to this machine type on the machine number table 120.

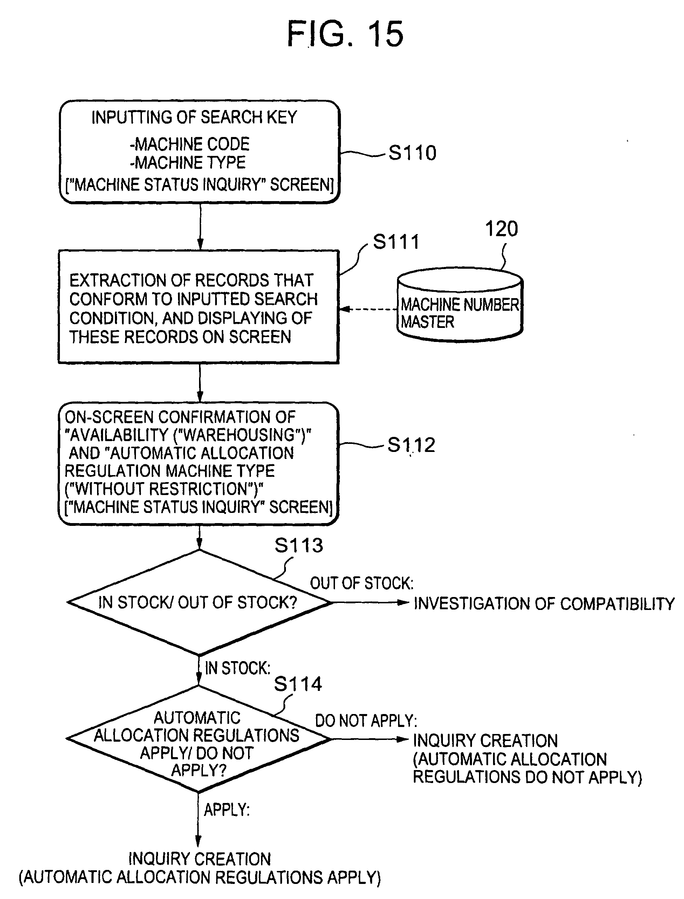

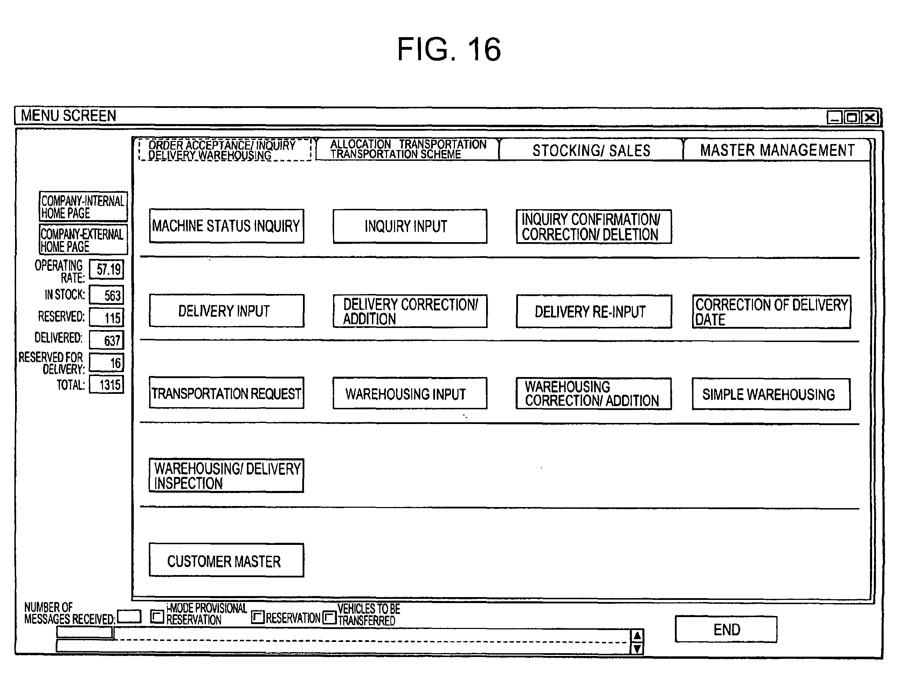

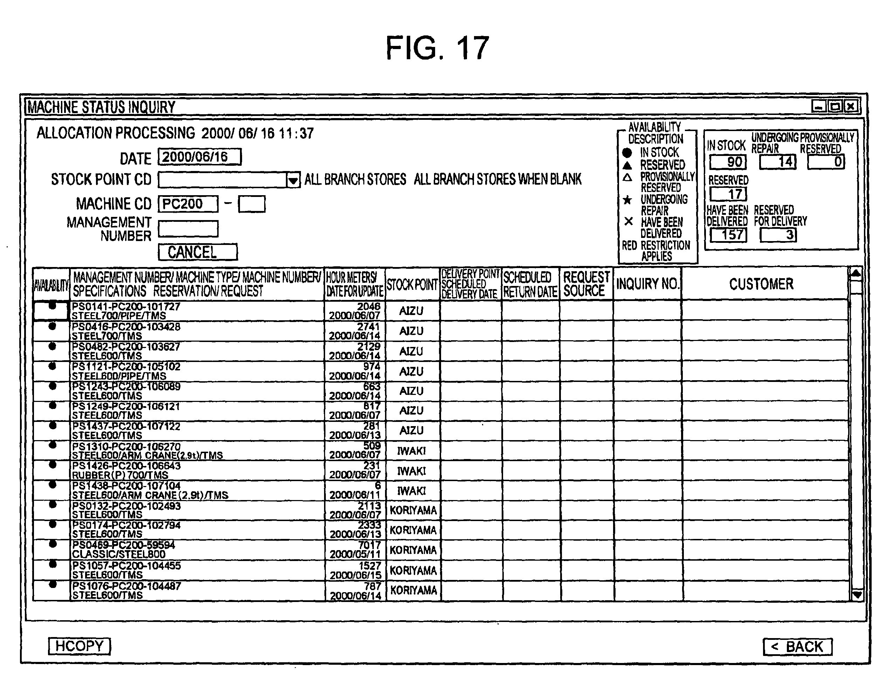

Fig. 15 shows the flow of "stock inquiry" processing of step S2 in Fig. 3. Figs. 16 and 17 show user interface screens used in this processing.

When the operator clicks on "Order acceptance/inquiry Delivery Warehousing" and "Machine status inquiry" in this order in the menu screen shown in Fig. 16 which is displayed by the branch store computer terminal, the system displays the machine status inquiry screen shown in Fig. 17 (in which every entry field is blank). Further, in step S110 in Fig. 15, when the operator enters, as a search key, a machine code (for example, "PC200") for the machine type of the inquiry, or a management number of the vehicle of the inquiry, or similar, in the machine status inquiry screen of Fig. 17, in step S 11, the system extracts all the vehicle records which correspond with the inputted search key from the machine number master table 120, and displays the contents of these records in the machine status inquiry screen as shown in Fig. 17. The displayed contents of the records of the vehicles includes the availability state (whether the vehicle is in stock, has been reserved, is now provisionally reserved, is undergoing repair, has been delivered), the presence or absence of an automatic allocation restriction (indicated by the color of the "availability" display mark in the example of Fig. 17), and the management number, specifications, delivery point, and so forth. Thus, in step 112, the operator confirms, via this screen, the availability state and the presence or absence of the automatic allocation restriction, and so forth, with respect to a vehicle whose reservation is desired. As a result, if the desired vehicle is not "in stock" ("No" in step S113), the vehicle is investigated for conformity. Also, if the desired vehicle is "in stock" ("Yes" in step S113) and automatic allocation regulations apply to the desired vehicle ("Yes" in step S114), 'Inquiry creation (when automatic allocation regulations apply) "Provisional reservation"' processing of step S3 in Fig. 3 follows, and, if no automatic allocation regulations apply to the desired vehicle ("No" in step S114), the 'Inquiry creation (when the automatic allocation regulations do not apply) "reservation"' processing of step S6 in Fig. 3 follows.

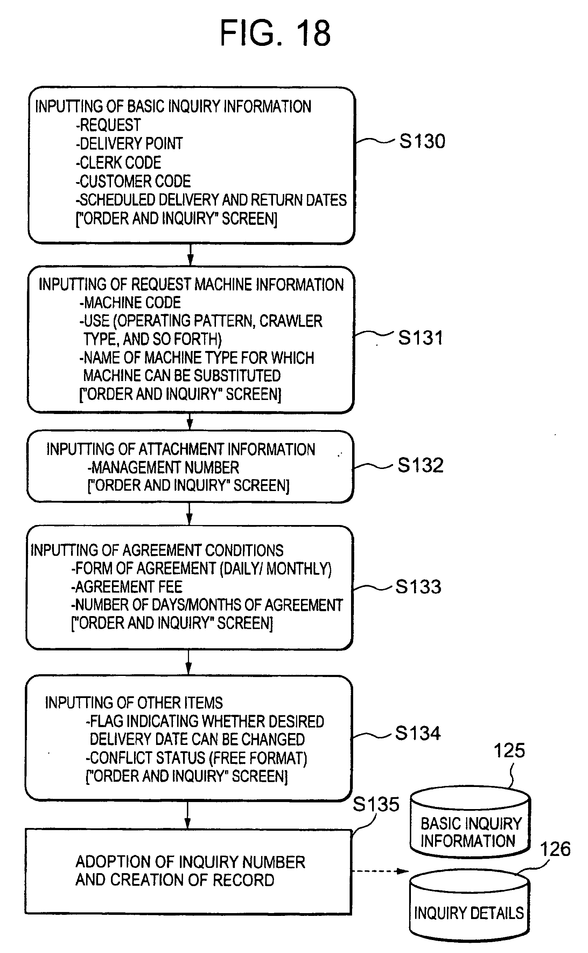

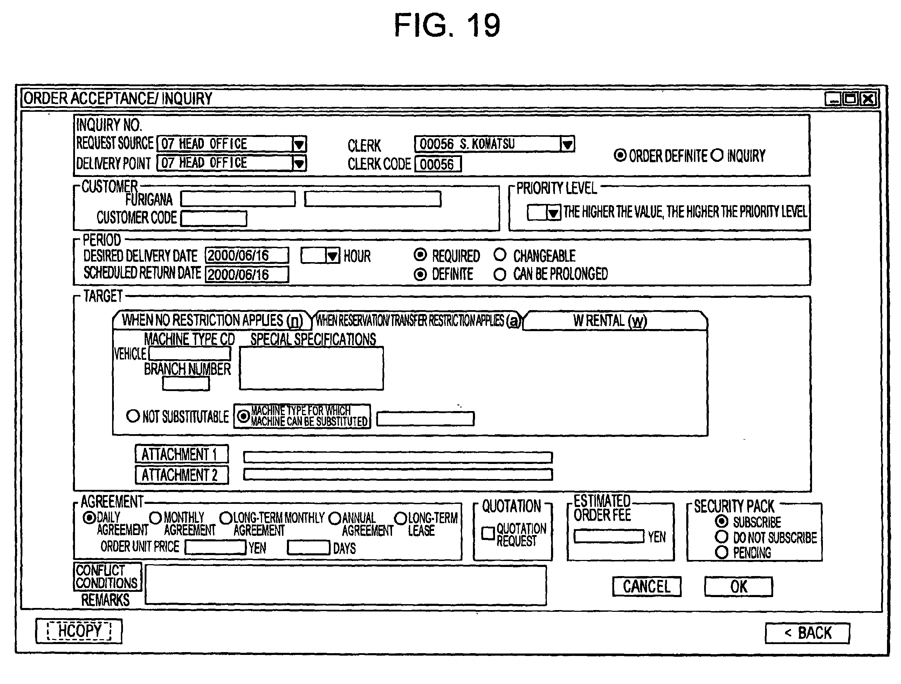

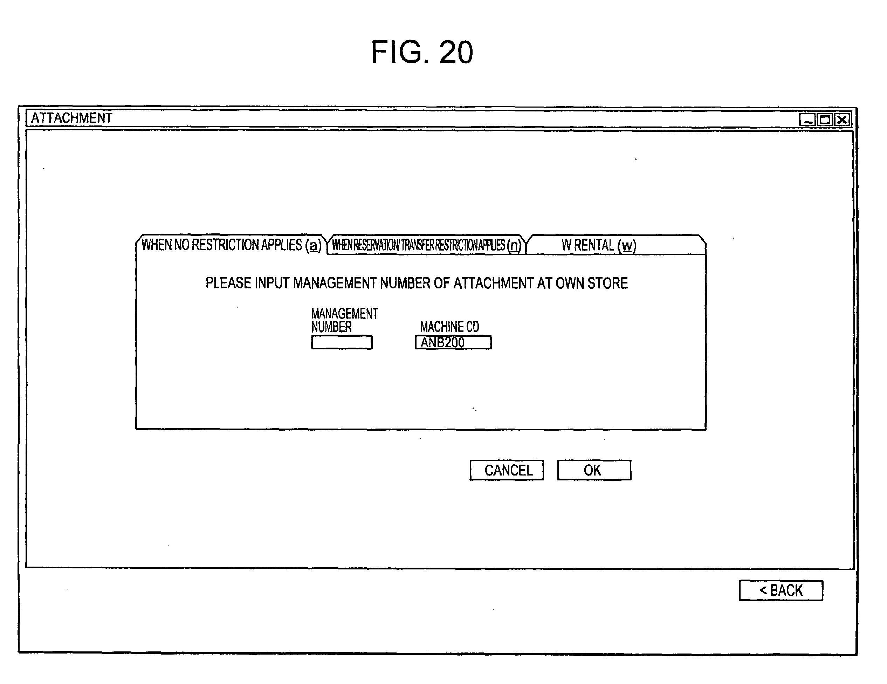

Fig. 18 shows the flow of processing for 'Inquiry creation (when automatic allocation regulations apply) "Provisional reservation"' of step S3 in Fig. 3. Figs. 19 and 20 show user interface screens used in this processing.

When the operator clicks on "Order acceptance/inquiry Delivery Warehousing" and "Inquiry input" in this order in the menu screen shown in Fig. 16 which is displayed by the branch store computer terminal, the system displays the Order acceptance/inquiry screen shown in Fig. 19 (in which every entry field is blank). Next, in step S130 in Fig. 18, the operator enters basic inquiry information (such as the source of the inquiry, the delivery value, clerk code, customer code, scheduled delivery and return dates, for example) in the Order acceptance/inquiry screen of Fig. 19.

Thereafter, in step S131 in Fig. 18, the operator enters information specifying the desired machine type (such as the machine code (machine CD), specifications (operation pattern, type of crawler belt and the like), whether the machine can be substituted by another machine type, the name of the machine type this machine can be substituted for, for example), in the "reservation/transfer restriction applies" field of the "target" field in this Order acceptance/inquiry screen. Further, when, in step S132 in Fig. 18, the operator clicks on "attachment" in the Order acceptance/inquiry screen, the "attachment" box shown in Fig. 20 opens, and information specifying the desired attachment (such as the management number of this attachment, for example) is entered in this box.

In addition, in steps S133 to S134 in Fig. 18, the operator enters, in the Order acceptance/inquiry screen, agreement conditions (such as the form of agreement (daily/monthly and so forth), agreement fee, the number of days/months of the agreement), and other items (such as whether the desired delivery date can be changed, and conflict conditions, for example). Finally, when the operator clicks on "OK", in step S135 in Fig. 18 the system allocates an inquiry number to the inquiry, creates an inquiry record having the inputted details, and registers this record in the inquiry basic information table 125 and inquiry details table 126.

In the above-described 'Inquiry creation (when automatic allocation regulations apply) "provisional reservation"' processing, because automatic allocation regulations apply to the desired vehicle, only a "provisional reservation" is made for the machine type that is the same as the vehicle, there being no "reservation" made for the specified vehicle. Thereafter, it is possible to make a "reservation" for a specific vehicle of this machine type when the "allocation processing (when automatic allocation regulations apply) "reservation" of step S4 shown in Fig. 3 is first performed.

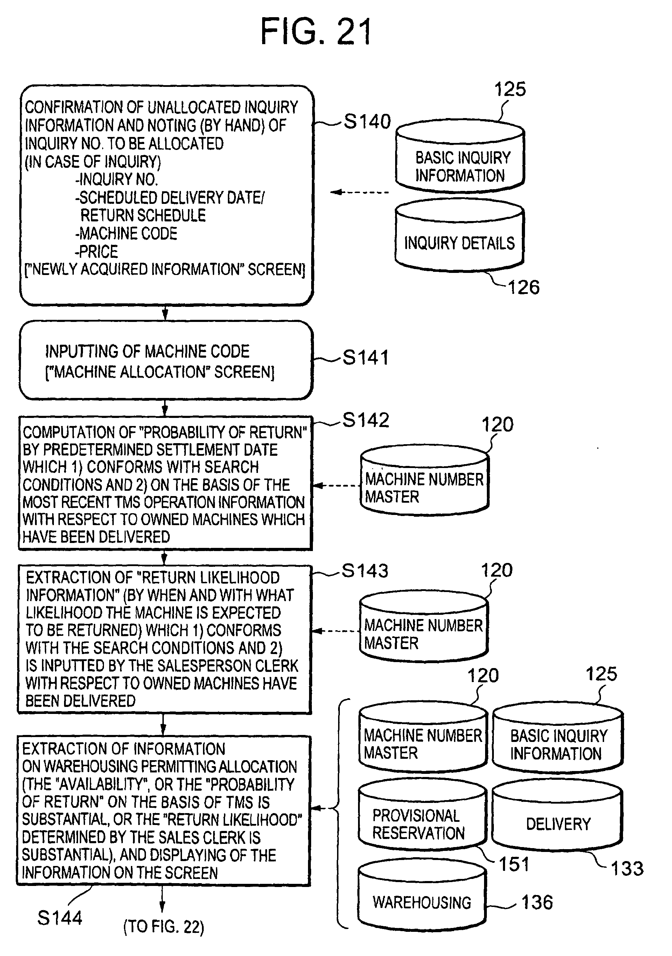

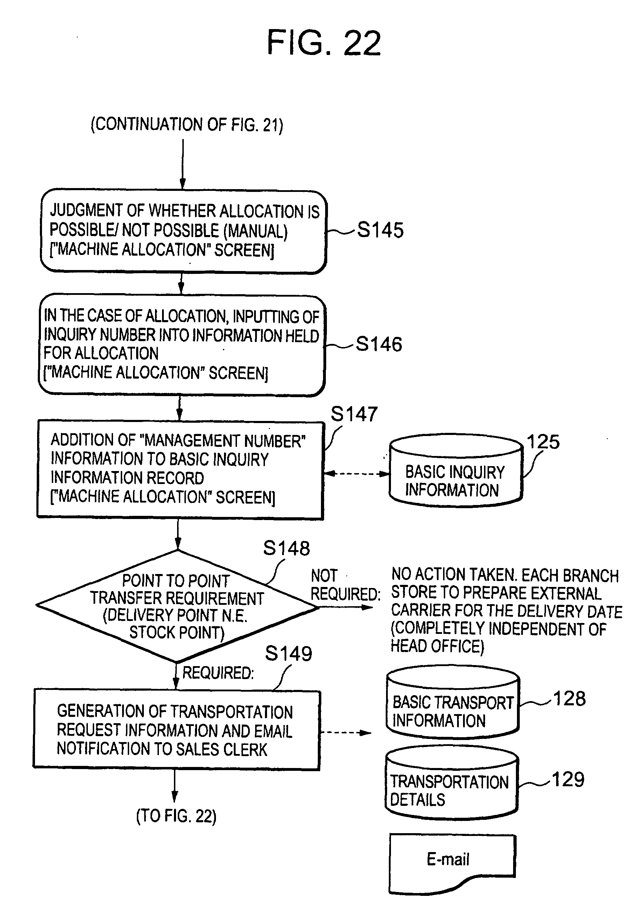

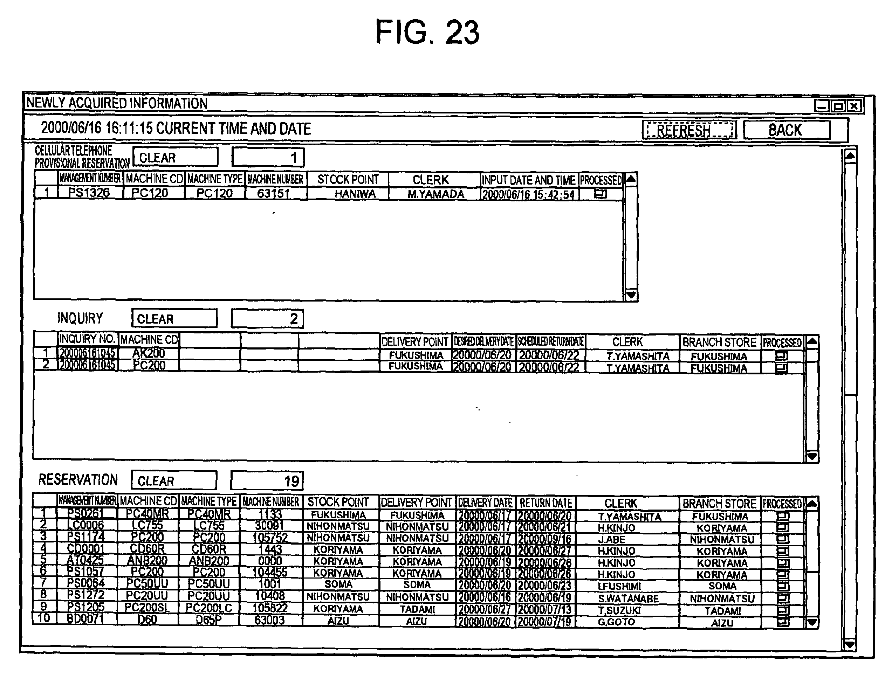

Figs. 21 and 22 show the flow of the "allocation processing (when automatic allocation regulations apply) "reservation" of step S4 shown in Fig. 3. Figs. 23 to 25 show user interface screens used in this processing.

First, in step 140 in Fig. 21, a branch store operator opens the newly acquired information screen shown in Fig. 23 on a branch store computer terminal. Inquiry records newly inputted in the above-described 'inquiry creation (when automatic allocation regulations apply) "provisional reservation"' processing are displayed in an "Inquiries" table in the newly acquired information screen by means of the inquiry basic information table 125 and the inquiry details table 126.

Also in the newly acquired information screen, records of provisional reservations made via cellular telephones and inputted in the "real-time search and provisional reservation by cellular telephone" processing of step S5 in Fig. 3 (the procedure of which is described hereinafter), are displayed in a "cellular telephone provisional reservation" table. Records of reservations inputted in the "inquiry creation (when automatic allocation regulations do not apply)" processing (the procedure of which is described hereinafter) of step S6 in Fig. 3, or the "allocation processing (when automatic allocation regulations apply) "reservation"' processing now being described here are displayed in a "reservation" table.

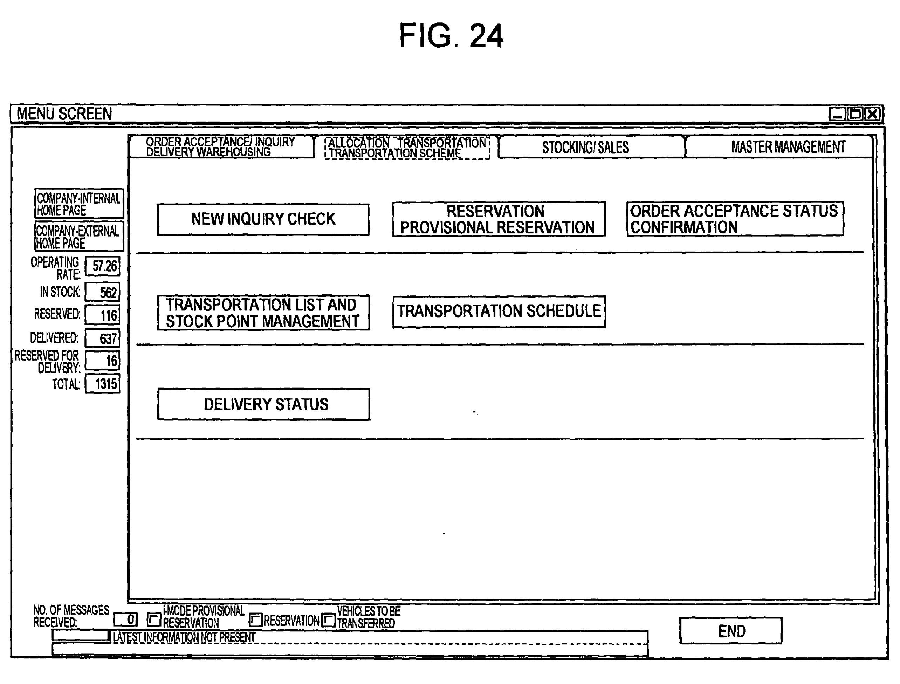

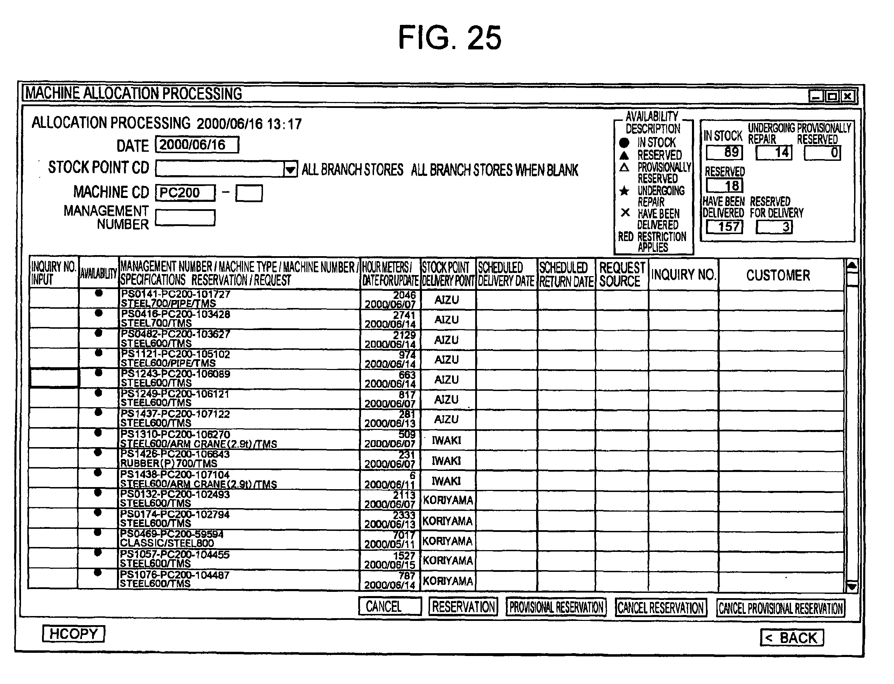

The branch store operator views the "Inquiries" table in the newly acquired information screen of Fig. 23, confirms inquiry information appearing in this table (such as the inquiry number, machine code, desired delivery date, scheduled return date, price, for example), and makes notes on a memo of the inquiry number, machine code, and so forth, of an inquiry for which allocation processing is to be performed. Next, in step S141 in Fig. 21, the operator displays the menu screen shown in Fig. 24 on the computer terminal, and clicks on "Allocation Transportation Transportation scheme" and "Reservation Provisional reservation" in this order to thereby open the "Machine allocation processing" screen shown in Fig. 25 (in which the entry fields are still blank). The operator then enters the machine code (machine CD) and the like which is on the memo in the "machine allocation processing" screen as a search condition.

Next, in steps S142 to S144 in Fig. 21, the system extracts only those vehicles permitting allocation from among all the vehicles conforming to the inputted search condition, and displays the records of these vehicles in the "machine allocation processing" screen as shown in Fig. 25. Here, the processing to extract vehicles permitting allocation is performed using the following procedure, for example. First, in the step S142 in Fig. 21, through reference to the machine number master table 120, vehicles conforming to the inputted search condition (the machine type of the inputted machine code, for example) are extracted, and, based on the latest TMS information (operation information and current positional information), the "probability of return" by a specific settlement date (for example, two days before the desired delivery date) is calculated for each of the vehicles which have been delivered (for example, vehicles for which the scheduled return date has passed and which do not operate at all during the few days closest to the scheduled return date are judged as having a high "probability of return"). Further, in step S143, "return likelihood information" (by when and with what likelihood the vehicle is expected to be returned), which is inputted by the salespeople, is extracted for the vehicles which have been delivered. Then, in step S144, of the vehicles conforming to the above-mentioned search condition, the vehicles which are in stock, and those vehicles which have been delivered but for which the above "probability of return" is high or for which the "return likelihood information" is substantial, are extracted as vehicles that can be allocated. Information on these vehicles is read from the machine number master table 120, the inquiry basic information table 125, the provisional reservation table 151, the delivery table 133, the warehousing table 136, and the like, and such information is then displayed in the "machine allocation processing" screen of Fig. 25.

When the information on the vehicles which can be allocated is displayed in the "machine allocation processing" screen of Fig. 25, next, in steps S145 and S146 in Fig. 22, the operator selects the vehicle which is to be allocated from the vehicles that can be allocated, enters the inquiry number noted some time ago, in the "Inquiry No. input" field in the screen for the vehicle thus selected, and then clicks on "Reservation". Then, in step S147, the system adds information for the management number of this vehicle to the record of this inquiry number in the inquiry basic information table 125. "Reservation" is thus performed for this vehicle.

Thereafter, in step S148, the system judges whether or not a point-to-point transfer is required for the reserved vehicle. If the vehicle stock point and the delivery point of this inquiry are the same place, the judgement is made that a point-to-point transfer is not necessary, but if different, it is judged that a point-to-point transfer will be required. When it is judged that a point-to-point transfer is not necessary, no undertaking is made by the system, rather, the clerk at the branch store arranges an external carrier according to the delivery date. When it is judged that a point-to-point transfer is required, in step S149, the system generates transportation request information, registers this information in the transportation basic table 128 and the transportation details table 129, and relays this transportation request information to the salesperson in charge by electronic mail.

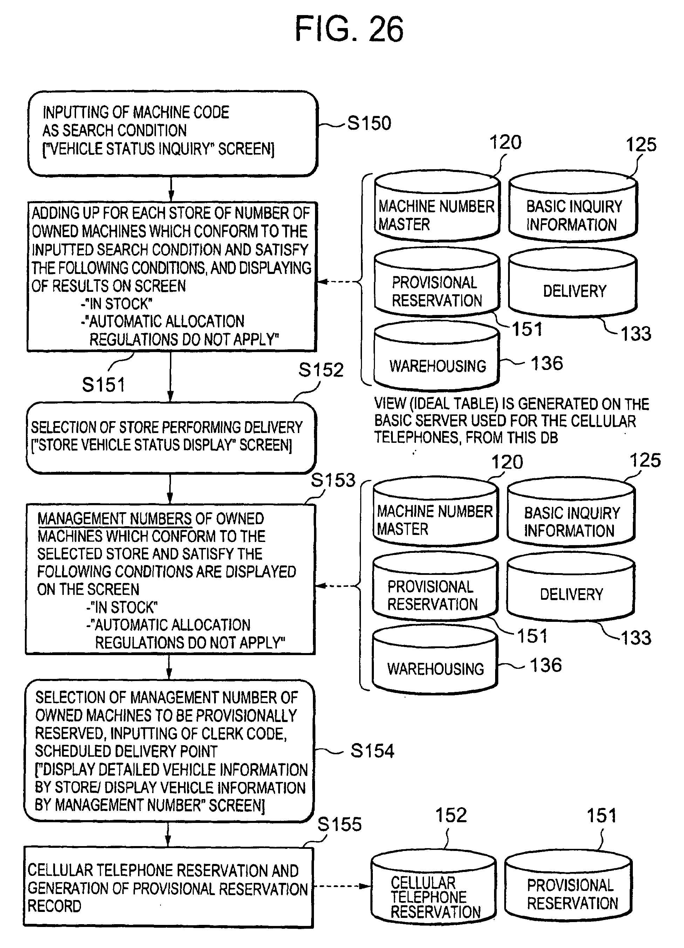

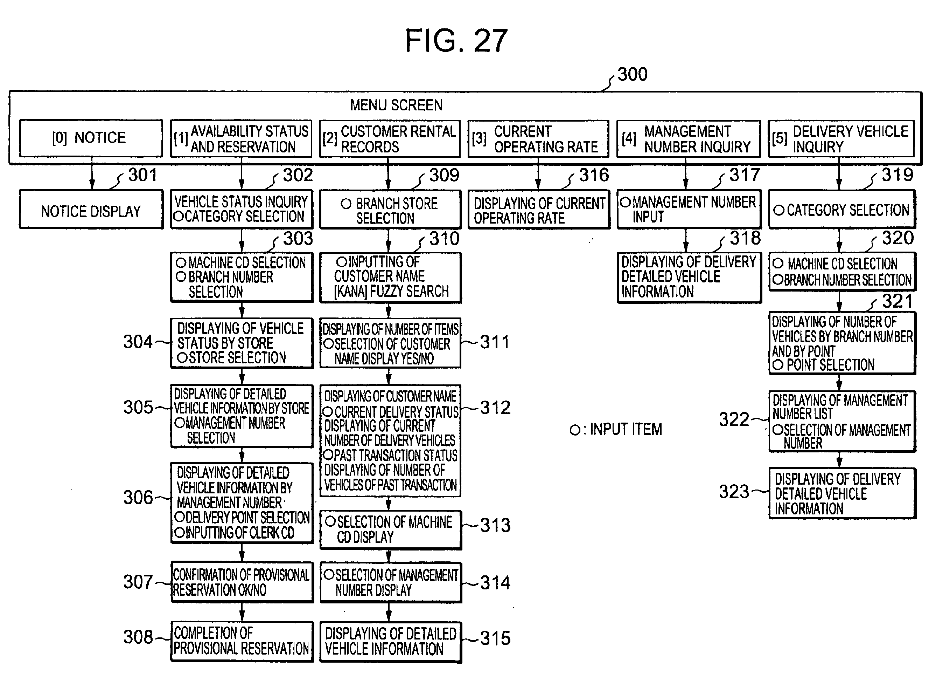

Fig. 26 shows the flow of the "real-time search and provisional reservation by cellular telephone" processing of step S5 in Fig. 3. Fig. 27 shows the types of cellular telephone content screen displayed by the cellular telephone of a salesperson, along with the transitions to these screens. Further, in Fig. 27, those items which have a white circle symbol appended on the left side thereof are items which are entered in the screen.

As described above, the "real-time search and provisional reservation by cellular telephone" processing shown in Fig. 26 is processing which allows the salespeople in external locations to reference the availability of the vehicles and to make a provisional reservation of the vehicles, and so forth, using the cellular telephones.

In order to initiate this processing, the salesperson first causes the cellular telephone to display the menu screen 300 shown in Fig. 27, and then displays the "Vehicle status inquiry" screen 302 by selecting "[1] availability status and reservation" in this menu screen 300. Then, in step S150 in Fig. 26, the salesperson enters a machine code (that is, the machine type), and the like, as the search condition, in the "Vehicle status inquiry" screen 302. Next, in step S151 in Fig. 26, the system references the machine number master table 120, the inquiry basic information table 125, the provisional reservation table 151, the delivery table 133, and the warehousing table 136, and the like, and extracts those vehicles which conform to the inputted search condition, which are in stock and for which automatic allocation regulations do not apply; the system adds up the number of vehicles (number of machines owned) at each branch store, creates the result of this addition in the form of the "Store vehicle status display" screen 304 in Fig. 27, and sends this screen to the cellular telephone so that this screen is displayed thereby.

Next, in step S152 in Fig. 26, the salesperson selects the branch store performing the delivery, on the "Store vehicle status display" screen 304. Then, in step S153 in Fig. 26, the system references the machine number master table 120, the inquiry basic information table 125, the provisional reservation table 151, the delivery table 133, and the warehousing table 136, and the like, and extracts those vehicles which are owned by the selected branch store, which are in stock and for which automatic allocation regulations do not apply; the system creates the list of management numbers for these vehicles in the form of the "Store vehicle detailed information display" screen 305 in Fig. 27, and sends this screen to the cellular telephone so that this screen is displayed thereby.

Next, in step S154 in Fig. 26, the salesperson selects the management number of the vehicle which is to be provisionally reserved, on the "Store vehicle status information display" screen 305. Then, the "Management number vehicle detailed information display" screen 306 in Fig. 27 for the vehicle which has the management number selected appears, and hence the salesperson completes the inputting by entering the clerk code, the scheduled delivery point, and the like, in the screen 306. Then, because the "Provisional reservation confirmation" screen 307 in Fig. 27 appears, the salesperson selects "OK" on this screen 307. Next, based on the items thus inputted, the system creates a cellular telephone reservation record and provisional reservation record and registers same in the cellular telephone reservation table 152 and the provisional reservation table 151.

Thus, the contents of the provisional reservation made by cellular telephone (such as the vehicle management number, machine type, machine number, stock point, clerk, for example) are displayed in the "Cellular telephone provisional reservation" table of the already described "Newly acquired information" screen in Fig. 23 when the latter is opened. At the branch store, the operator views this "Cellular telephone provisional reservation" table and performs the 'Inquiry creation (when automatic allocation regulations do not apply) "Reservation"' processing of step S6 in Fig. 3 for each provisional reservation listed in this table.

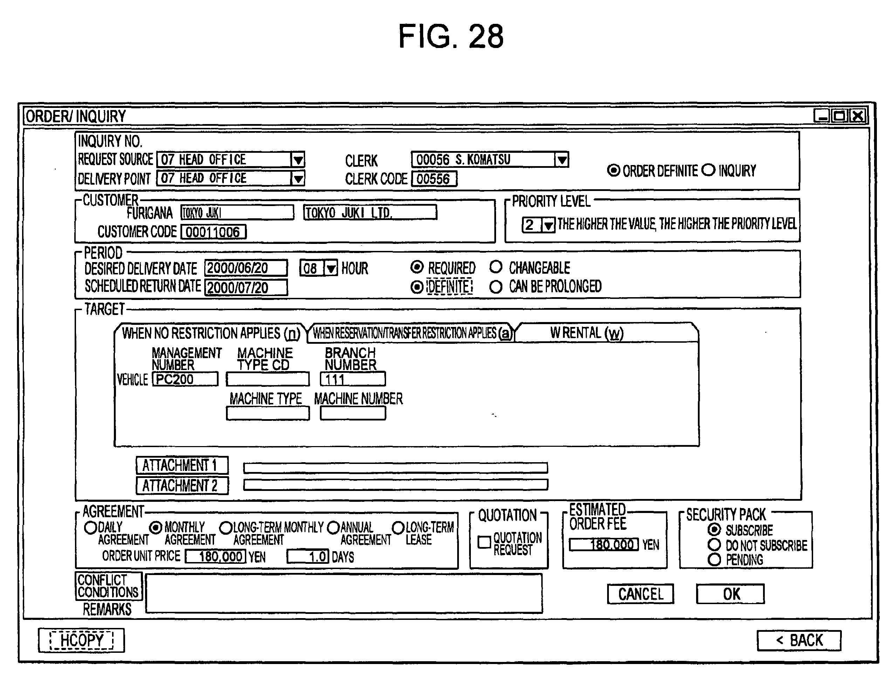

This 'Inquiry creation (when automatic allocation regulations do not apply) "Reservation"' processing is basically substantially the same as 'Inquiry creation (when automatic allocation regulations apply) "Provisional reservation"' described through reference to Figs. 18 to 20, the difference being that, with 'Inquiry creation (when automatic allocation regulations do not apply) "Reservation"' processing, "Reservation" is confirmed for a specific vehicle. In other words, in this processing, as shown in Fig. 28, the operator enters the management number of the vehicle which is to be provisionally reserved in the "No restriction applies" field of the "Target" field, on the "Order and inquiry" screen, and then, after also inputting other required items, clicks on "OK". Then, in so doing, similarly to the "allocation processing (in the case of a machine type having automatic allocation regulation)" step S147 already described through reference to Figs. 21 to 22, and to subsequent steps, the vehicle having this management number is automatically allocated by the system, and the contents of the inquiry are registered in the inquiry basic information table 125 and the inquiry details table 126. It is judged whether or not a point-to-point transfer is required for this vehicle, and, if required, transportation request information is generated, registered in the transportation basic information table 128 and the transportation details table 129, and relayed to the clerk by electronic mail.

As described hereinabove, when "reservation" of a rental of a specific vehicle is confirmed, next, as already described, the "Point transfer request" processing of step S7 in Fig. 3 is performed.

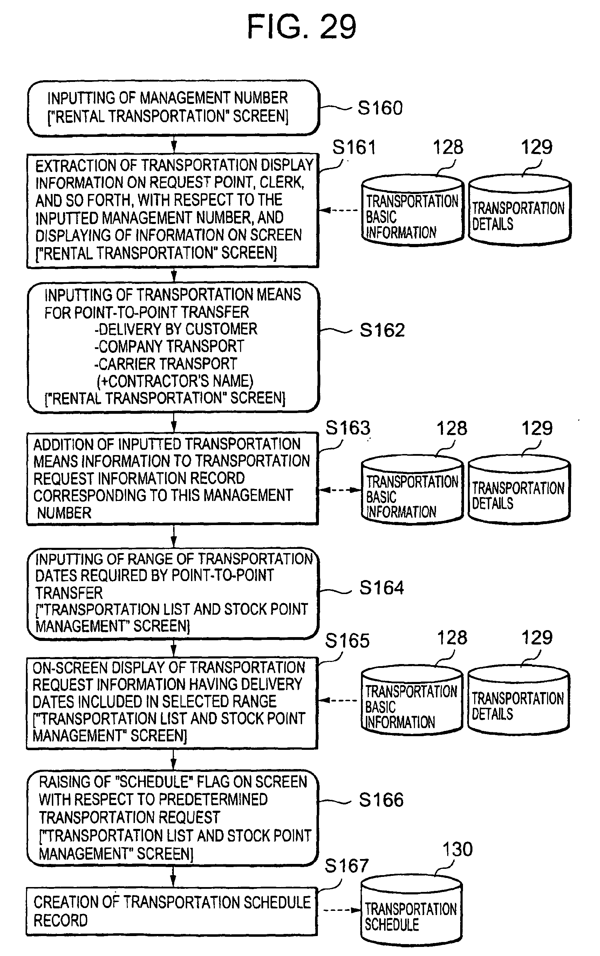

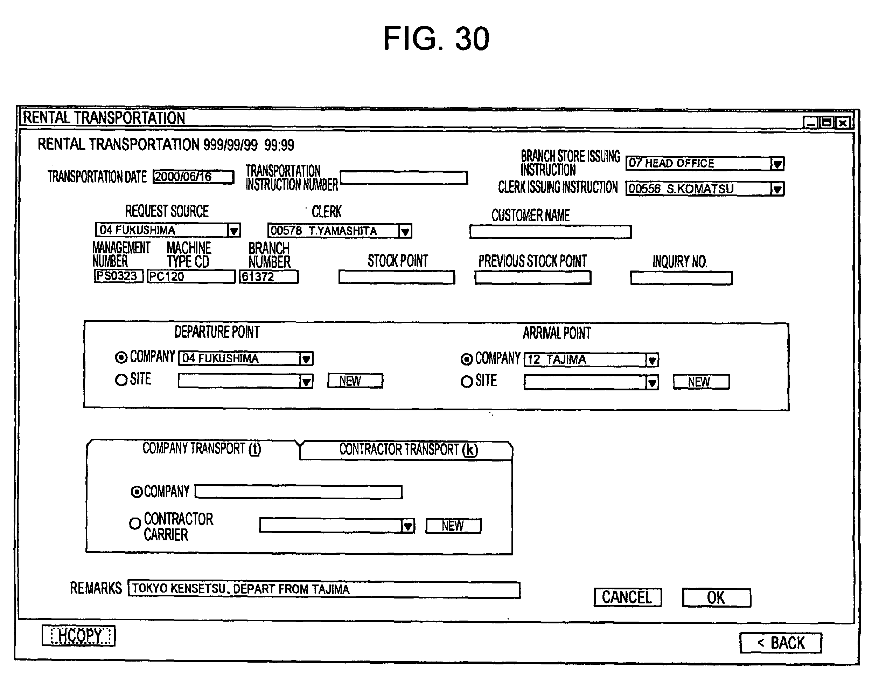

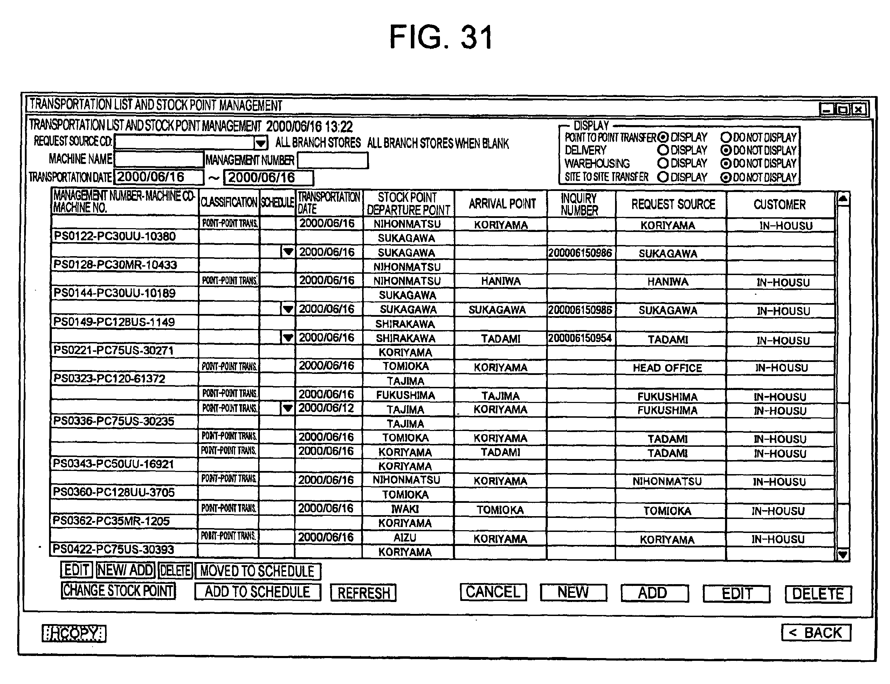

Fig. 29 shows the flow of this "Point transfer request" processing, and Figs. 30 and 31 show user interface screens used in this processing.

First, upon clicking on "Allocation Transportation Transportation scheme" and "Transportation list and Stock point management" in this order on the menu screen shown in Fig. 24 on the branch store computer terminal, and then clicking on "Rental transportation" (not illustrated), the "Rental transportation" screen shown in Fig. 30 is displayed. First, in step S160 in Fig. 2, the operator enters the management number of the target vehicle in the "Rental transportation" screen. Then, in step S161, the system reads out the contents of the transportation instruction information for the inputted management number (such as the request source, the clerk, for example) from the transportation basic information table 128 and the transportation details table 129 and displays the contents in the "Rental transportation" screen as shown in Fig. 30. Next, in step S162 in Fig. 29, the operator enters the point-to-point transfer transportation means (such as delivery by the customer, company transport, carrier transport, for example), in the "Rental transportation" screen, and clicks on "OK". Then, in step S163, the system adds the inputted transportation means information to the transportation request information record which has the corresponding management number in the transportation basic information table 128 and the transportation details table 129.

Next, at the head office, upon clicking on "Allocation Transportation Transportation scheme" and "Transportation list and Stock point management" in this order on the menu screen shown in Fig. 24, the "Transportation list and Stock point management" screen shown in Fig. 31 is displayed. First, in step S164 in Fig. 29, the operator enters the transportation date range required for the point-to-point transfer in the "Transportation list and Stock point management" screen. Then, in step S165, the system reads out the contents of all the transportation request information which has the transportation dates included in the inputted range from the transportation basic information table 128 and the transportation details table 129 and displays the contents in the "Transportation list and stock point management" screen as shown in Fig. 31.

Next, in step S166, the operator selects transportation request information for scheduling from the transportation request information displayed in the "Transportation list and stock point management" screen, raises a "schedule" flag in the selected transportation request information screen, and clicks on "Add to schedule". Then, in step S167, the system creates the transportation schedule record with respect to the transportation request information for which the "schedule" flag is raised and registers this information in the transportation schedule table 130. System-based scheduling with respect to this transportation request information is thus permitted.

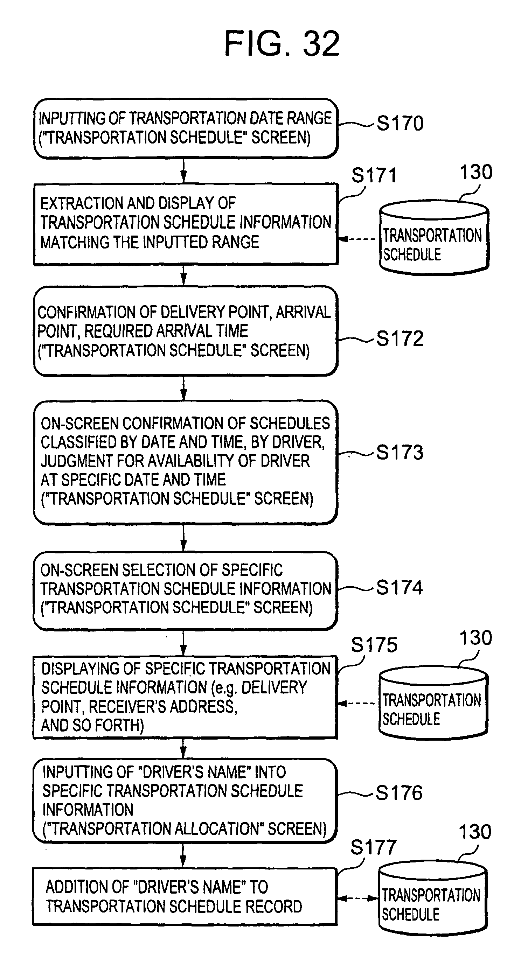

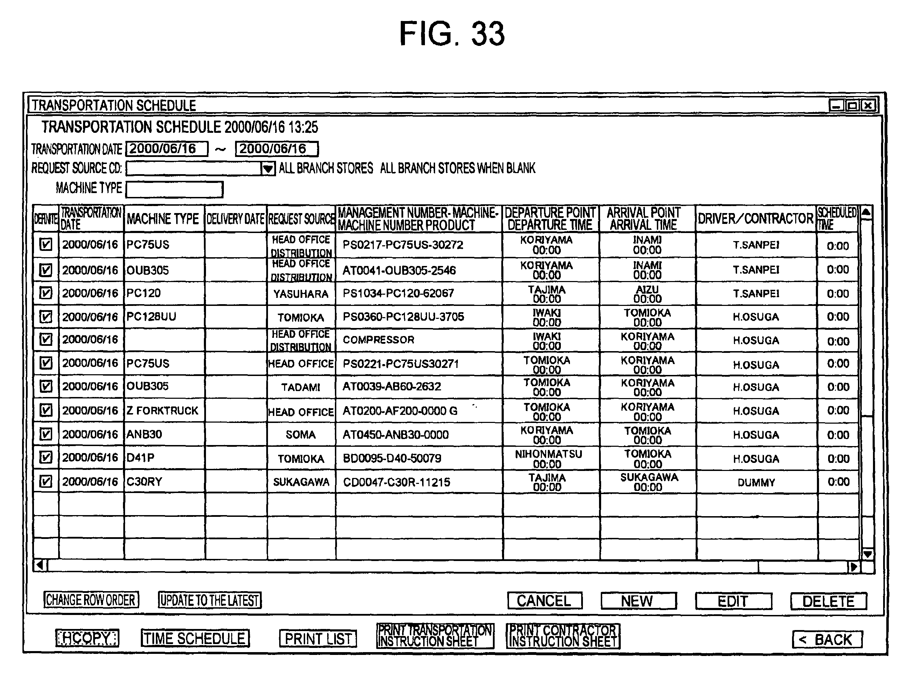

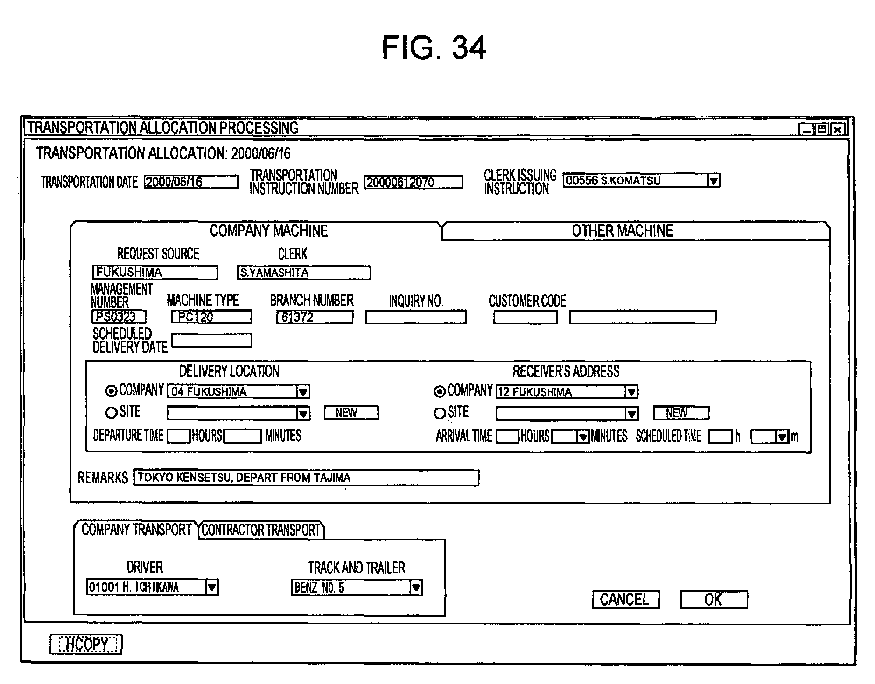

Fig. 32 shows the flow of "transportation scheduling (at the time of a point-to-point transfer)" processing of step S8 in Fig. 4. Figs. 33 and 34 show user interface screens used in this processing.

This processing is performed at head office as shown in Fig. 4. First, in step S170 in Fig. 32, when the head office operator clicks on "Allocation Transportation Transportation scheme" and "Transportation schedule" in this order on the menu screen shown in Fig. 24 on a computer terminal, the "Transportation schedule" screen shown in Fig. 33 is displayed (with the entry fields blank), whereupon the operator enters the transportation date range in this "Transportation schedule" screen. Next, in step S171, the system extracts transportation schedule records that fit the inputted range from the transportation schedule table 130, and displays these records as shown in Fig. 33.

Next, in step S172, the operator confirms the departure location (delivery point), arrival location, arrival date and time, and so forth, of each transportation schedule in the "Transportation schedule" screen, and, then, in step S173, confirms the date and time and the driver transportation schedules, and makes a judgement of driver availability on a specific date and time. Next, in step S174, the operator selects a specific transportation schedule from the "Transportation schedule" screen, and then clicks on "Edit". Next, in step S175, the system reads out the various information of the selected transportation schedule (such as the delivery location, receiver's address, for example) from the transportation schedule table 130, and then displays this information in the "Transportation allocation processing" screen, as shown in Fig. 34.

Next, in step S176, the operator enters the "Driver name" and the like with respect to this transportation schedule, in the "Transportation allocation processing" screen, and clicks on "OK". Then, in step S177, the system adds the inputted "Driver name" and the like to the transportation schedule record of the transportation schedule table 130.

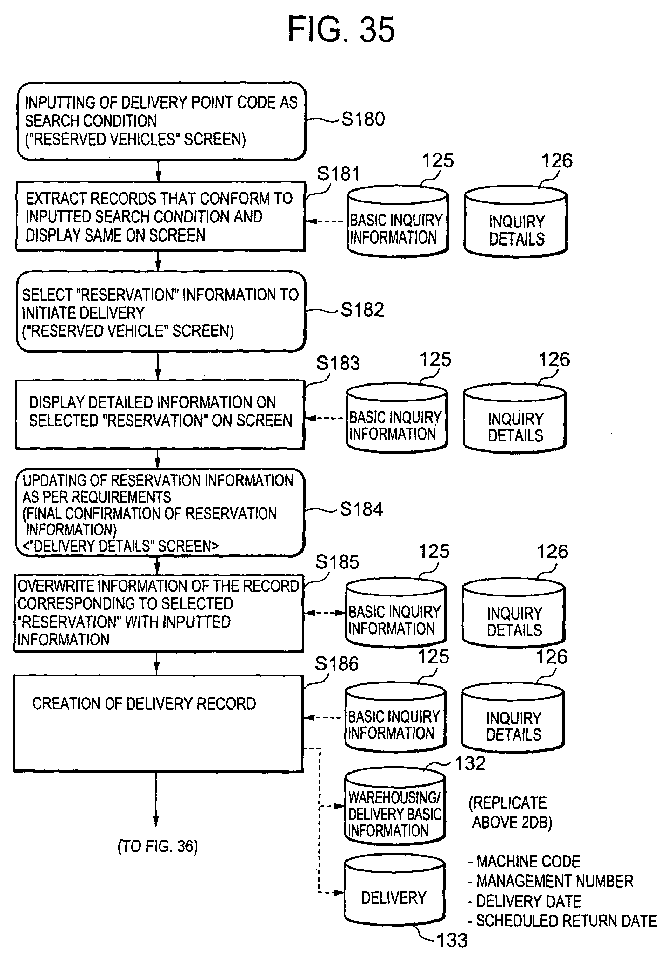

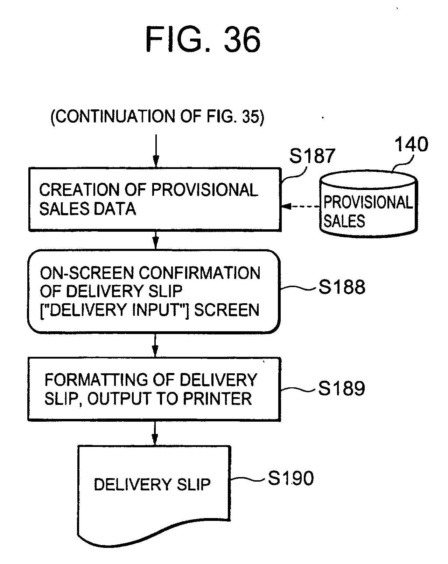

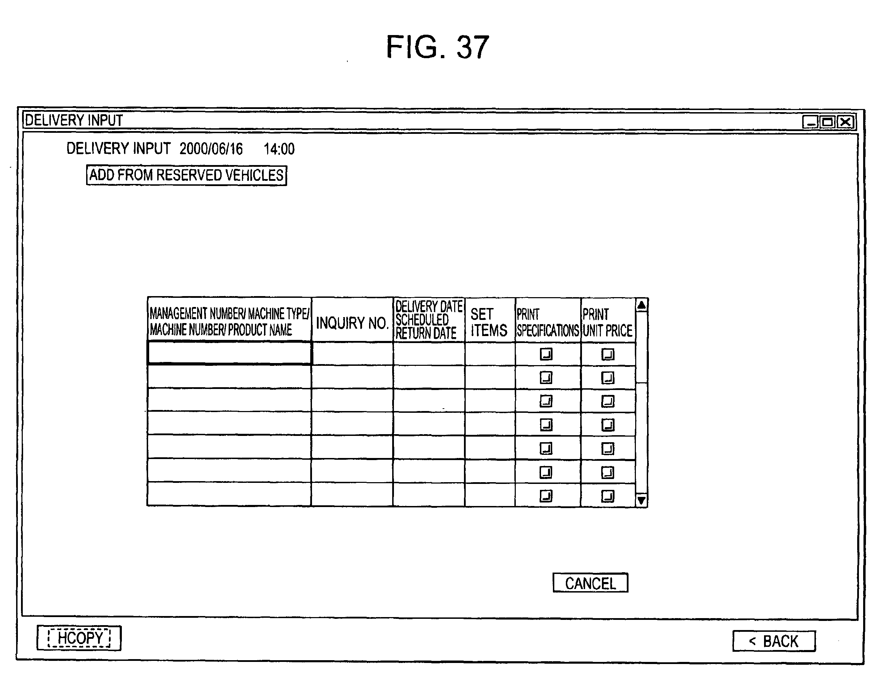

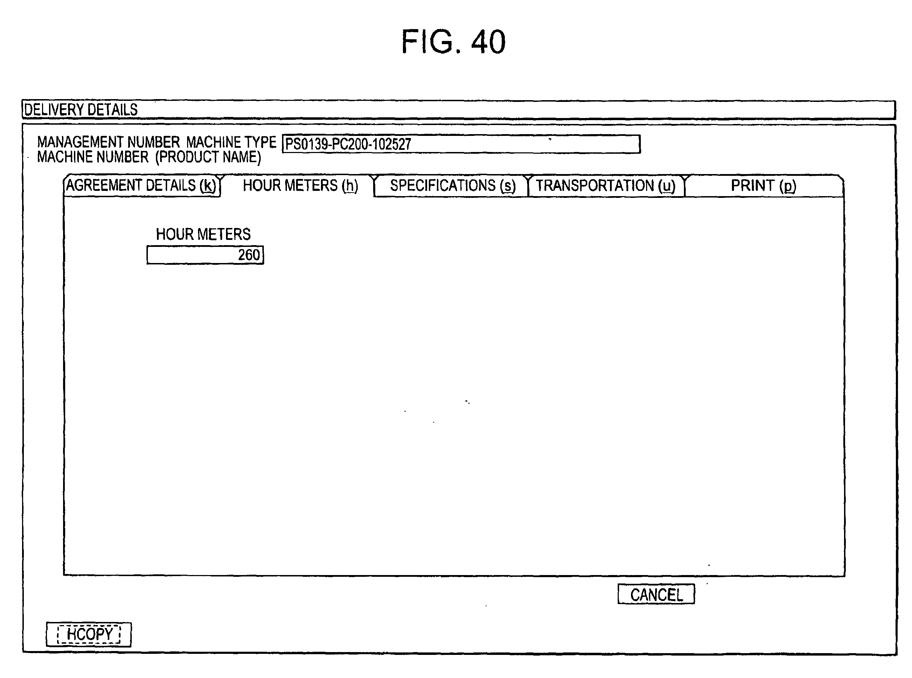

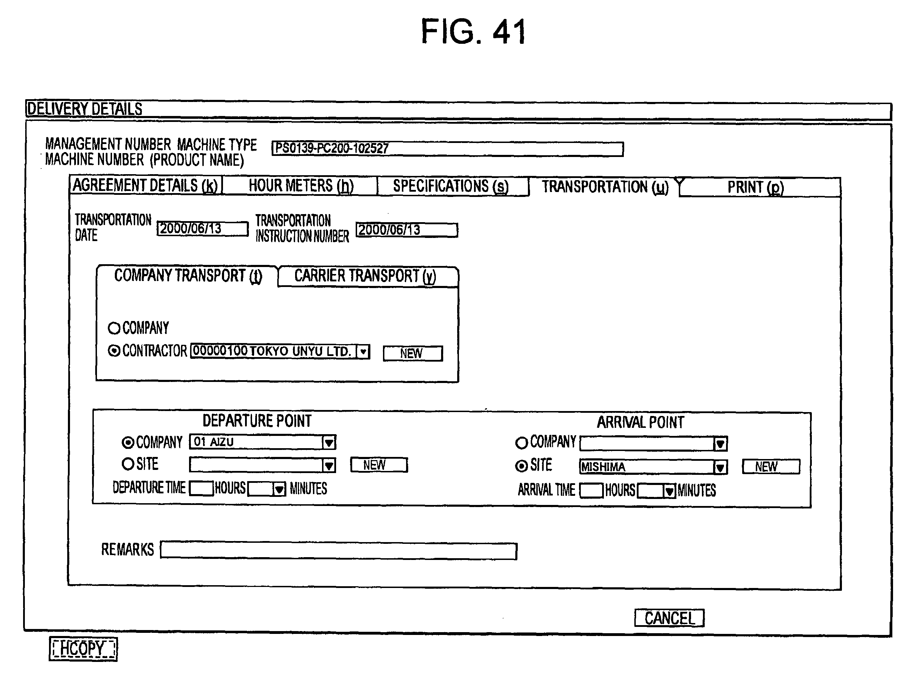

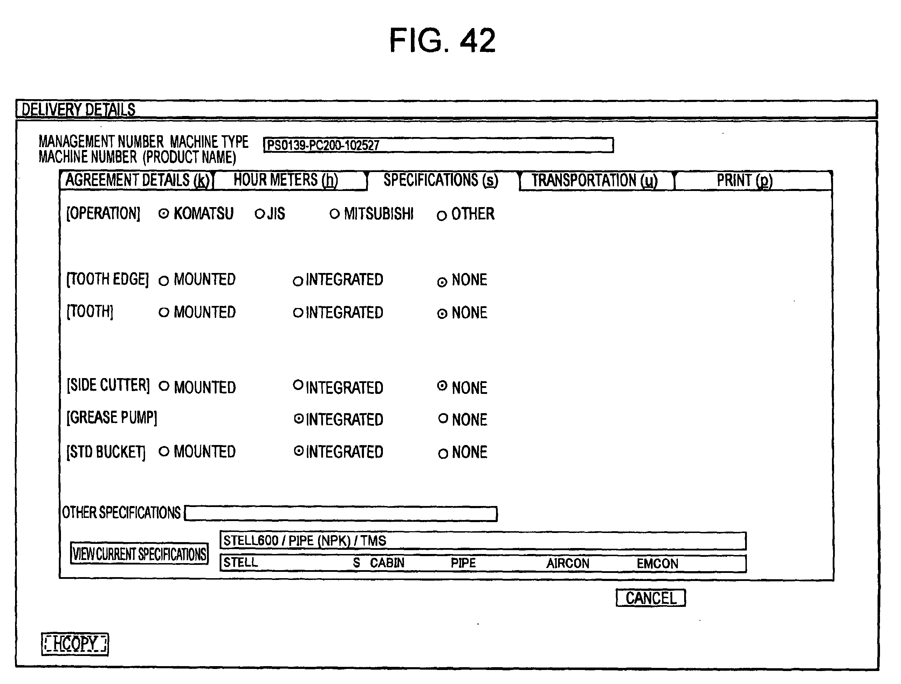

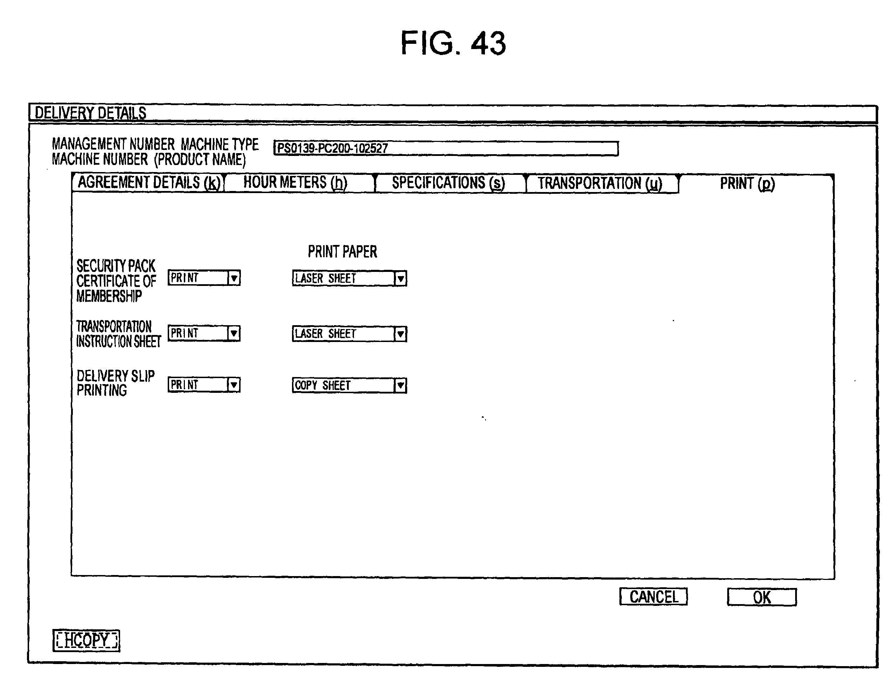

Figs. 35 and 36 show the flow of the "delivery (at the time of a point-to-point transfer) processing of step S10 in Fig. 4. Figs. 37 to 44 show user interface screens used in this processing.

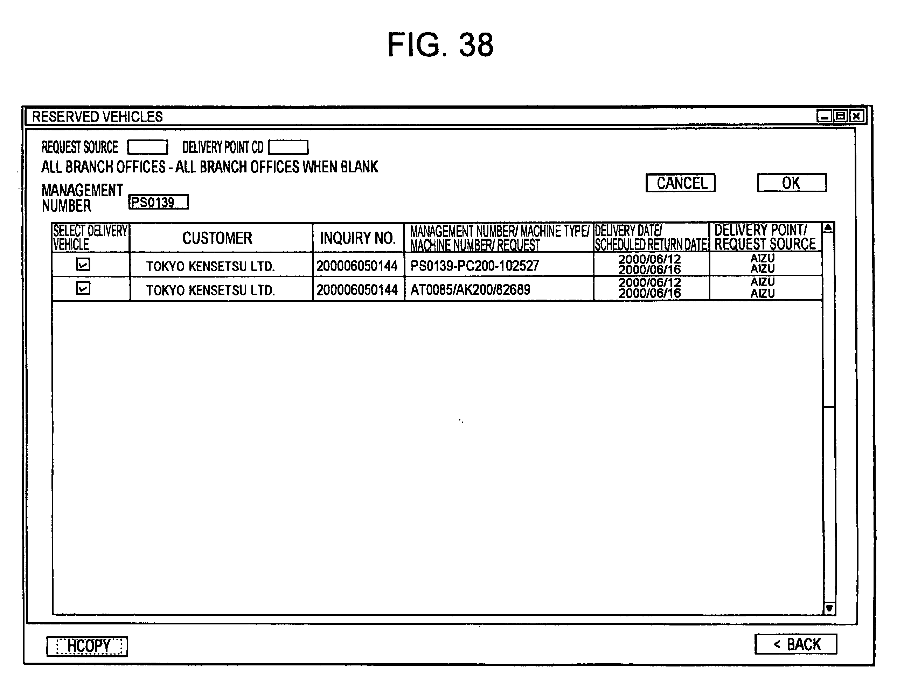

In step S180 of Fig. 35, the branch store operator clicks on "Order acceptance/inquiry Delivery Warehousing" and "Delivery input" in this order in the menu screen shown in Fig. 16 of the computer terminal, whereby the delivery input screen shown in Fig. 37 is displayed, and clicks on "Add from reserved vehicles" in this screen, whereby the "Reserved vehicles" screen shown in Fig. 38 is displayed (with the entry fields blank), and then enters the delivery point code (delivery point CD) as the search condition in this "Reserved vehicles" screen. Then, in step S181, the system extracts the reservation (inquiry) records which conform to the inputted search condition from the inquiry basic information table 125 and inquiry details table 126, and displays these records as shown in Fig. 38.

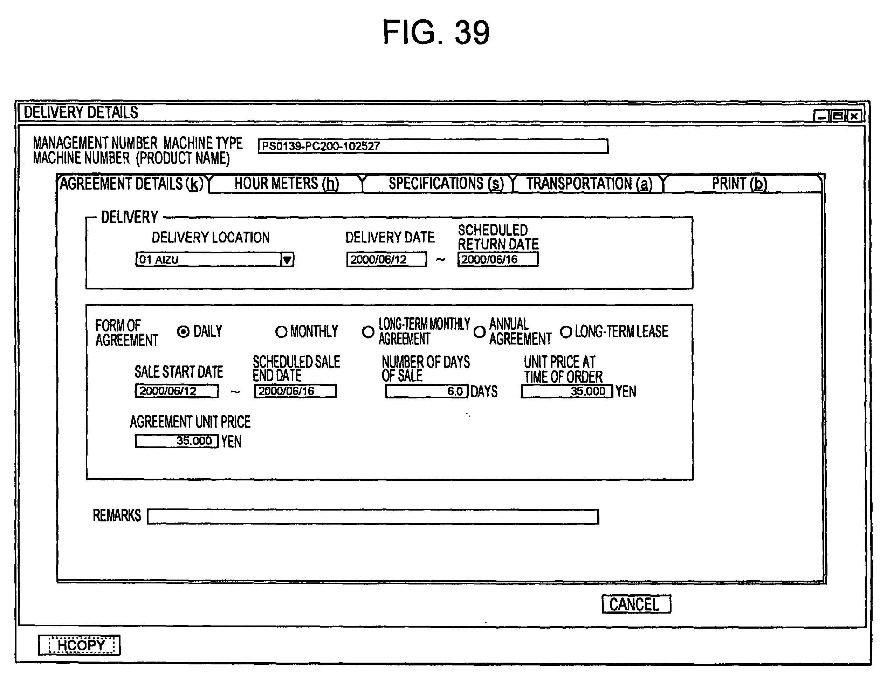

Next, in step S182, the operator selects the reservation for which delivery is desired, on the "Reserved vehicles" screen, and clicks on "OK". Then, in step S182, the system reads out detailed information of the selected reservation from the inquiry basic information table 125 and inquiry details table 126, and displays this information in the "Delivery details" screens as shown in Figs. 39 to 43.

Next, in step S184, the operator confirms the detailed information of the reservation in the "Delivery details" screens of Figs. 39 to 43 and, depending on requirements, updates this detailed information by inputting new information therein. Then, in step S185, the system adds the inputted information to the record of this reservation in the inquiry basic information table 125 and inquiry details table 126, and, in step S186, creates a delivery record on the basis of the record of this reservation in the inquiry basic information table 125 and inquiry details table 126, and registers this delivery record in the warehousing/delivery basic information table 132 and the delivery table 133. Step S187 in Fig. 36 then follows, whereupon the system creates the provisional sales data and registers this data in the provisional sales table 140.

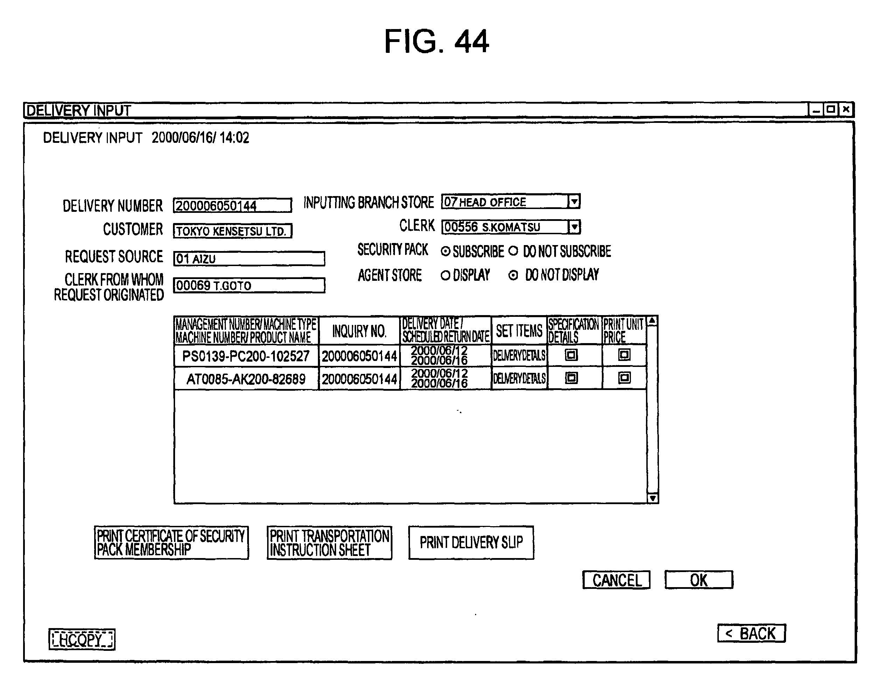

Then, in step S188, when the operator clicks on "Back" on the "Delivery details" screens of Figs 39 to 43 to return to the "Reserved vehicles" screen of Fig. 38, and clicks on "Back" on the "Reserved vehicles" screen to return to the "Delivery input" screen, because the contents of the delivery record are displayed in the "Delivery input" screen as shown in Fig. 44, the operator confirms these contents and then clicks on "Print slip". Next, in steps S189 to S190, the system prints the delivery slip on the basis of this delivery record.

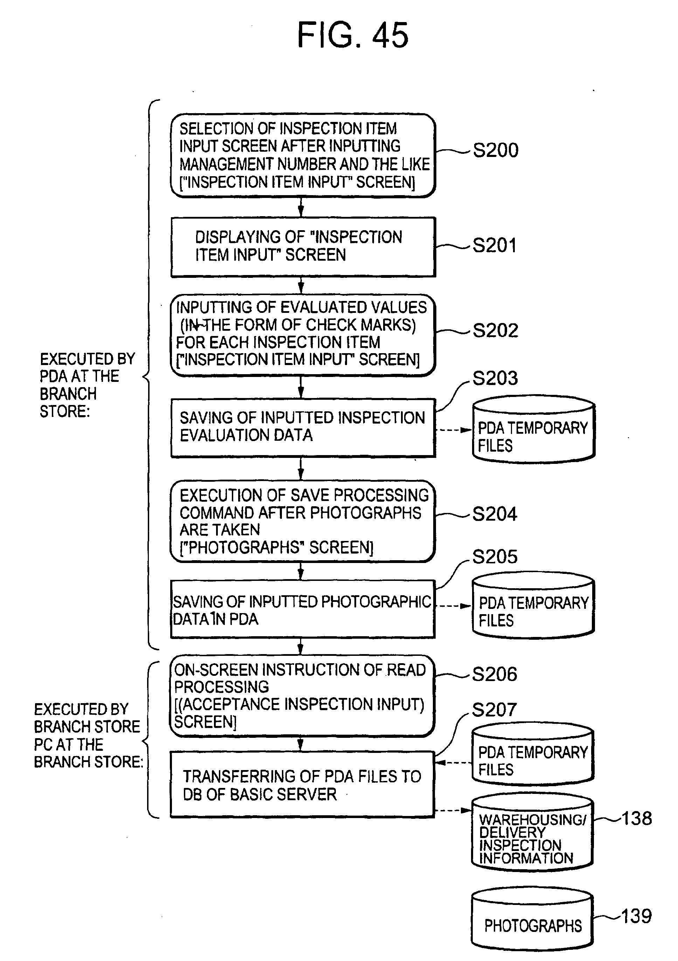

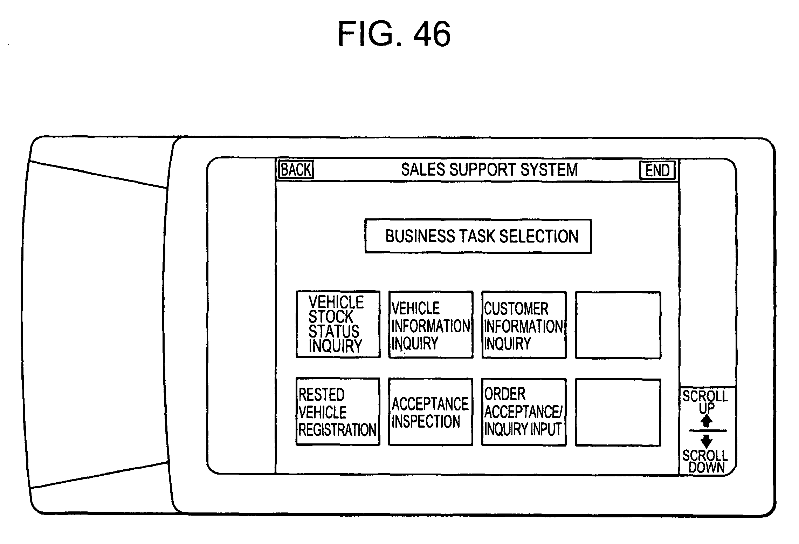

Fig. 45 shows the flow of "inputting of image data and inspection information" processing at the time of delivery and warehousing, of steps S11 and S12 in Fig. 4 respectively. Figs. 46 to 50 show PDA user interface screens used in this processing.

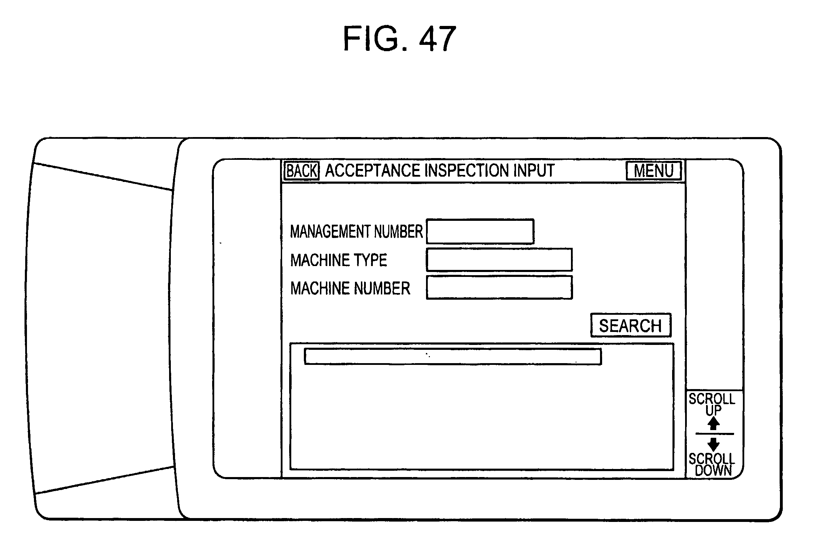

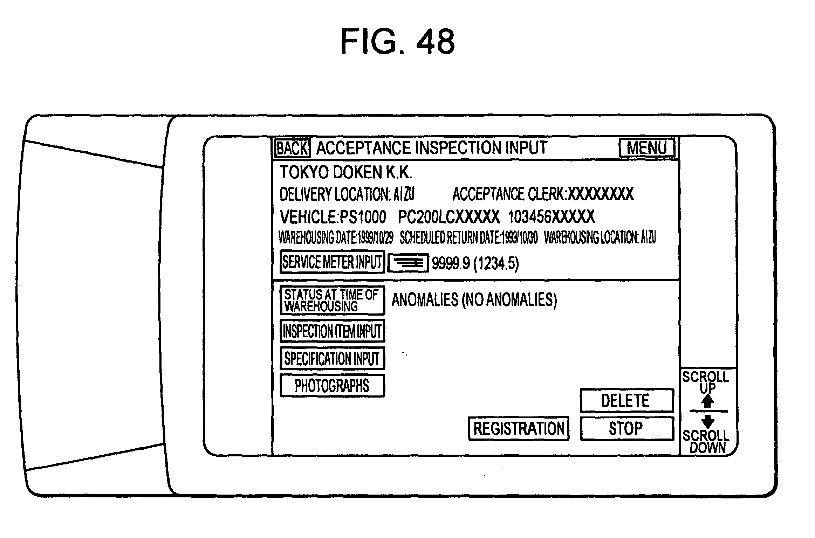

First, the branch store inspector takes a PDA equipped with a digital camera to the site of the vehicle to be inspected, and, in step S200 of Fig. 45, runs the business task application of the PDA, opens the menu screen shown in Fig. 46, selects "Acceptance inspection" in the menu screen, opens the "Acceptance inspection input" screen shown in Fig. 47, enters the management number (or the machine type and machine number) of the vehicle to be inspected in the "Acceptance inspection input" screen, switches the "Acceptance inspection input" screen to the content shown in Fig. 48, and then selects "Inspection item input" in the "Acceptance inspection input" screen of Fig. 48.

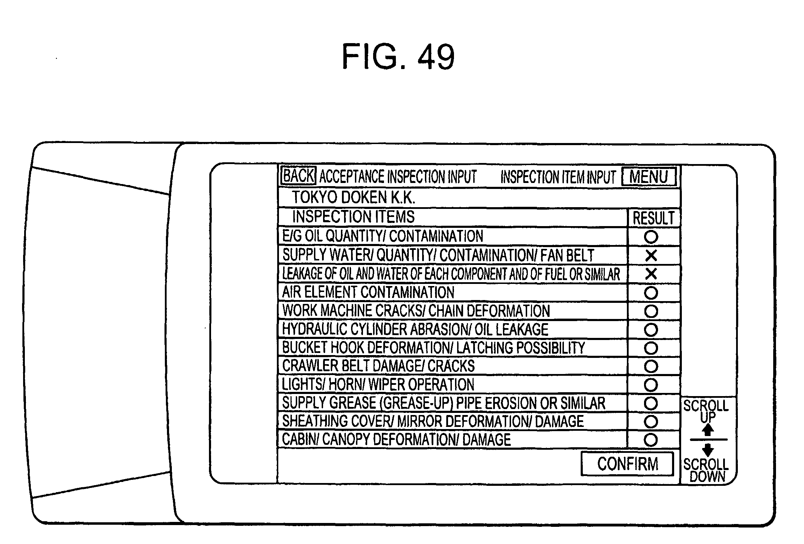

Thereupon, in step S201, the PDA then displays the "Inspection item input" screen shown in Fig. 49, and hence, in step S202, the inspector inspects the vehicle with respect to each inspection item, enters the evaluation result of each inspection item in the "Inspection item input" screen with either a circle or a cross, and selects "Confirm". Then, in step 203, the PDA stores evaluation data for inputted inspection results as a PDA temporary file.

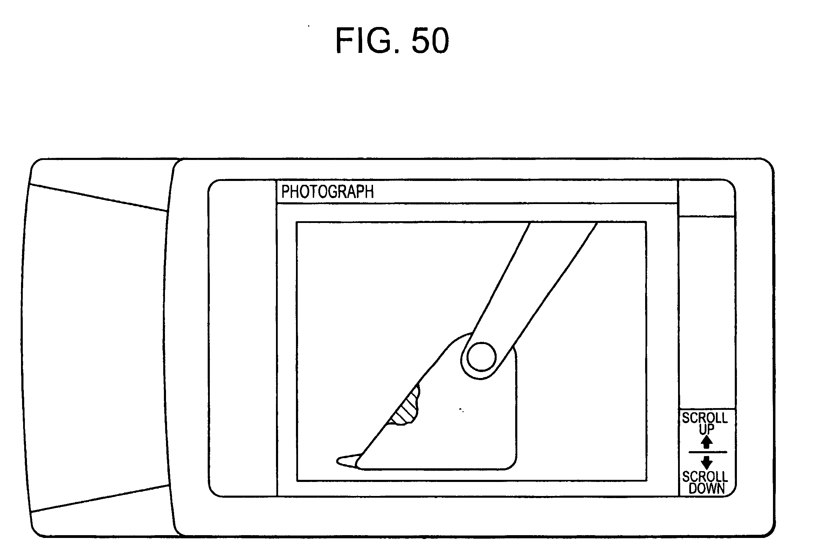

Next, in step S204, the inspector opens the photograph screen shown in Fig. 50 by reverting the PDA screen to the "Acceptance inspection input" screen of Fig. 48 and selecting "Photographs", and uses the digital camera accompanying the PDA to take photographs of the important points of the vehicle being inspected. Thereupon, in step S205, the PDA displays the digital photographs which have been taken on the photograph screen as shown in Fig. 50, and stores these photographs as temporary files in the PDA.

When the inspection inputs to the PDA are complete, in step S206, the inspector connects the PDA to a branch store computer terminal and, by reverting the PDA screen to the "Acceptance inspection input" screen in Fig. 48 and selecting "Register", the evaluation data of the inspection results and photographic data, which are stored as PDA temporary files, are transferred to the branch store computer terminal. Then, in step S207, the system creates an inspection information record on the basis of the evaluation data of the inspection results, registers this inspection information record in the warehousing/delivery inspection information table 138 and registers the photographic data in the photobase 139 in a form in which this photographic data is linked to the inspection information record.

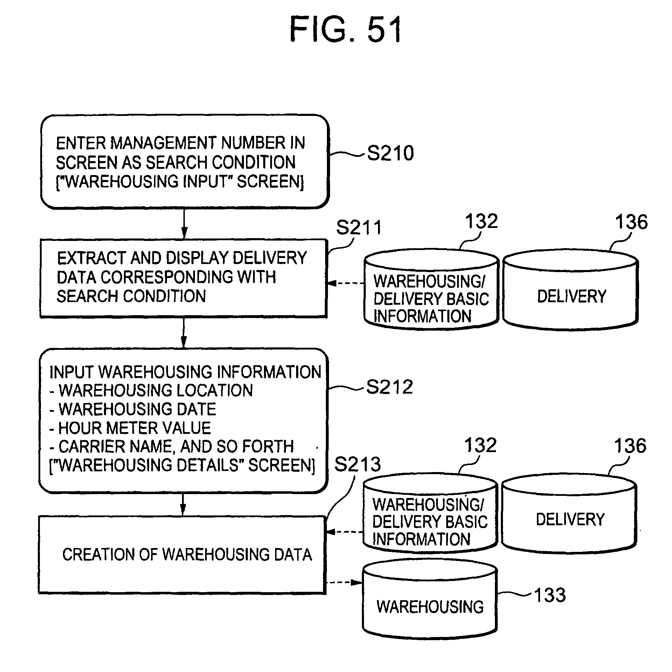

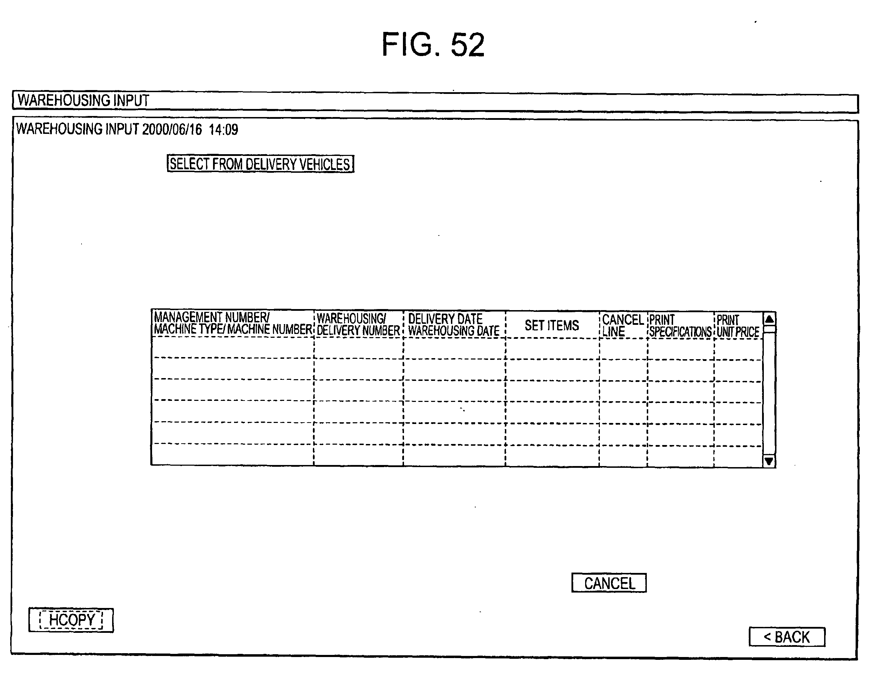

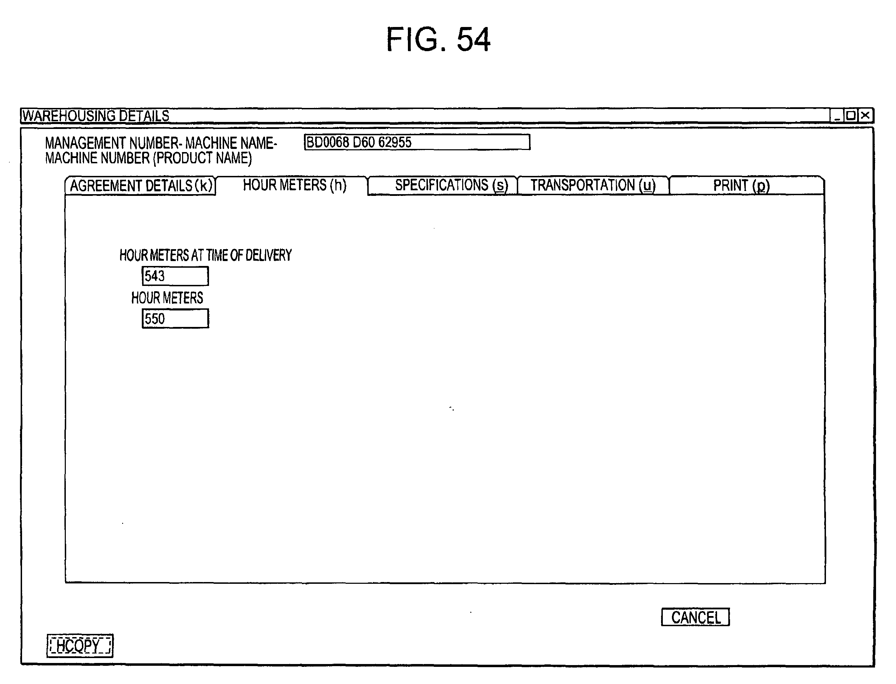

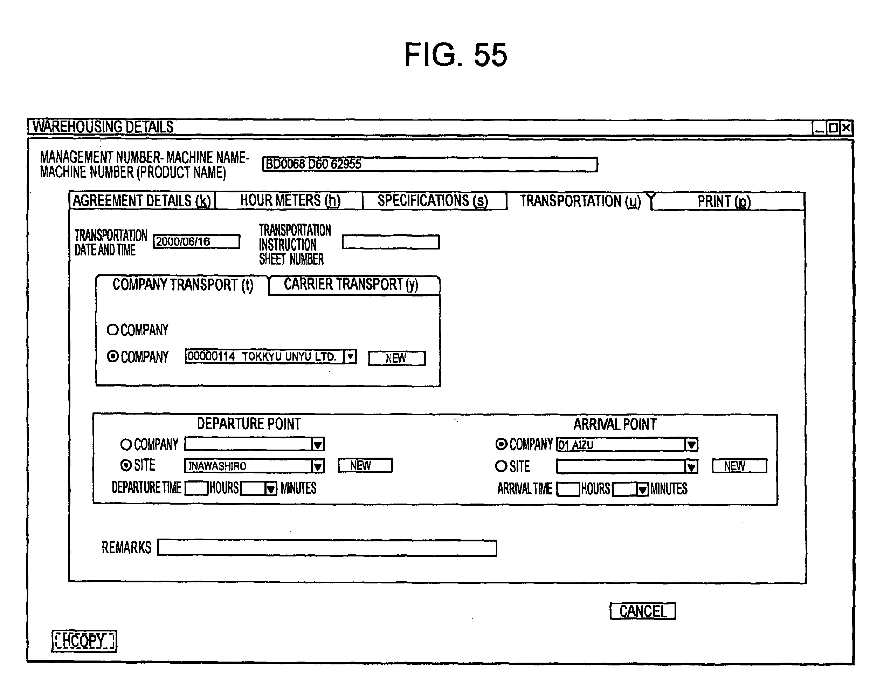

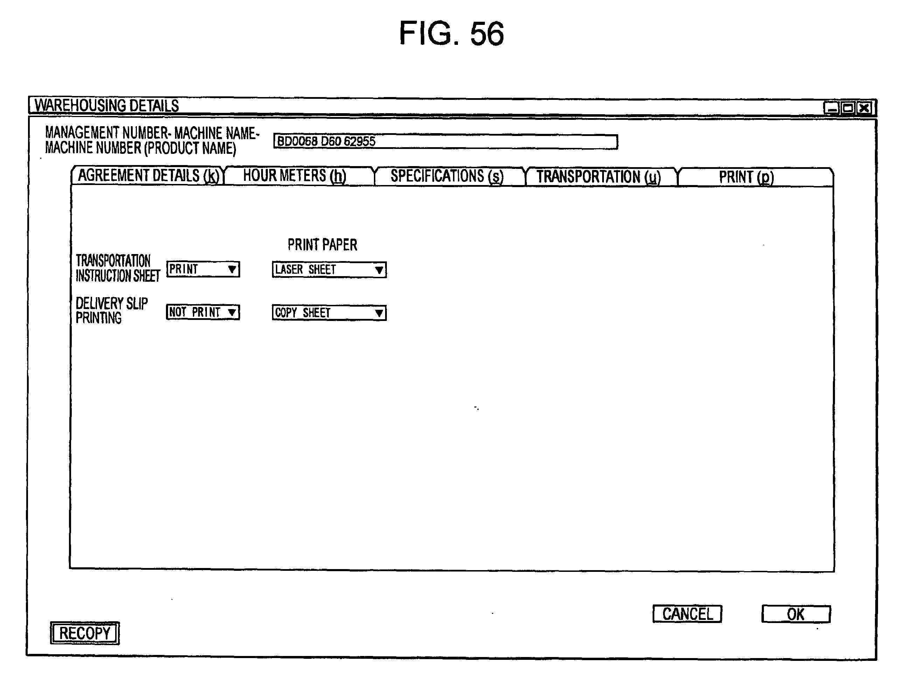

Fig. 51 shows the flow of the "warehousing" processing of step S13 in Fig. 4. Figs. 52 to 57 show user interface screens which are used in this processing.

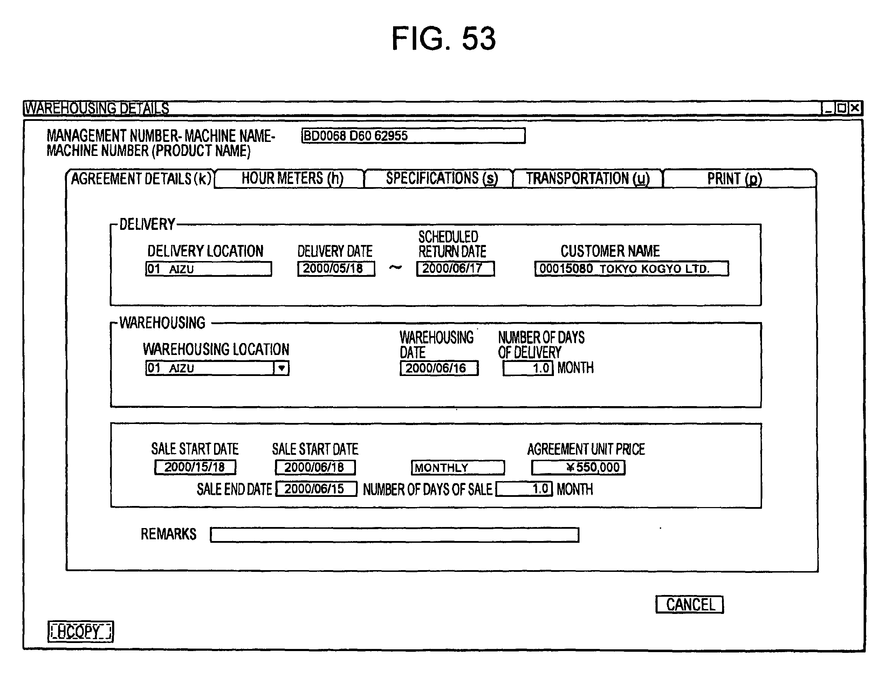

In step S210 in Fig. 51, the branch store operator clicks on "Order acceptance/inquiry Delivery Warehousing" and "Warehousing input" in this order in the menu screen shown in Fig. 16 of the computer terminal, whereby the "Warehousing input" screen shown in Fig. 52 is displayed, and enters the "management number" of the vehicle to be warehoused as the search condition in this screen. Then, in step S211, the system extracts delivery records that conform to the inputted search condition from the warehousing/delivery basic information table 132 and the delivery table 136, and displays these records in the "Warehousing details" screen as shown in Figs. 53 to 56.

Next, in step S212, the operator enters warehousing information (such as the warehousing location, warehousing date, hour meter value, carrier name, for example) in the "Warehousing details" screens of Figs. 53 to 55. Then, in step S213, the system creates warehousing data on the basis of the above-mentioned delivery record, which is read out from the warehousing/delivery basic information table 132 and the delivery table 136, as well as on the basis of the warehousing information entered in the "Warehousing details" screens, and registers this warehousing data in the warehousing table 133.

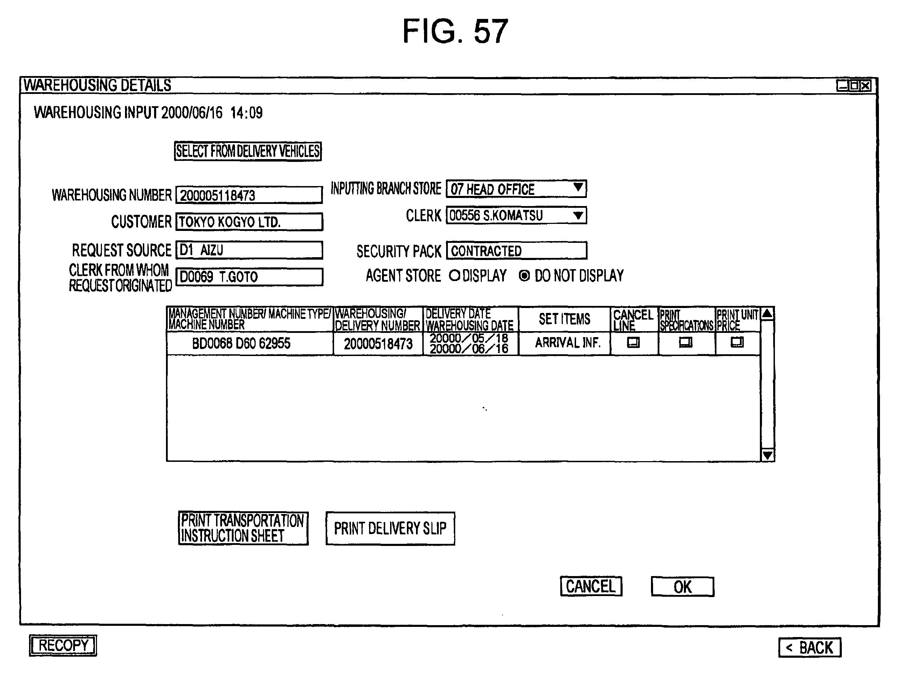

Thereafter, when the operator returns to the "Warehousing input" screen, the contents of the above warehousing record are displayed in the "Warehousing input" screen, as shown in Fig. 57, and hence, upon confirming these contents and clicking on "Print slip", a warehousing slip is printed on the basis of this warehousing record.

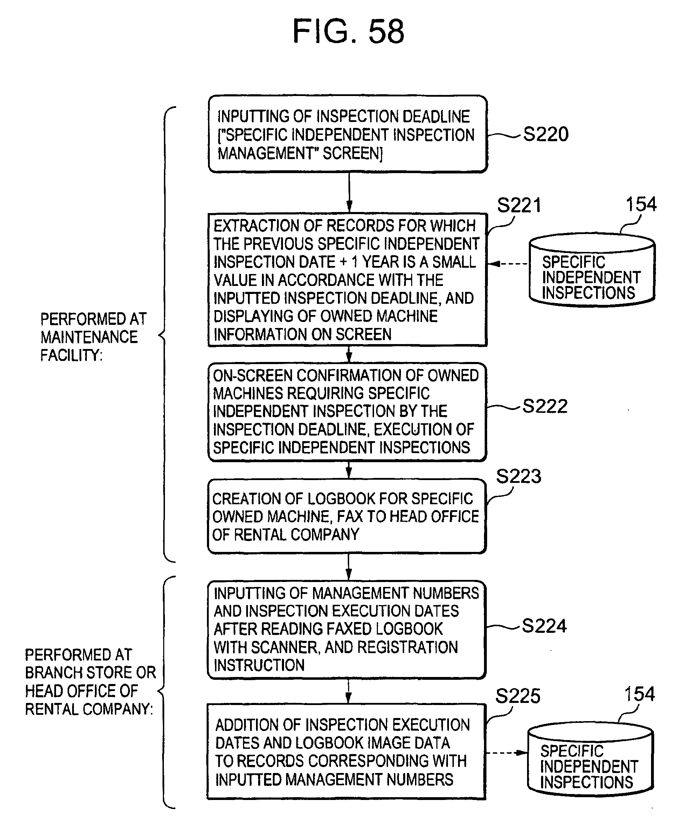

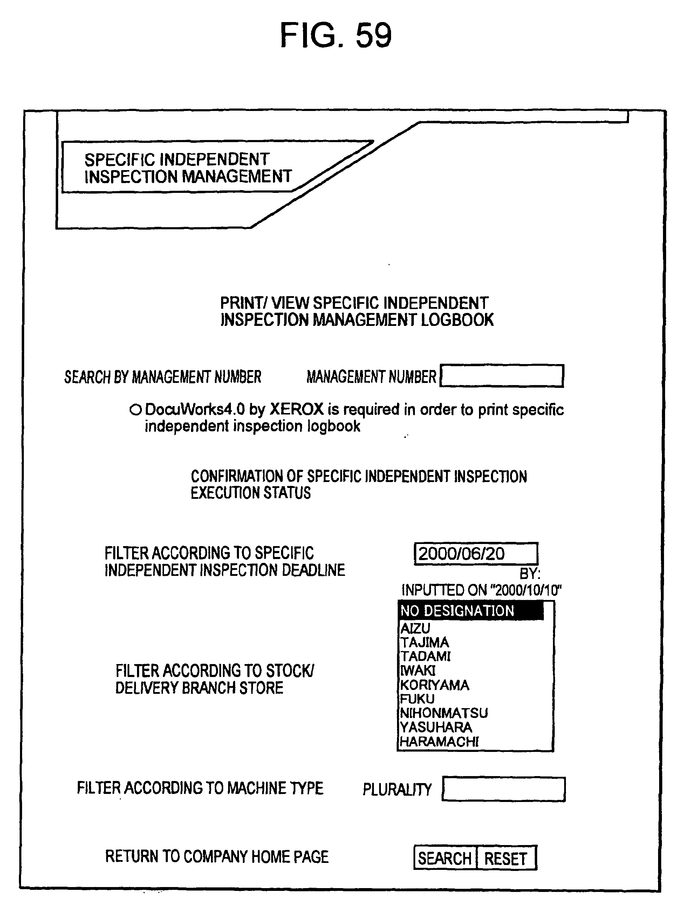

Fig. 58 shows the flow of the "specific independent inspection" processing of step S14 in Fig. 5. Figs. 59 to 62 show user interface screens used in this processing.

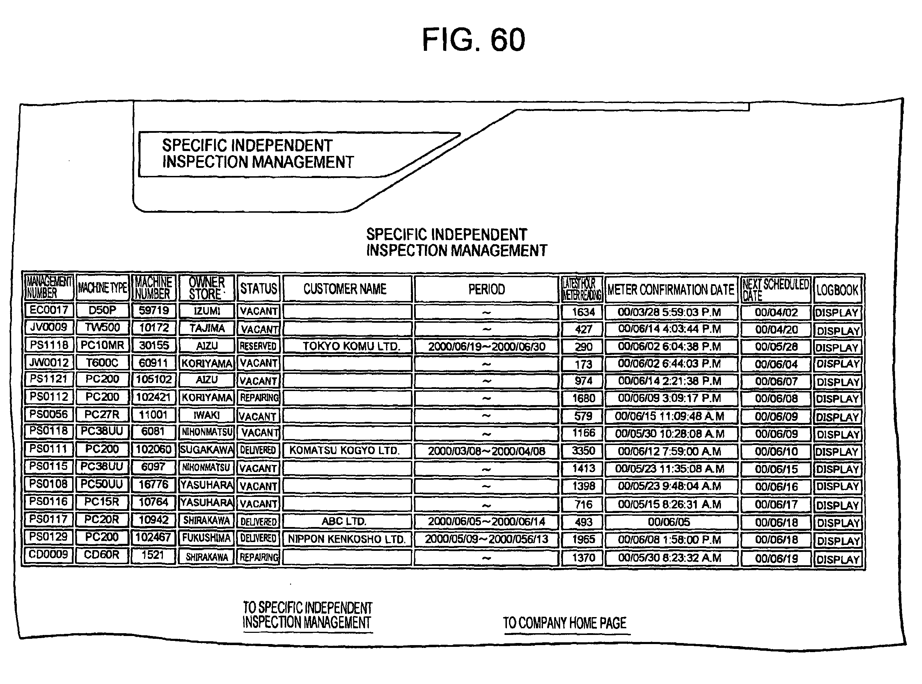

At a predetermined external maintenance facility that performs specific independent inspections and maintenance, and so forth, for the vehicles (naturally, if this maintenance can be carried out within the rental company, the branch stores, head office, service plant, and the like, of the rental company, can also be used), first of all, in step S220 shown in Fig. 58, the operator displays the "Specific independent inspection management" screen shown in Fig. 59 on the computer terminal, enters the inspection deadline in this screen, and clicks on "Search". Then, in step S221, the system retrieves specific independent inspection records for those vehicles requiring a specific independent inspection by the inputted inspection deadline (that is, on dates one year after the previous specific independent inspection date which are before the inputted inspection deadline) from the specific independent inspection table 154 and displays these records in the "Specific independent inspection management" screen as shown in Fig. 60.

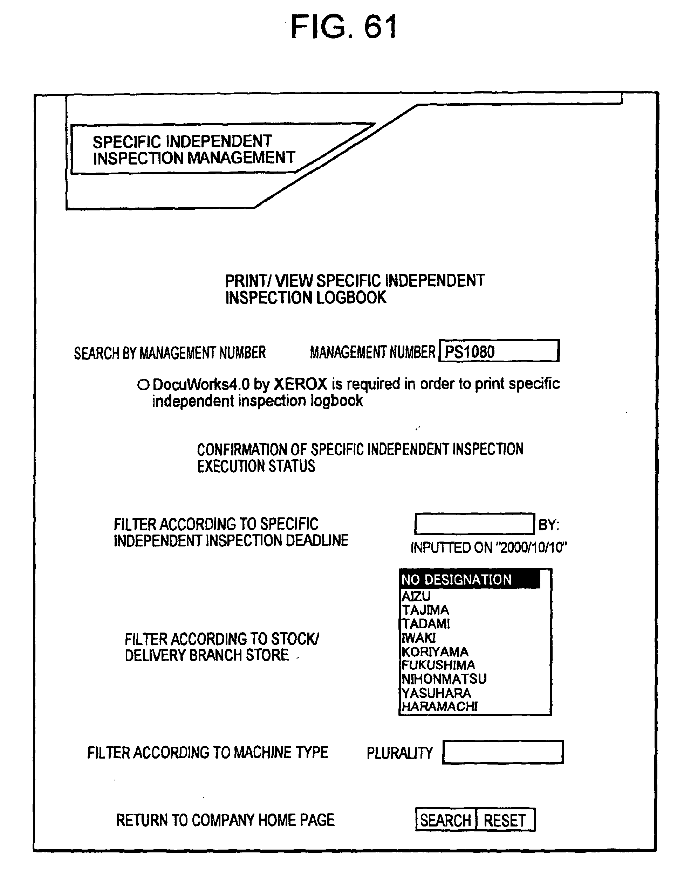

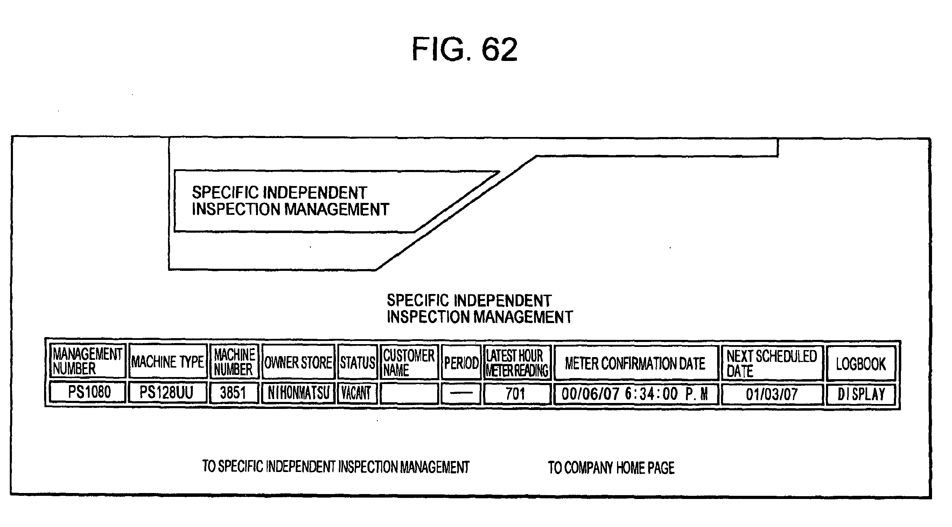

Alternatively, when a vehicle to be inspected is specified from the start, the operator enters the management number of the vehicle in the "Specific independent inspection management" screen as shown in Fig. 61, and clicks on "Search", whereupon the system retrieves the specific independent inspection record which corresponds to this management number from the specific independent inspection table 154, and displays this record in the "Specific independent inspection management" screen as shown in Fig. 62.

When the specific independent inspection record of the vehicle to be inspected is thus displayed in the "Specific independent inspection management" screen, next, in step S222, the maintenance facility carries out a specific independent inspection, by the inspection deadline, on the vehicle whose specific independent inspection record is displayed, creates a specific independent inspection logbook as designated by law in step S223, and transmits this logbook by facsimile to a branch store or the head office of the rental company.

At a branch store or the head office of the rental company, in step S224, the operator uses an image scanner, which is connected to the computer terminal, to read the logbook received by facsimile, inputs the vehicle management number and the inspection execution date to the computer terminal, and issues a registration instruction. Then, in step S225, the system adds the inspection execution date and the logbook image data to the record within the specific independent inspection table 154 which corresponds to the inputted management number.

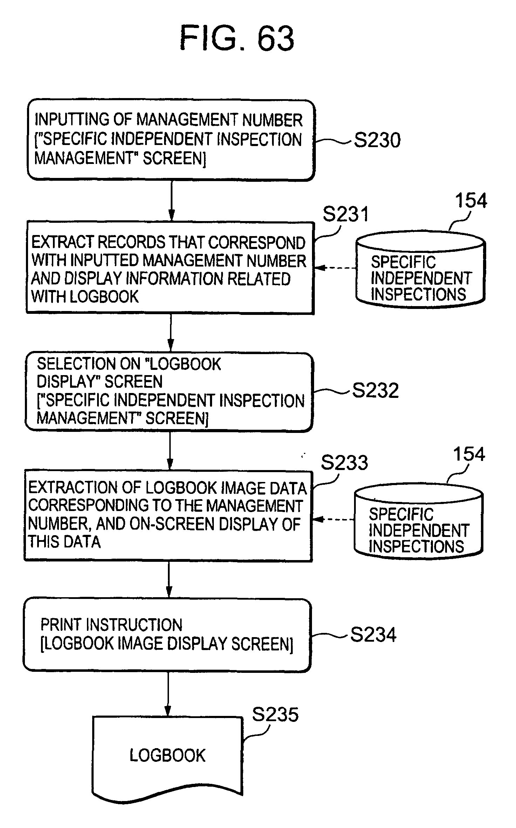

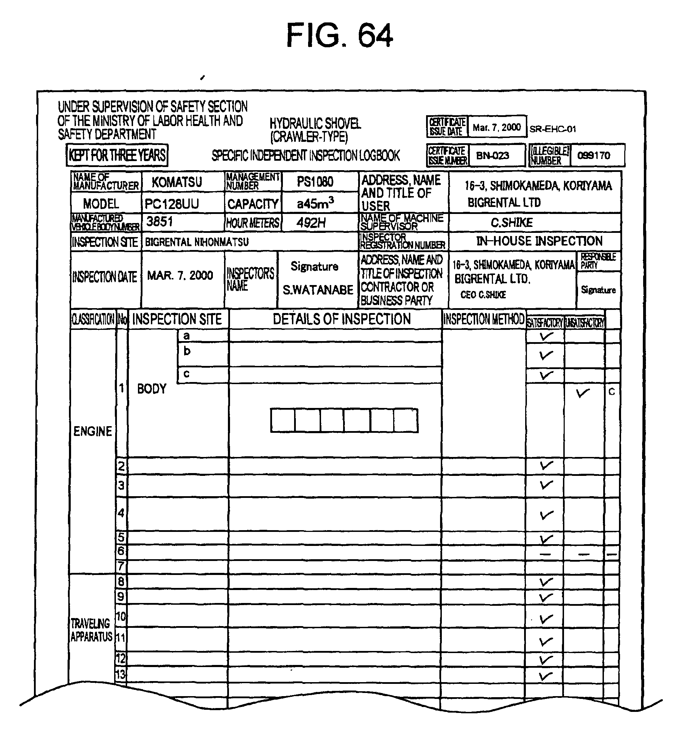

Fig. 63 shows the flow of the "specific independent inspection logbook output" processing of step S15 in Fig. 5. Fig. 64 shows a user interface screen used in this processing.

First, in step S230, the branch store operator displays a predetermined "Specific independent inspection management" screen (not illustrated) on the computer terminal, and enters the management number of the vehicle for which a logbook is to be outputted, in this screen. Then, in step S231, the system reads out the record corresponding to this management number from the specific independent inspection management table 154, and displays information linked to the logbook in this record in the "Specific independent inspection management" screen.

Next, in step S232, when the operator selects "Logbook display" on the "Specific independent inspection management" screen, the system reads out logbook image data corresponding to this management number from the specific independent inspection table 154 in step S233, and, as shown in Fig. 63, opens a predetermined "Logbook image display" screen (not illustrated) and displays the logbook image in the "Logbook image display" screen.

Next, in step S234, when the operator issues a print instruction on the "Logbook image display" screen of Fig. 63, this logbook image is printed in step S235.

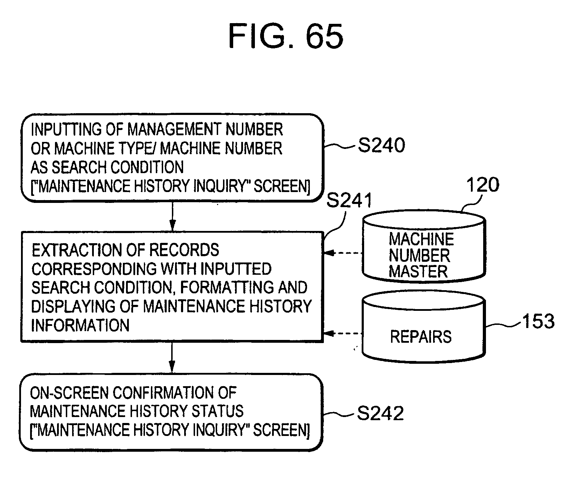

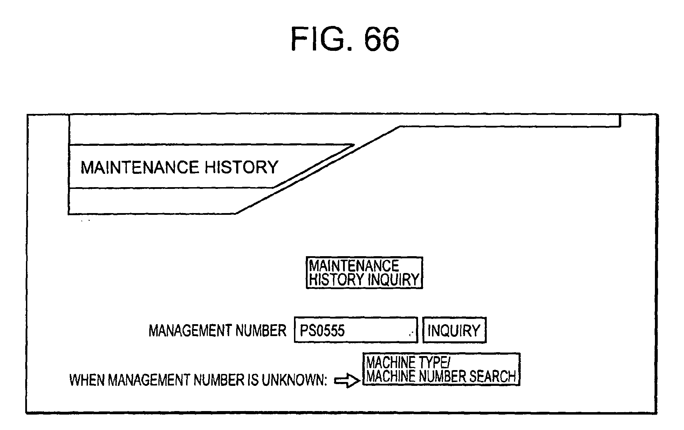

Fig. 65 shows the flow of the "maintenance history inquiry" processing of step S16 in Fig. 5. Figs. 66 to 68 show user interface screens used in this processing.

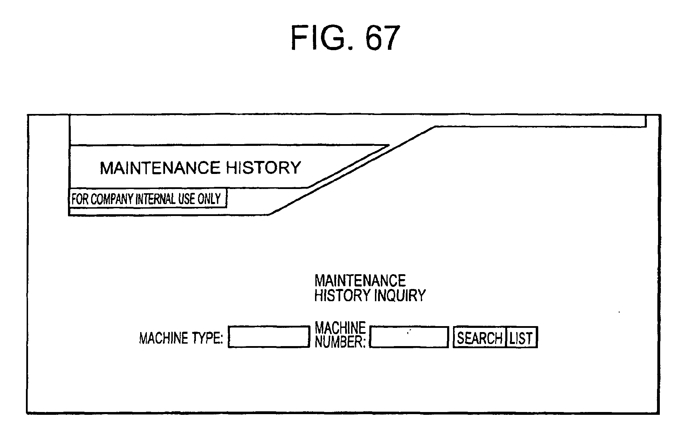

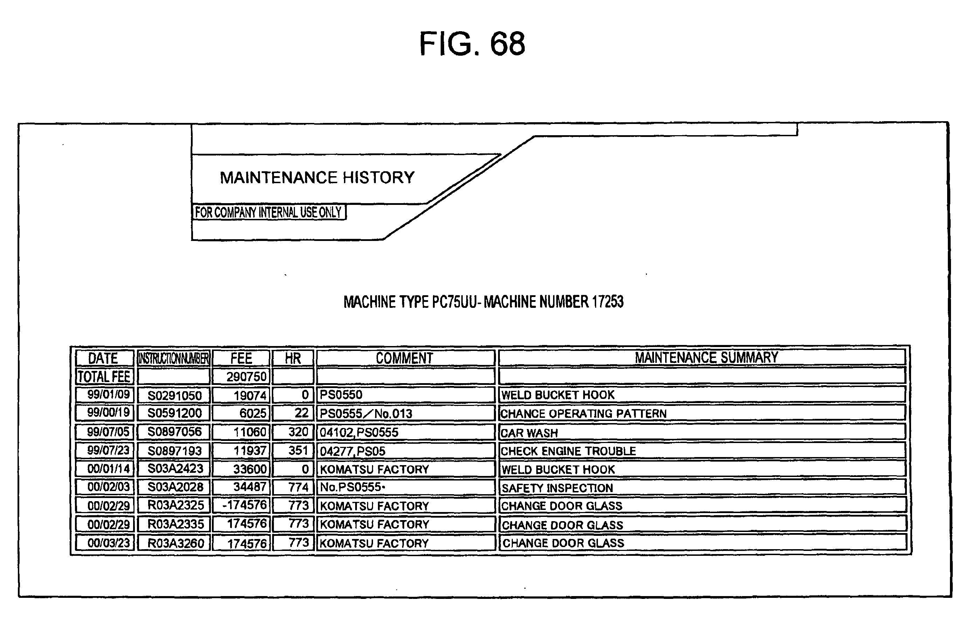

At the maintenance facility, in step S240 in Fig. 65, the operator displays the "Maintenance history" screen shown in Fig. 66 on the computer terminal, enters the management number of the vehicle to be referenced as the search condition in this screen, or clicks on "Machine type/Machine number search" on this screen to display the screen shown in Fig. 67, enters the machine type and machine number of the vehicle to be referenced as the search condition in this screen, and clicks on "Search". Then, in step S241, the system extracts the record which corresponds with the inputted search condition from the machine number master table 120 and the repairs table 153, and information relating to the maintenance history within this record is displayed in the "Maintenance history" screen as shown in Fig. 68, and hence, in step S242, the operator confirms the maintenance history in the "Maintenance history" screen.

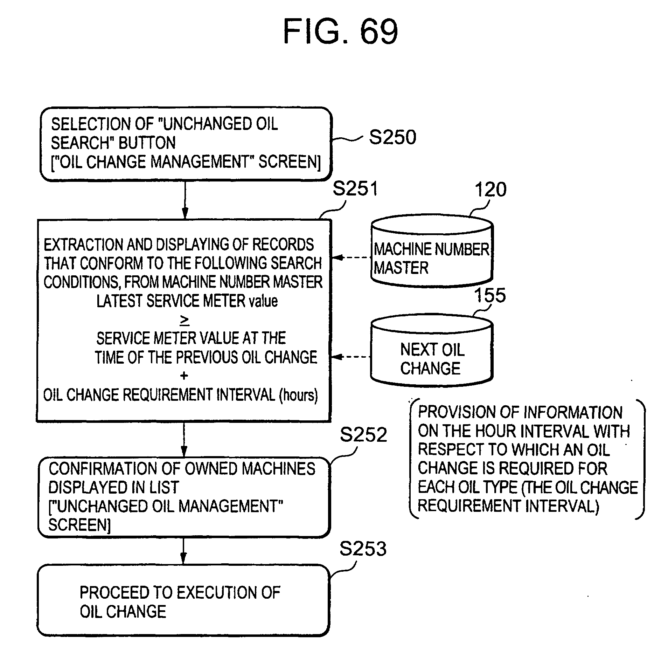

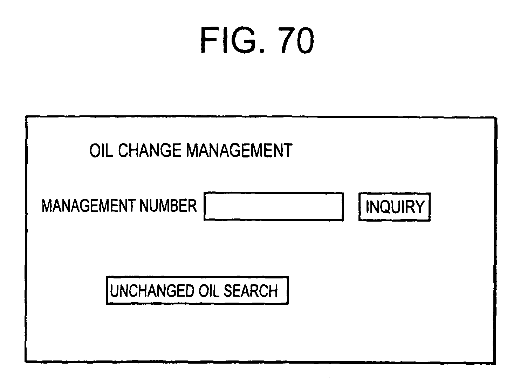

Fig. 69 shows the flow of "oil change" processing of step S17 in Fig. 5. Figs. 70 to 71 show user interface screens used in this processing.

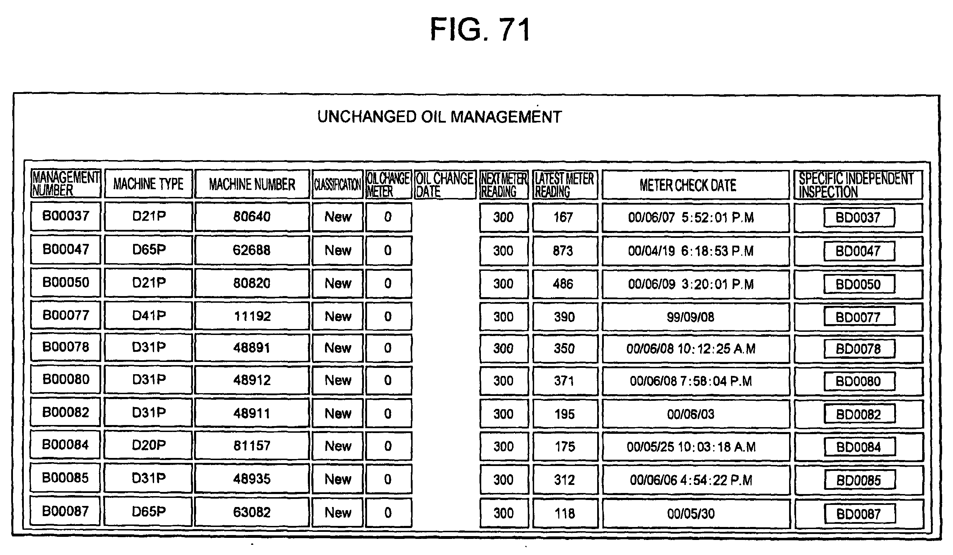

At the maintenance facility, in step S250 in Fig. 69, the operator displays the "Oil change management" screen shown in Fig. 70 on the computer terminal, and clicks on "Unchanged oil search" on this screen. Then, in step S251, the system reads out the records of vehicles requiring an oil change (that is, the latest service meter value thereof exceeds a value found by adding a predetermined oil change requirement interval corresponding to the oil type to the service meter value at the time of the previous oil change) from the machine number master table 120 and the next oil change table 155, and displays these records in the "Unchanged oil management" screen as shown in Fig. 71, and hence, in step S252, the operator confirms the listed vehicles. In step S253, an oil change for these vehicles is carried out.

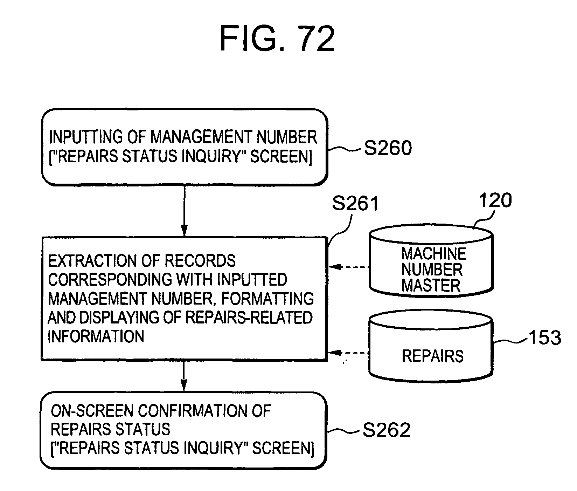

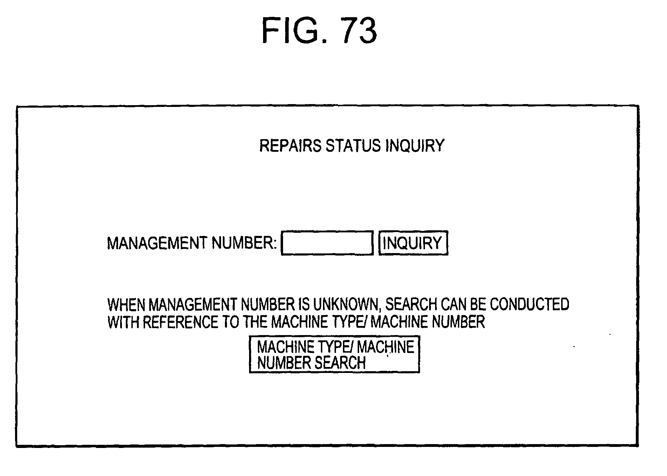

Fig. 72 shows the flow of the "repairs status inquiry" processing of step S18 in Fig. 5. Figs. 73 to 74 show user interface screens used in this processing.

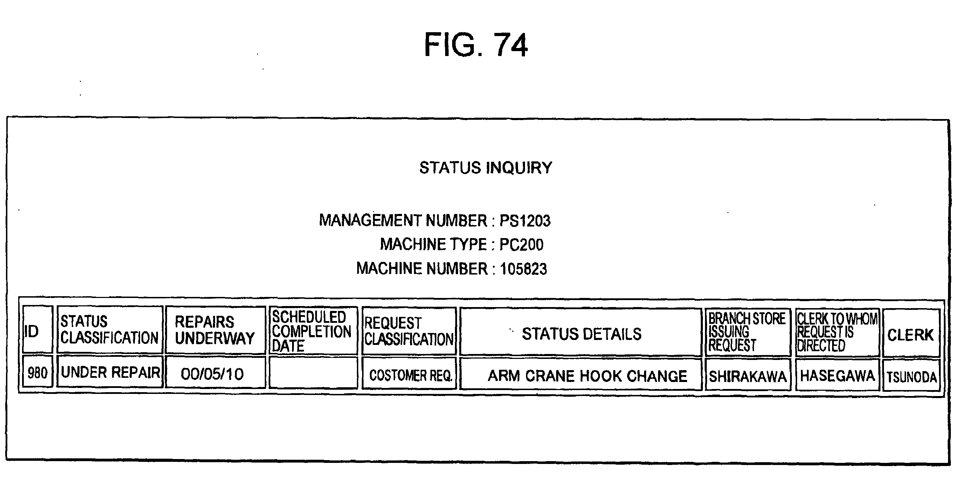

At the maintenance facility, in step S260 in Fig. 72, the operator displays the "Repairs status inquiry" screen shown in Fig. 71 on the computer terminal, enters the "management number" in this screen and clicks on "Inquiry". Then, in step S26, the system reads out the record which corresponds with the inputted management number from the machine number master table 120 and the repairs table 153, and displays this record in the "Repairs status inquiry" screen as shown in Fig. 74. Hence, in step S262, the operator confirms the repairs status.

One embodiment was described above but a variety of improvements can be added to the above embodiment. Several improvements that can be applied to the embodiment above will now be described.

### (A) First improvement

The first improvement is such that, in the allocation processing in the embodiment above, even when there are no vehicles in stock, vehicles whose return date can be predicted with a certain level of accuracy (such as vehicles which are being rented and whose return date can be predicted with a certain level of accuracy, and vehicles which are undergoing inspection and whose inspection completion date can be predicted with a certain level of accuracy, for example) can be allocated in advance (this is referred to hereinafter as an "advance reservation"). In the embodiment above, as can be seen from S113 in Fig. 15, allocation processing is performed only for the vehicles which are still in stock, but according to this improvement, vehicles which are out of stock can also be allocated on the basis of scheduled warehousing prediction. Accordingly, even when there is an increase in the vehicles that are out of stock due to a shortage of vehicles in a busy period, vehicles are allocated on the basis of scheduled warehousing prediction without effect, which makes for an efficient rental operation. The process flow of an advance reservation will be described below.

A salesperson confirms, on a daily basis for example, the scheduled return dates of vehicles which he or she is responsible for, and by contacting the customer at the rental destination of each vehicle with regard to vehicles whose scheduled return dates are close (vehicles whose scheduled return dates are two days later, for example, these being referred to below as vehicles close to the scheduled return date), the salesperson infers and inputs the return likelihood for vehicles close to the scheduled return date.

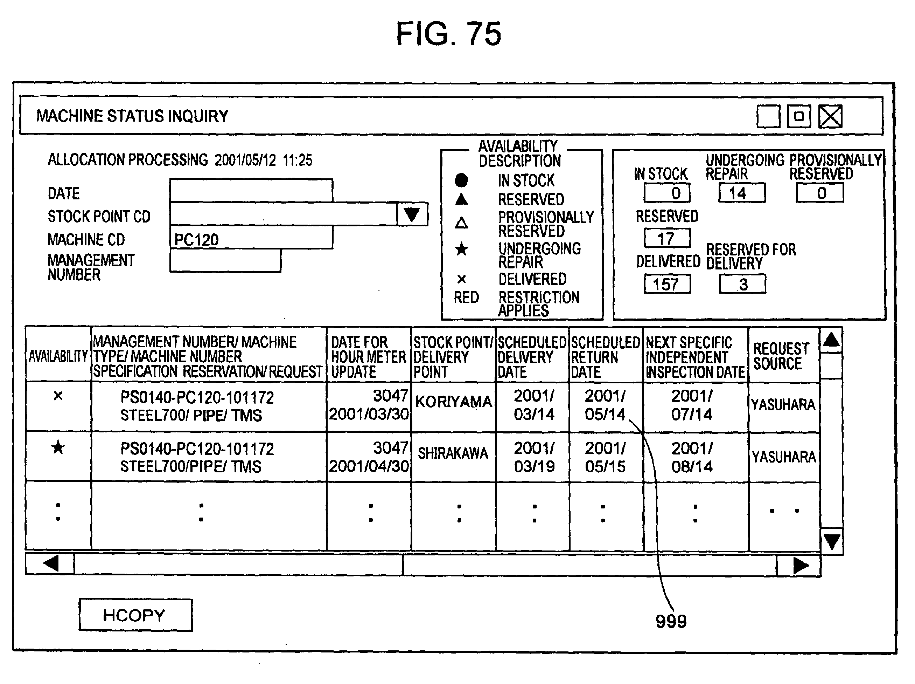

Specifically, when the salesperson (operator) clicks "Order acceptance/inquiry Delivery Warehousing" and "Machine status inquiry" in this order on the menu screen shown in Fig. 16 displayed by a branch store computer terminal 112, the system displays the "Machine status inquiry" screen shown in Fig. 75 (in which the entry fields are all blank) (more specifically, the "Machine status inquiry" screen in Fig. 75 is made by adding "Next specific independent inspection date" to the table items displayed in the the "Machine status inquiry" screen in Fig. 17). Then, when the salesperson inputs the machine code ("PC120", for example) of the machine type which he or she wishes to reference or the management number of the vehicle which he or she wishes to reference, and so forth, as the search key in the "Machine status inquiry" screen in Fig. 75, the system extracts, from the machine number master table 120, the records for all the vehicles corresponding to the search key thus inputted and then displays the content of these records in the "Machine status inquiry" screen as shown in Fig. 75.

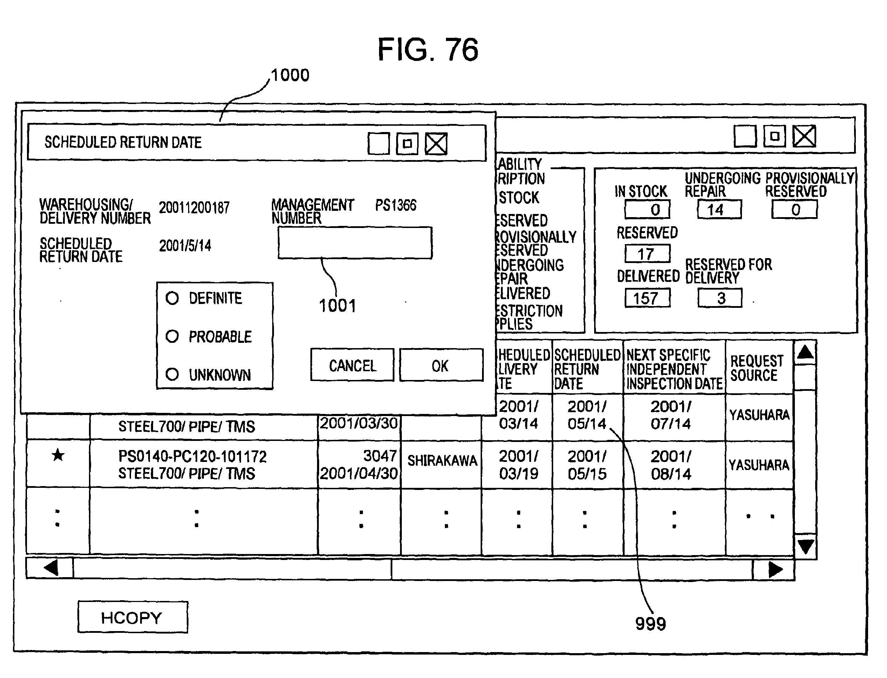

The salesperson double-clicks on this screen on the respective scheduled return date field of vehicles close to the scheduled return date (such as the field 999 in which the scheduled return date is "2001/05/14", for example). Thus, as shown in Fig. 76, the system displays on the "Machine status inquiry" screen a scheduled return date dialog box 1000 that permits the inputs "Definite", "Probable" and "Unknown" as the return likelihood. The salesperson inputs the return likelihood of vehicles close to the scheduled return date in the scheduled return date dialog box 1000. Specifically, if, for example, it is inferred that a vehicle will definitely be returned on the pre-registered scheduled return date (this is "2001/5/14" in Fig. 76), the salesperson enters a check mark in the radio button "Definite" and then clicks the "OK" button. As another example, if it is inferred that "2001/5/14" is impossible but that the vehicle will definitely be returned on "2001/5/22", the salesperson enters "2001/5/22" in the "entry field" 1001 in the dialog box 1000, enters a check mark in the radio button "Definite" and then clicks the "OK" button. The information which is entered in this dialog box 1000 is, for example, updated in the warehousing/delivery basic information table 132.

On the other hand, an operator of a computer terminal at head office (referred to as the "head office operator" hereinafter) confirms the stock status of the vehicles periodically or at any time, and, if required, imposes "reservation regulations" using the method described in the embodiment above such that reservations are not made in accordance with requests made via the cellular telephone and the like of the salesperson.

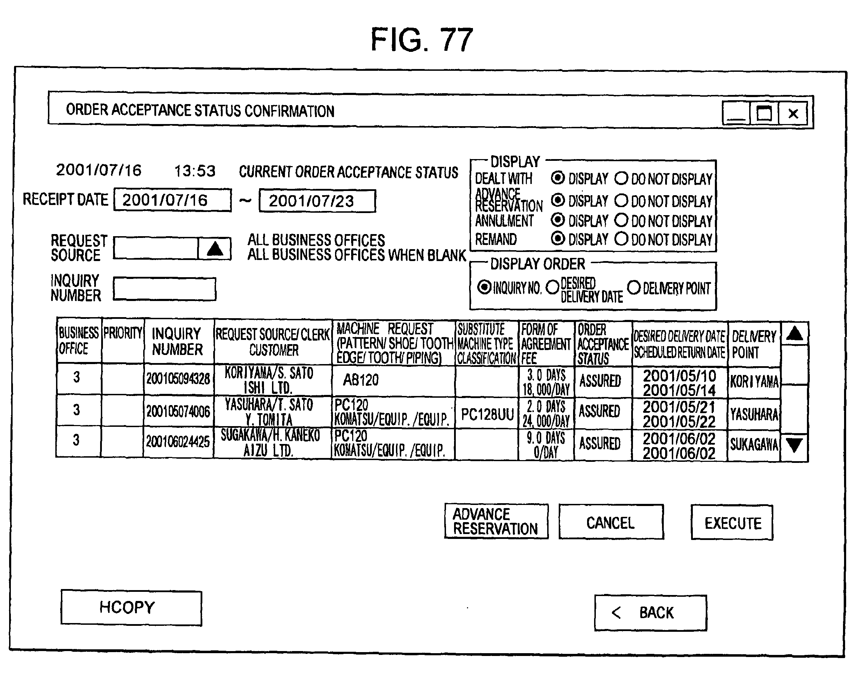

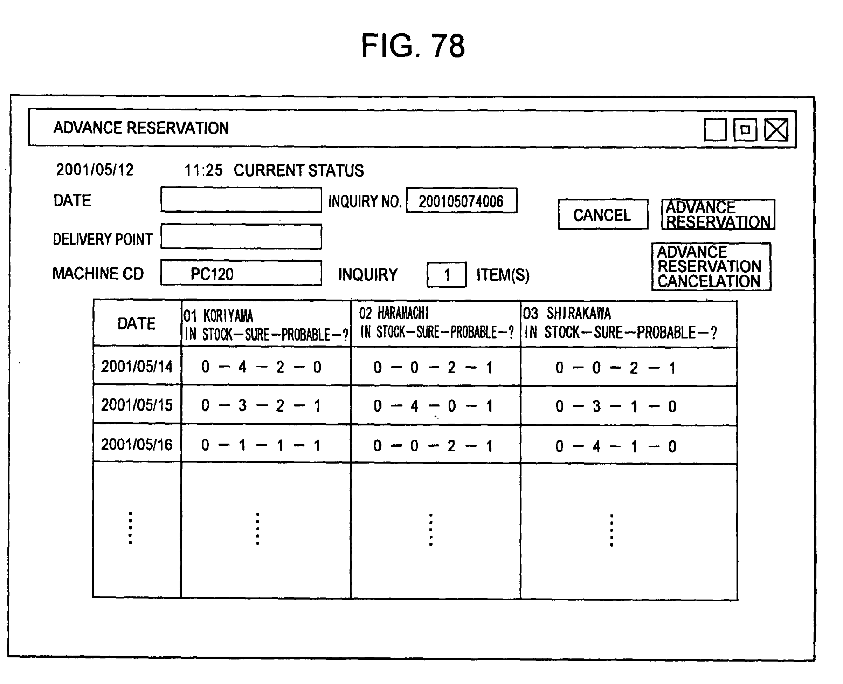

Further, the head office operator displays the menu screen shown in Fig. 24 on the computer terminal 114 and clicks "Allocation Transportation Transportation scheme" and "Order acceptance status confirmation" in this order. The rental company system then displays the "Order acceptance status confirmation" screen (in which all the entry fields are blank) shown in Fig. 77 on the computer terminal. The head office operator enters the desired inquiry receipt date (2001/07/16 to 2001/07/23, for example) in the "Order acceptance status confirmation" screen and then, when the head office operator then enters a check mark in the radio buttons which correspond to the information items the head office operator would like to see and clicks an "Execute" button, the system displays a list of the inquiries received on the days entered, as shown in Fig. 77 ("Advance reservation" is displayed in the "Substitute machine type classification" field for example, for inquiries for which an advance reservation has already been made). In this screen, when the head office operator selects the desired inquiry and clicks the "Advance reservation" button, the system displays the "Advance reservation" screen for the inquiry selected by the head office operator, as shown in Fig. 78. Information on the stock and return likelihood of the vehicle which is the subject of the inquiry appearing in the inquiry selected is thus displayed in this screen. The head office operator selects, on this "Advance reservation" screen, the fields which correspond to the desired date and desired stock point, and then clicks the "Advance reservation" button. Accordingly, even though there are no vehicles in stock, the vehicle is allocated for advance reservation (in other words, the vehicle is then reserved at the time the vehicle is returned) for an inquiry selected in the "Order acceptance status confirmation" screen of Fig. 77.

The first improvement was described above. In the above description, an advance reservation was allocated to the inquiry manually but this could also be performed automatically. Specifically, the head office operator confirms the stock and the return likelihood of the vehicles and instructs the system to execute the "Advance reservation" for the desired vehicle, for example. Upon receiving this instruction, the system executes the advance reservation on the basis of the stock and the return likelihood of the vehicles, as well as the information recorded in the inquiry basic information table 125 and the inquiry details table 126 (alternatively, this is accompanied by other information such as the importance of the customer). In concrete terms, for example, even though there is no stock at a certain stock point on a certain date, for five vehicles for which the return likelihood is "Definite", the system considers that it is probable that, for an inquiry in which the day following this certain date is the "desired delivery date" and the certain stock point is the "delivery point", the return of these vehicles will be delayed despite being "Definite" and thus allocates three of the five vehicles.

### (B) Second improvement

The second improvement is such that an individual at a branch store (or the head office) is able to see at a glance the progress status of repairs that one's own company or another company is requested to perform (the above-described maintenance facility, for example). This second improvement will be described in specific terms below.

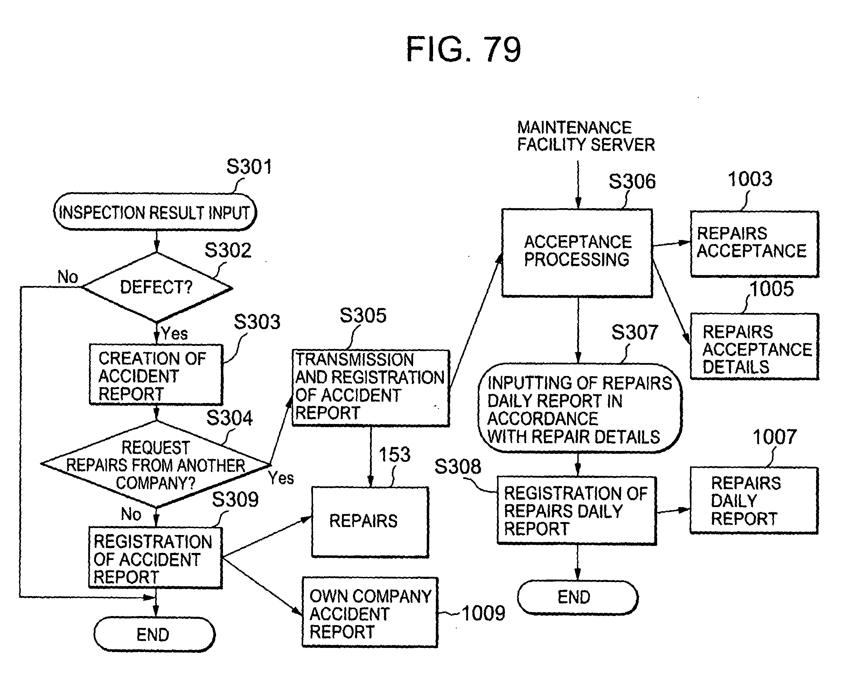

Fig. 79 shows a process flow which serves to allow an individual at a branch store to grasp the progress status of repairs.

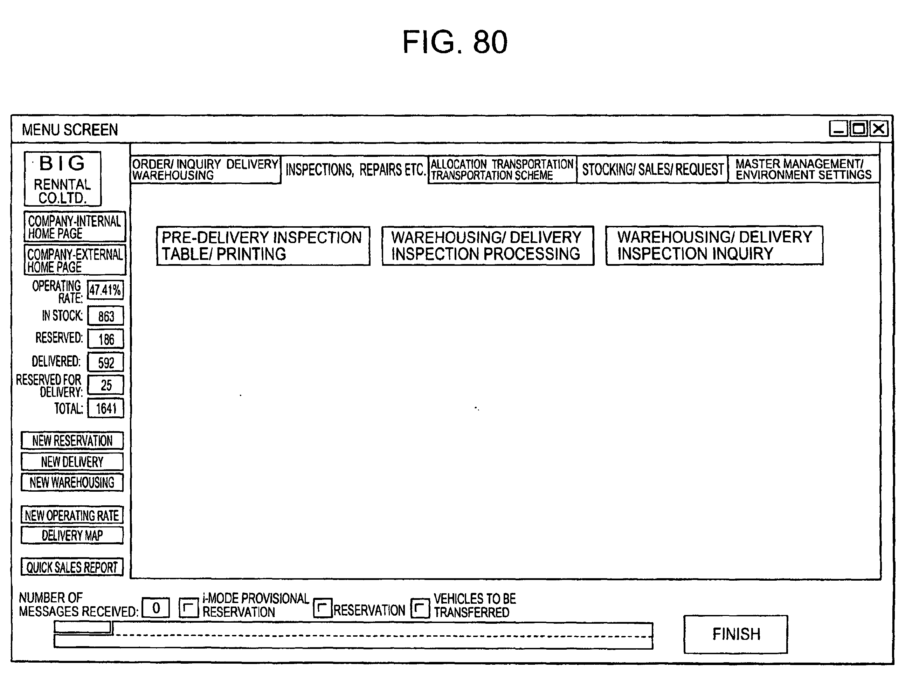

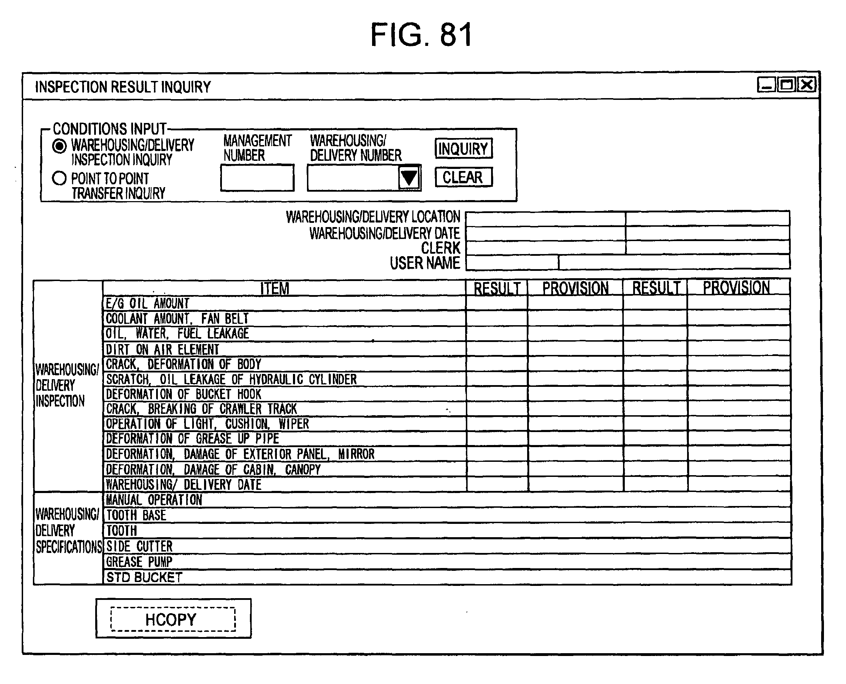

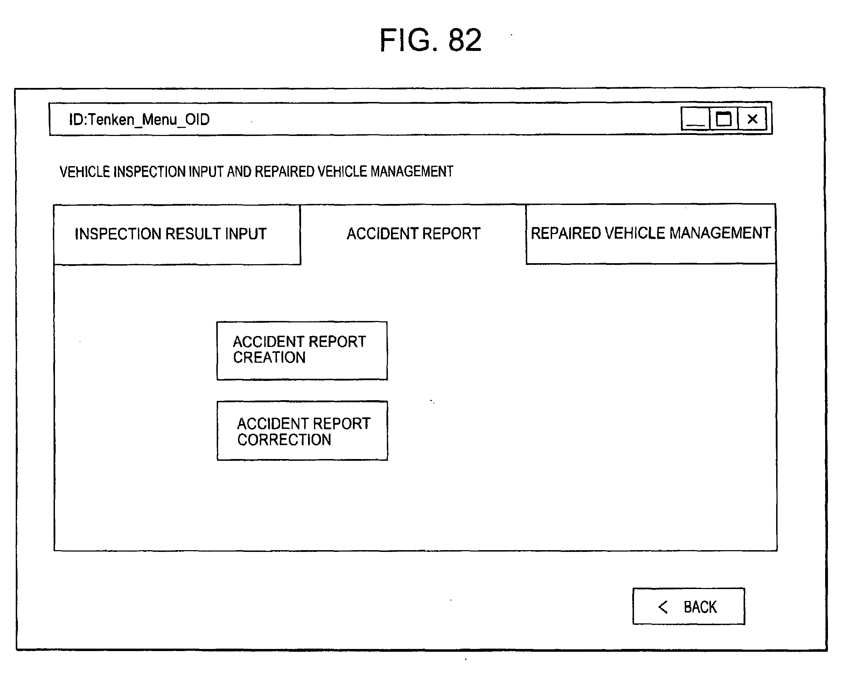

First of all, the operator at the branch store (the vehicle inspector, for example) enters the inspection results in a computer terminal 112 by means of the method described through reference to Fig. 45 for example (S301). Then, if the inputted inspection results reflect a defect and there is a need for repairs (here, the inspection results can be confirmed by using the "Inspection results inquiry" screen of Fig. 81 which is displayed by the system as a result of clicking "Inspections, Repairs etc." and "Warehousing/Delivery inspection inquiry" in that order on the menu screen shown in Fig. 80, for example) ("Yes" in S302), the branch store operator displays the "Vehicle inspection input and repaired vehicle management" screen shown in Fig. 82 on the computer terminal 112, and then clicks on "Accident Report" and "Accident report creation" in this order on this screen. The system then displays a Accident report creation screen (not shown) on the computer terminal 112 and the branch store operator therefore enters the required report details in this screen (S303).

Then, when the repairs pertaining to the above defect are carried out by one's own company ("No" in step S304), the branch store operator makes an input to the computer terminal 112 to that effect. In this case, the system registers the details of the accident report inputted in step S303 (referred to as the "accident report" hereinafter) in an own company accident report table 1009 (the basic server 108 has this table, for example), and registers specific information relating to this accident report (such as "request destination", "order number", "warehousing/delivery number", "machine type", "repair classification" and "repairs status" which pertain to these repairs, for example) in the repairs table 153 (S309).

On the other hand, when another company is requested to perform repairs pertaining to the above defect (the above-described maintenance facility, for example) ("Yes" in S304), the branch store operator makes an input to the computer terminal 112 to that effect. In this case, the system transmits the accident report inputted in S303 to the maintenance facility server 115 and registers specific information relating to this accident report (such as "request destination", "order number", "warehousing/delivery number", "machine type", "repair classification" and "repairs status" which pertain to these repairs, for example) in the repairs table 153 (S305).

Upon receiving the accident report from the branch store computer terminal 112, the maintenance facility server 115 executes acceptance processing (S306). Specifically, the maintenance facility server 115 registers the received accident report in a repairs acceptance table 1003 which the server 115 comprises. Further, the server 115 receives repair information inputs which are based on the accident report information registered in the repair acceptance table 1003, from the operator at the maintenance facility, and then registers the repair information thus inputted in a repairs acceptance details table 1005 which the server 115 comprises. Further, repair information as mentioned here is, for example, the type of repairs, the work details, and the expected required time interval for the repairs (or required production costs) or similar.

The repairs clerk at the maintenance facility performs repairs on the basis of the repair information registered in the repairs acceptance details table 1005, and, upon completion of the work for example, inputs, in the form of a repairs daily report, the details of the repairs performed that same day along with the time intervals for the repairs (or production costs) to the server 115. The server 115 registers the repairs daily report thus inputted in a repairs daily report 1007 which the server 115 comprises (S308). The maintenance facility repairs clerk makes repairs daily report inputs without fail until the repairs are completed finished.

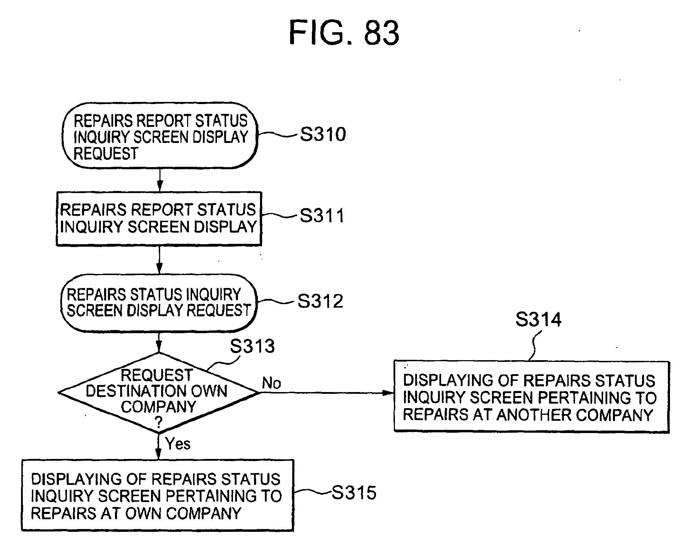

Fig. 83 shows the process flow which allows the branch store (or head office) operator to confirm the progress status of repairs.

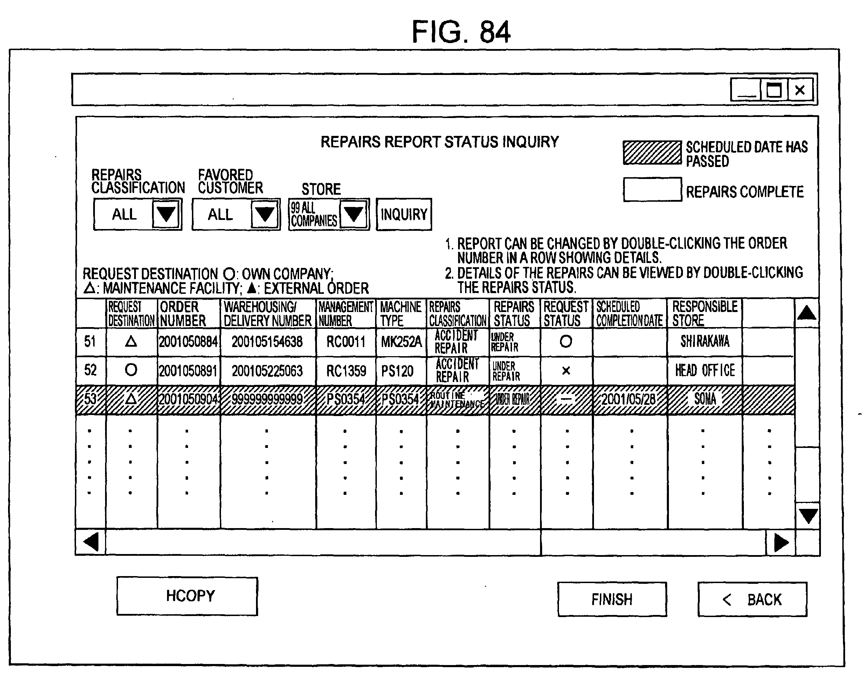

First, the branch store operator (salesperson, for example) issues a request to the computer terminal 112 to display a repairs report status inquiry screen (S310). The system then displays the "Repairs report status inquiry screen" shown in Fig. 84 on the computer terminal 112 on the basis of the information registered in the repairs table 153.

Then, once the branch store operator has confirmed the progress status of the repairs, he or she double-clicks the desired field in the table displayed in the "Repairs report status inquiry" screen of Fig. 84, that is, the "Repairs status" field which corresponds to the repairs whose progress status the operator wishes to confirm (S312).

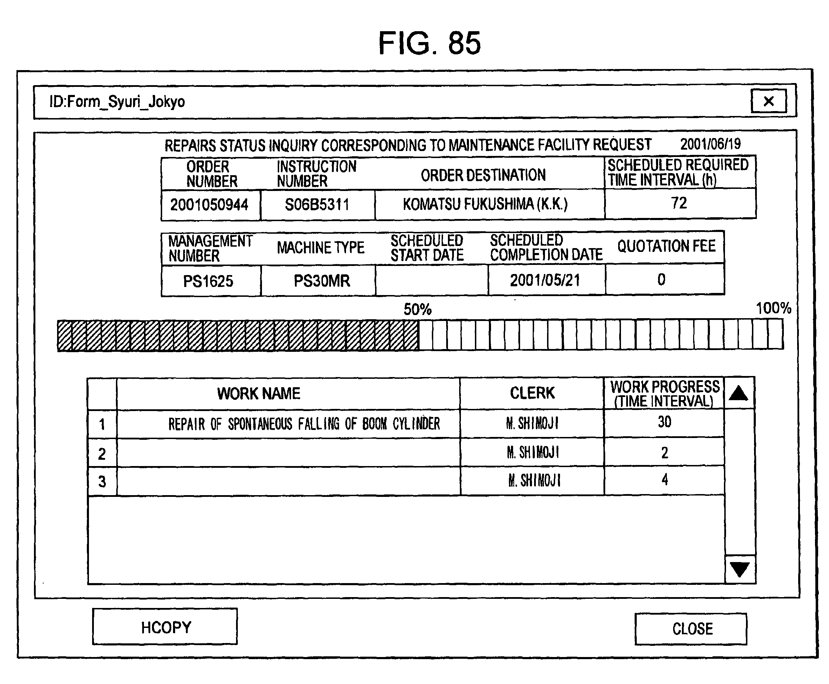

If the request destination of the repairs pertaining to the double-clicked field is a maintenance facility (another company) ("No" in S313), the system displays the "Repairs status inquiry" screen shown in Fig. 85 on the computer terminal 112 on the basis of the repairs daily report for the repairs pertaining to the double-clicked field which is among the repairs daily reports recorded in the repairs daily report table 1007 of the maintenance facility (S314). This screen displays various information pertaining to the repairs (such as the order number, the instruction number, and the order destination) as well as information recorded in the repairs daily report, that is, the name of the work relating to the repairs, the repair's clerk, the time interval of the repair work performed thus far, and so forth. Further, the rate of progress of the repairs is also displayed on the basis of the work time interval recorded in the repairs daily report and the expected required time interval for the repairs. By viewing this screen, the branch store operator can see at a glance what repairs are being performed, who the clerk is and what the progress status is.

On the other hand, if the request destination of the repairs pertaining to the field which is double-clicked in S312 ("Yes" in S313) is one's own company, a repairs status inquiry screen (not shown) which relates to repairs at one's own company is displayed on the computer terminal 112. Like the repairs status inquiry screen of Fig. 85 for example, this screen may be a screen in which a repairs daily report is entered by the branch store repairs clerk and which is created on the basis of the repairs daily report as a result of the branch store repairs clerk inputting a repairs daily report, or may be a screen created by means of another method.

### (C) Third improvement

The third improvement is such that a specific independent inspection logbook can be displayed and printed by means of a simple operation. To cite a specific example, when there is a desire to view the specific independent inspection logbook of the desired vehicle on the branch store computer terminal 112, double-clicking the field, on the machine status inquiry screen shown in Fig. 75, in which the "Next specific independent inspection date" for the desired vehicle is recorded causes the system to display an image of the specific independent inspection logbook such as that shown in Fig. 64 (which can naturally also be printed in accordance with a request by the operator). Further, the specific independent inspection logbook image can also be displayed by another computer system such as a PDA.

### (D) Fourth improvement

The fourth improvement is such that the claim fee for the vehicle rental can be controlled on the basis of the operation time information contained in the operation information for the vehicles 101, 101,... collected via the remote communications system 200. The corresponding process flow will be described below.

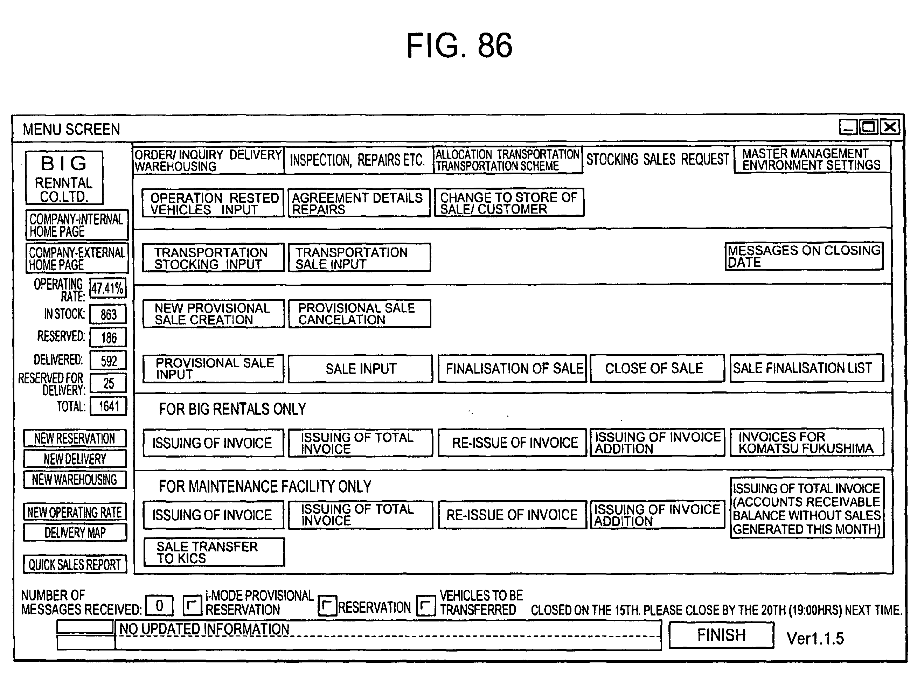

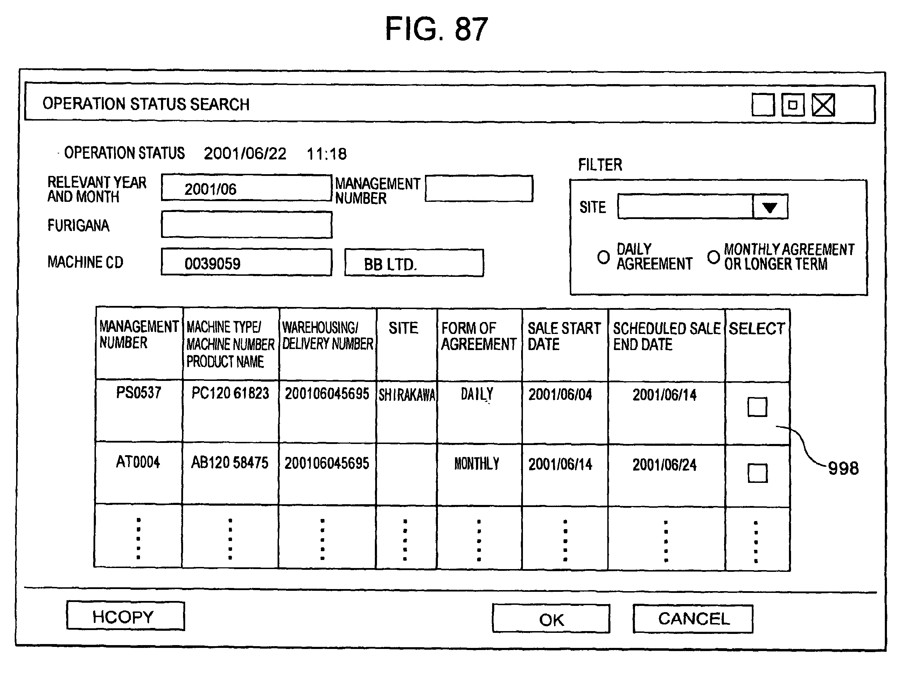

First, when the branch store or head office operator clicks "Stocking Sales Request" and "Operation Rested vehicles Input" in this order which are on the menu screen shown in Fig. 86 and displayed on the computer terminal 112, the system displays the "Operation status search" screen (in which all the entry fields are blank) shown in Fig. 87. Further, when the operator inputs the customer CD or the like as the search key in the search screen in Fig. 84, the system extracts the records of all the vehicles corresponding to the inputted search key from the operation and rested vehicle table 144 and then displays the search results on the basis of the contents of these records. The operation and rested vehicle table 144 records, as information relating to operations and rested vehicles, the above-described operation information information as well as information including "Management number", "Machine type/Machine number product name", "Warehousing/Delivery number", "Site", "Form of agreement", "Sale start date (may be set automatically or manually on the day the operation is first detected from the TMS mail data), and "Scheduled sale end date", for example.

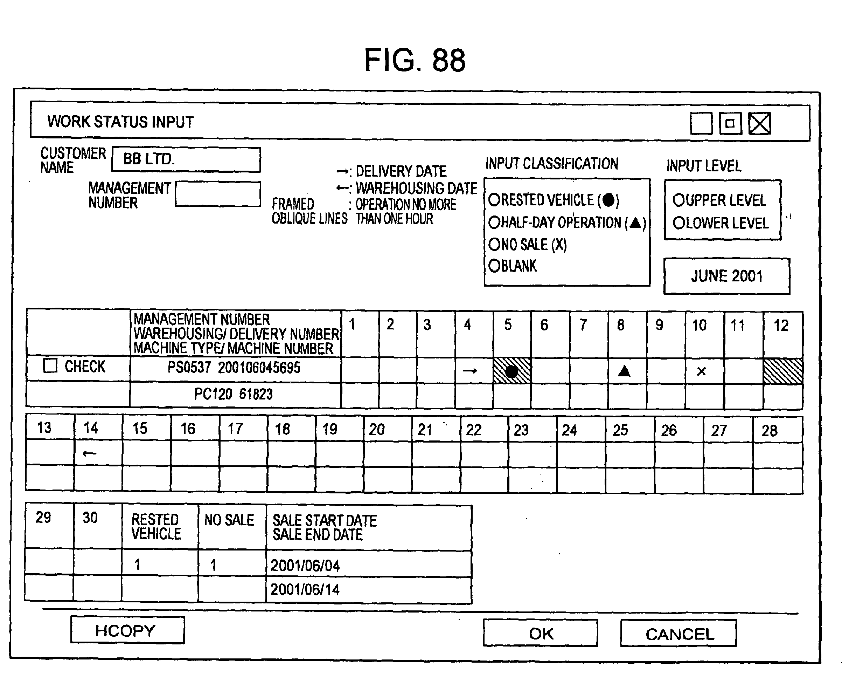

When the operator enters a check mark in the "Select" field (field 998, for example) of the vehicle whose operation status has been inputted, on the screen of Fig. 87 displaying the search results, and then clicks the "OK" button, the system references the operation and rested vehicle table 144, and uses the operation information (particularly the operation start time, operation end time, and the operation time interval) for the vehicle which corresponds to the field in which the check mark was entered, whereby the "Operation status input" screen shown in Fig. 88 is displayed on the computer terminal 112.

The calendar of the month desired by the operator during the rental period (June 2001 in this figure) is displayed in this screen, and this calendar is provided with fields in which each date in the month is recorded, as well as blank fields in which desired operation status marks corresponding to these dates can be entered (these fields are divided into two upper and lower levels for example, and referred to hereinafter as "operation status mark entry fields"). Of the operation status mark entry fields in the upper level, the fields which correspond to dates on which the operation time interval is zero or is short (no more than one hour, for example) are displayed using oblique lines, for example (naturally, the display format is not limited to that used here; numeric characters indicating the operation time interval may be displayed in all of the upper-level operation status mark entry fields, for example). In this calendar, among the operation status marks, a mark "→" that indicates the delivery date, and a mark "←" that indicates the warehousing date, for example, are automatically displayed on the basis of the "delivery dates" recorded in the delivery table 133 and the "warehousing dates" recorded in the warehousing table 136. Marks that indicate an input classification (such as a black circle symbol that indicates a rested vehicle, and a black triangle symbol that indicates a half-day operation) are inputted manually on the basis of the above operation information (these marks can of course also be inputted automatically).

The system performs a fee calculation for a rented vehicle on the basis of the information entered in this "operation status input" screen.

The fourth improvement was described above. Further, in an embodiment that relates to the fourth improvement, instead of the system performing a fee calculation automatically, a person may perform the calculation on the basis of the "Operation status input" screen. Further, in place of the operation start time, the operation end time and the operation time interval, the "Operation status input" screen may be created on the basis of other kinds of operation statuses such as the hour meter increment number.

### INDUSTRIAL APPLICABILITY

Embodiments of the present invention were described hereinabove but such embodiments are only examples serving to illustrate the present invention, there being no intention to limit the present invention to these embodiments alone. The present invention can therefore be implemented in a variety of other forms.

For example, in the above embodiments, each rental company owns a plurality of branch stores, rental vehicles are located at the branch stores, and vehicles are delivered and warehoused and so forth by the branch stores. However, by adequately adopting the system of the present invention to perform an optimally efficient operation, a business formula is also possible in which rental vehicles are transported directly from the site of a previous rental destination to the site of the next rental destination, and in which maintenance, repairs, and the like on the rental vehicles are also performed at the site of the rental destination or at an external maintenance company, that is, a substantially store-free-type business where the rental company is not required to have a special warehouse in which to put available vehicles (it is also sufficient to have only a warehouse with an extremely small capacity).

Further, communications between the construction vehicles 101, 101, ... and the TMS mail server 300 are also able to utilize a cellular telephone data communications service.

Moreover, the system of the present invention can be applied not only to construction vehicles but also to other rental businesses of a variety of machines and goods.

## Claims

1. A rental system, comprising:
a basic server system for managing information on a plurality of rental articles; and
a business task system capable of communicably connecting to the basic server system,
wherein the basic server or the business task system comprises managing means for managing dealings with the customers of the rental articles, and the business task system comprises, for the rental articles:
(1) means for displaying information managed by the basic server system; and
(2) means for receiving rental orders from customers.

2. The rental system according to claim 1, wherein the rental article information is based on the product name of the rental article and stored in the basic server system.

3. The rental system according to claim 1 or 2, wherein the basic server system comprises means for processing a schedule for transferring a rental article between sites.

4. The rental system according to claim 1 or 2, wherein the rental article information includes information indicating that the rental article is being rented or transported.

5. The rental system according to claim 1 or 2, wherein the rental article information includes information indicating the rental period for the rental article.

6. The rental system according to claim 1 or 2, wherein the rental article information includes warehousing and delivery information on the rental article.

7. The rental system according to claim 1 or 2, wherein the rental article information includes positional information on the rental article.

8. The rental system according to claim 7, further comprising means for updating the positional information at any time or periodically.

9. The rental system according to claim 1 or 2, wherein the rental article information includes information showing the operation status of the rental article.

10. The rental system according to claim 1 or 2, wherein the rental article information includes information relating to engine oil pressure, engine speed, working implement oil temperature, working implement oil pressure, radiator water temperature, or working implement load of a machine which is the rental article.

11. The rental system according to claim 1 or 2, wherein the business task system comprises a portable information processing system that is capable of connecting wirelessly and communicably at any time with the basic server system.

12. The rental system according to claim 1 or 2, wherein the basic server system comprises means for updating the rental article information at any time or periodically.

13. The rental system according to claim 12, wherein the updated rental article information includes order information from a customer.

14. The rental system according to claim 1 or 2, wherein the business task system comprises means for receiving order inquiry information from a customer.

15. A rental system, comprising:
a basic server system for managing information on a plurality of rental articles; and
a business task system capable of communicably connecting to the basic server system,
wherein the basic server system stores current positional information on the rental article, current operating state information, and maintenance information relating to a maintenance history or maintenance schedule; and wherein the rental system further comprises a maintenance system, which is capable of connecting communicably to the basic server system, which comprises means for acquiring and displaying the positional information, the operation information and the maintenance information that are stored in the basic server system, and which is provided in a maintenance execution department.

16. The rental system according to claim 1, 2, or 15, wherein the rental article comprises a sensor system for detecting positional information and current operating state information; and the basic server system is capable of communicating with the sensor system of the rental article via a remote wireless communications network, and thus receives the latest positional information and operating state information on the rental article at any time or periodically from the sensor system of the rental article and updates the positional information and operating state information on the rental article as managed by the basic server system.

17. The rental system according to claim 1 or 2, wherein the rental article information includes data that indicates the type of rental article, the availability thereof, and the presence or absence of automatic allocation regulations; and
the rental system further comprises:
an order processing system, which receives an order from a customer, retrieves rental articles that fulfil the customer's request from among a plurality of the rental articles on the basis of information in the basic server system, and allocates any of the retrieved rental articles to the order from the customer.

18. The rental system according to claim 17, wherein the order processing system comprises an automatic allocation control system for designating an optional rental article from among a plurality of the rental articles, and for updating the data indicating the presence or absence of the automatic allocation regulations which is in the basic server system, with respect to the designated rental article.

19. The rental system according to claim 18, wherein the automatic allocation control system performs control of the adoption of either a method that performs automatic selection of a rental article or a method in which an operator manually selects same, as the method for selecting a rental article which is allocated to the order from the customer from among the retrieved rental articles.

20. The rental system according to claim I or 2,
wherein the basic server system further comprises means for storing image data for the rental articles; and the image data is photographic data obtained by photographing the rental article when the rental article is rented to a customer or returned.

21. The rental system according to claim 1,
wherein the business task system further comprises means for receiving, from an operator, a return likelihood input for the probability that the rental article will be returned by a certain scheduled time; and the basic server system or the business task system comprises means for receiving a reservation for the rental article on the basis of the return likelihood inputted by the operator, even in the event that the rental article is not in stock.

22. The rental system according to claim 1, further comprising:
means for receiving an input of repair work information relating to repair work on the rental article; and
means for displaying information showing the progress status of repairs on the basis of the repair work information thus inputted.

23. The rental system according to claim 1, further comprising:
means for detecting, on each day while the rental article is being rented, the operation status of the rental article; and
means for creating and displaying operation status information on the rental article on the basis of the detected operation status on these days.

24. The rental system according to claim 23, wherein the operation status is an operation start time and operation end time, or an operation time interval.
